(19) Europäisches Patentamt
European Patent Office
Office européen des brevets

(11) **EP 4 582 913 A1**

(12) **EUROPEAN PATENT APPLICATION**
published in accordance with Art. 153(4) EPC

(43) Date of publication:
**09.07.2025 Bulletin 2025/28**

(21) Application number: **22961956.4**

(22) Date of filing: **23.12.2022**

(51) International Patent Classification (IPC):
**G06F 3/041** *(2006.01)*

(52) Cooperative Patent Classification (CPC):
**G06F 3/041**

(86) International application number:
**PCT/CN2022/141495**

(87) International publication number:
**WO 2024/077778 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **12.10.2022 CN 202211250955**

(71) Applicant: **Guangzhou Xianchuang Technology Co., Ltd.**
**Guangzhou, Guangdong 510000 (CN)**

(72) Inventor: **YANG, Hao**
**Guangzhou, Guangdong 510000 (CN)**

(74) Representative: **Grünecker Patent- und Rechtsanwälte**
**PartG mbB**
**Leopoldstraße 4**
**80802 München (DE)**

(54) **PIEZOELECTRIC SENSOR AND PRODUCTION METHOD THEREFOR, ELASTIC WAVE SENSOR AND PRODUCTION METHOD THEREFOR, AND INTERACTIVE TABLET AND PRODUCTION METHOD THEREFOR**

(57) The present disclosure discloses a piezoelectric sensor, an elastic wave sensor, an interactive board, and production methods thereof. For a scenario of interactive boards, the piezoelectric sensor includes a piezoelectric structure and an electrode, the electrode covers the surface of a part of the piezoelectric structure; the working frequency of the piezoelectric sensor is matched with the material frequency, the material frequency is the frequency used to distinguish the material of the touch object in the elastic wave generated by the screen of the interactive board when being touched by a touch object such as a hand and a stylus; under this condition, the piezoelectric sensor can enhance a sensitivity of detecting elastic waves generated by a conventional touch object such as the hand and the stylus when writing on the screen of the interactive board. This enables the piezoelectric sensor to detect the elastic waves generated when the touch object touches the screen surface, thereby generating high-quality elastic wave signals and improving the accuracy of detecting the material of the touch object such as the hand and the stylus in the scenario of the interactive board, providing a perceptual basis for adding a material recognition function to the interactive board.

Fig. 2D

**Description**

The present disclosure claims a priority from Chinese patent application No. 202211250955.3 entitled "PIEZOELECTRIC SENSOR, ELASTIC WAVE SENSOR, INTERACTIVE BOARD, AND PRODUCTION METHODS THEREOF", which is filed with CNIPA on October 12, 2022, and the entire contents of which are incorporated herein the present disclosure by reference.

**FIELD**

The present disclosure relates to the field of computer technology, and in particular to a piezoelectric sensor of an interactive board, an elastic wave sensor, an interactive board, a method for producing a piezoelectric sensor of an interactive board, a method for producing an elastic wave sensor, a method for producing an interactive board, a material recognizing method, and a writing method, a computer readable storage medium and a computer program product.

**BACKGROUND**

Interactive boards are widely used in scenarios such as conferences and education. Interactive boards support touch services, allowing users to write on a screen of the interactive board using touch objects. The interactive board generates touch data when a touch object is detected, and a content of touch data mainly includes a position of the touch object on the screen.

**SUMMARY**

The present disclosure provides a piezoelectric sensor, an elastic wave sensor, an interactive board, and production methods thereof, in order to solve a problem how to recognize a material of a touch object when a screen is touched.

According to one aspect of the present disclosure, a piezoelectric sensor of an interactive board is provided, the piezoelectric sensor includes a piezoelectric structure and an electrode, and the electrode covers a part of a surface of the piezoelectric structure;

a working frequency of the piezoelectric sensor is matched with a material frequency, where the material frequency is a frequency used to distinguish a material of a touch object in an elastic wave generated by the touch object touching a screen of the interactive board;
where the touch object includes at least one of:
a hand, and a stylus.

According to another aspect of the present disclosure, an elastic wave sensor is provided, the elastic wave sensor includes a piezoelectric sensor of an interactive board of any one of embodiments of the present disclosure, a lead wire, and a first holder;
a first end of the lead wire is connected to the piezoelectric sensor, and a second end of the lead wire is connected to the first holder.

According to another aspect of the present disclosure, an interactive board is provided, including a screen, a printed circuit board located within the frame of the screen, and an elastic wave sensor according to any one of embodiments of the present disclosure;

the printed circuit board is provided with an elastic wave processor;
the piezoelectric sensor of the elastic wave sensor is installed on a back of the screen, and the first holder of the elastic wave sensor is connected to an interface of the printed circuit board;
the elastic wave processor is connected to the elastic wave sensor.

According to another aspect of the present disclosure, a method for producing a piezoelectric sensor of an interactive board is provided, including:

providing a piezoelectric structure;
forming an electrode on a surface of a part of the piezoelectric structure; and
polarizing the piezoelectric structure;
where a working frequency of the piezoelectric sensor matches with a material frequency, and the material frequency is a frequency used to distinguish a material of the touch object in the elastic wave generated by a touch object touching the screen of the interactive board;
the touch object includes at least one of:
a hand, and a stylus.

According to another aspect of the present disclosure, a method for producing an elastic wave sensor is provided, including:

providing a piezoelectric sensor of an interactive board of any an embodiments of the present disclosure, a lead wire, and a first holder;
connecting the piezoelectric sensor to a first end of the lead wire; and
connecting a first holder to a second end of the lead wire.

According to another aspect of the present disclosure, a method for producing an interactive board is provided, including:

providing a screen, a printed circuit board, and an elastic wave sensor of any one of embodiments of the present disclosure; the printed circuit board is arranged within the frame of the screen, and an elastic wave processor is arranged on the printed circuit board;
installing the piezoelectric sensor of the elastic wave sensor on a back of the screen; and
connecting a first holder of the elastic wave sensor to an interface of the printed circuit board so as to connect the elastic wave processor with the elastic wave sensor.

According to another aspect of the present disclosure, a material recognizing method is provided, which is applied to an interactive board of any one of embodiment of the present disclosure. The method includes:

receiving, by an elastic wave processor, an elastic wave signal generated by at least one elastic wave sensor, where the elastic wave signal is generated by an elastic wave generated by a touch object touching a screen of the interactive board; and
recognizing, by the elastic wave processor, a material of the touch object based on the elastic wave signal.

According to another aspect of the present invention, a writing method is provided, which is applied to an interactive board of any one of embodiments of the present disclosure, the method includes:

displaying, by a screen, an interface for being written;
generating, by an infrared sensor, an infrared signal;
generating, by at least one elastic wave sensor, an elastic wave signal, where the elastic wave signal is generated by an elastic wave generated by a touch object touching a screen;
generating, by a central processor or an infrared processor, a touch trajectory generated when a touch object moves on the screen surface based on the infrared signal;
recognizing, by the elastic wave processor, a material of the touch object based on the elastic wave signal; and
performing, by the central processing unit, an operation related to writing based on the material along the touch trajectory on the interface.

According to another aspect of the present disclosure, an interactive board is provided, including an elastic wave sensor and an elastic wave processor of any one of embodiments of the present disclosure;

the elastic wave processor is configured to receive an elastic wave signal generated by at least one elastic wave sensor, where the elastic wave signal is generated by the elastic wave generated by a touch object touching a screen of the interactive board;
the elastic wave processor is configured to recognize a material of a touch object based on the elastic wave signal.

According to another aspect of the present disclosure, an interactive board is provided, including a screen, a central processing unit, an elastic wave sensor of any one of embodiments of the present disclosure, an elastic wave processor, an infrared sensor, and an infrared processor;

the screen is configured to display an interface for being written;
the infrared sensor is configured to generate an infrared signal;
the elastic wave sensor is configured to generate an elastic wave signal, where the elastic wave signal is generated by the elastic wave generated by a touch object touching a screen;

the central processor or the infrared processor is configured to generate a touch trajectory generated when a touch object moves on a screen surface based on the infrared signal;

the elastic wave processor is configured to recognize a material of a touch object based on the elastic wave signal;

the central processing unit is configured to perform an operation related to writing based on the material along the touch trajectory on the interface.

According to another aspect of the present disclosure, an interactive board is provided, including:

at least one processor; and

a memory communicated with at least one processor;

where the memory stores a computer program that can be executed by at least one processor, the computer program is executed by the at least one processor, so that the at least one processor can execute the material recognition method of any one of embodiments of the present disclosure or the writing method of any one of embodiments of the present disclosure.

According to another aspect of the present disclosure, a computer readable storage medium is provided, where the computer readable storage medium stores a computer program, the computer program is used to enable a processor to execute the material recognition method of any one of embodiments of the present disclosure or the writing method of any one of embodiments of the present disclosure.

According to another aspect of the present disclosure, a computer program product is provided, including a computer program, when the computer program is executed by a processor, a material recognition method of any one of embodiments of the present disclosure or a writing method of any one of embodiments of the present disclosure is implemented.

In this embodiment, for a scenario of interactive boards, the piezoelectric sensor includes a piezoelectric structure and an electrode, the electrode covers the surface of a part of the piezoelectric structure; the working frequency of the piezoelectric sensor is matched with the material frequency, the material frequency is the frequency used to distinguish the material of the touch object in the elastic wave generated by the screen of the interactive board when being touched by a touch object such as a hand and a stylus; under this condition, the piezoelectric sensor can enhance a sensitivity of detecting elastic waves generated by a conventional touch object such as the hand and the stylus when writing on the screen of the interactive board. This enables the piezoelectric sensor to detect the elastic waves generated when the touch object touches the screen surface, thereby generating high-quality elastic wave signals and improving the accuracy of detecting the material of the touch object such as the hand and the stylus in the scenario of the interactive board, providing a perceptual basis for adding a material recognition function to the interactive board. The material recognition function can increase the diversity of writing functions in the interactive board, enhance the functionality of certain writing related operation in the interactive board, simplify the convenience of a certain operation related to writing in the interactive board, and thus improve the service quality of the interactive board.

It should be understood that the content described in this section is not intended to identify key or important features of embodiments of the present disclosure, nor is it intended to limit the scope of the present disclosure. The other features of the present disclosure will be easily understood through the following instructions.

## BRIEF DESCRIPTION OF THE DRAWINGS

In order to provide a clearer explanation of the technical solution in the embodiments of the present disclosure, a brief introduction will be given to the accompanying drawings required in the description of the embodiments. Obviously, the accompanying drawings in the following description are only some embodiments of the present disclosure. For those skilled in the art, other accompanying drawings may be obtained based on these drawings without any creative effort.

Fig. 1A is an example diagram of an office scenario using an interactive board according to some embodiments of the present disclosure.

Fig. 1B is an example diagram of a teaching scenario using an interactive board according to some embodiments of the present disclosure.

Fig. 1C is a schematic diagram of an infrared sensor scanning an infrared signal according to some embodiments of the present disclosure.

Fig. 1D is a schematic diagram of a touch region according to some embodiments of the present disclosure.

Fig. 1E is a schematic diagram of a touch operation according to some embodiments of the present disclosure.

Fig. 2A is a three-dimensional view of an elastic wave sensor according to some embodiments of the present disclosure.

Fig. 2B is a side view of an elastic wave sensor according to some embodiments of the present disclosure.

Fig. 2C is a top view of an elastic wave sensor according to some embodiments of the present disclosure.

Fig. 2D is a three-dimensional view of a piezoelectric sensor according to some embodiments of the present disclosure.

Fig. 2E shows a front view of a piezoelectric sensor according to some embodiments of the present disclosure.

Fig. 2F shows a rear view of a piezoelectric sensor according to some embodiments of the present disclosure.

Fig. 2G is a test diagram of an elastic wave sensor according to some embodiments of the present disclosure.

Fig. 2H is an example diagram of a frequency domain of an elastic wave signal according to some embodiments of the present disclosure.

Fig. 2I is an example diagram of a time domain of an elastic wave signal according to some embodiments of the present disclosure.

Fig. 2J is a structural schematic diagram of another piezoelectric sensor according to some embodiments of the present disclosure.

Fig. 2K is a structural schematic diagram of a first holder according to some embodiments of the present disclosure.

Fig. 3A is a schematic diagram of an installation posture of an elastic wave sensor according to some embodiments of the present disclosure.

Fig. 3B is a schematic diagram of an installation distribution of an elastic wave sensor according to some embodiments of the present disclosure.

Fig. 3C is a partially enlarged view of Fig. 3B;

Fig. 3D is a schematic diagram of a mounted piezoelectric sensor according to some embodiments of the present disclosure.

Fig. 3E is an example diagram of results of testing curing degrees of an adhesive layer according to some embodiments of the present disclosure.

Fig. 4A is a schematic diagram of wiring of an elastic wave sensor according to some embodiments of the present disclosure.

Fig. 4B is a schematic diagram of wiring of an elastic wave sensor according to some embodiments of the present disclosure.

Fig. 4C is a schematic diagram of wiring of an elastic wave sensor with a default frame according to some embodiments of the present disclosure.

Fig. 4D is a schematic diagram of an overall layout and wiring of an elastic wave sensor according to some embodiments of the present disclosure.

Fig. 4E is a schematic diagram of an external structure of a frame according to some embodiments of the present disclosure.

Fig. 5A is a structural schematic diagram of a multi-level preprocessing circuit for a material recognition service according to some embodiments of the present disclosure.

Fig. 5B is a structural schematic diagram of a primary preprocessing circuit according to some embodiments of the present disclosure.

Fig. 5C is a schematic example diagram of a primary preprocessing circuit according to some embodiments of the present disclosure.

Fig. 5D is a structural schematic diagram of a secondary preprocessing circuit according to some embodiments of the present disclosure.

Fig. 5E is a structural schematic diagram of another secondary preprocessing circuit according to some embodiments of the present disclosure.

Fig. 5F is a schematic example diagram of a secondary preprocessing circuit according to some embodiments of the present disclosure.

Fig. 6 is a flowchart of a method for producing a piezoelectric sensor of an interactive board according to some embodiments of the present disclosure.

Fig. 7 is a flowchart of a method for producing an elastic wave sensor according to some embodiments of the present disclosure.

Fig. 8 is a flowchart of a method for producing an interactive board according to some embodiments of the present disclosure.

Fig. 9 is a flowchart of a material recognition method according to some embodiments of the present disclosure.

Fig. 10 is a flowchart of a material recognition method according to some embodiments of the present disclosure.

Fig. 11A is a comparative example diagram of areas of touch objects according to some embodiments of the present disclosure.

Fig. 11B is an example diagram of a detection distribution of an elastic wave sensor according to some embodiments of the present disclosure.

Fig. 11C is a modal example diagram of an elastic wave signal according to some embodiments of the present disclosure.

Fig. 12A is a schematic diagram of a training process of a material recognition network according to some embodiments of the present disclosure.

Fig. 12B is a schematic diagram of an application process of a material recognition network according to some embodiments of the present disclosure.

Fig. 13 is a flowchart of a material recognition method according to some embodiments of the present disclosure.

Fig. 14 is a flowchart of a writing method according to some embodiments of the present disclosure.

Fig. 15A is an example diagram of a writing operation according to some embodiments of the present disclosure.

Fig. 15B is an example diagram of a writing operation according to some embodiments of the present disclosure.

Fig. 16 is a structural schematic diagram of an interactive board according to some embodiments of the present disclosure.

Fig. 17 is a structural schematic diagram of an interactive board according to some embodiments of the present disclosure.

Fig. 18 is a structural schematic diagram of an interactive board according to some embodiments of the present disclosure.

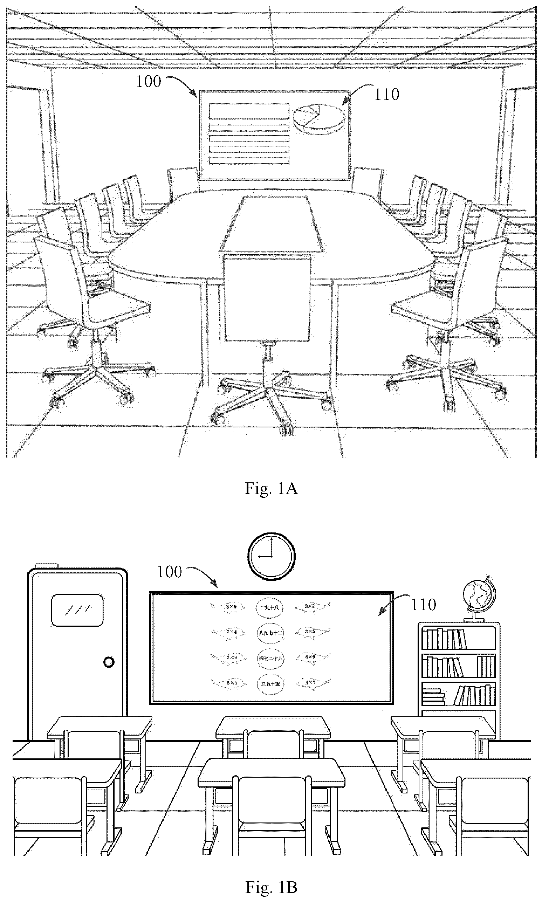

In Figs. 1A-1E, 2A-2K, 3A-3E, 4A-4E, and 5A-5F:

100. Interactive board; 101. First frame; 102. Second frame; 103. Third frame; 104. Fourth frame; 105. Frame; 106. Central processing unit; 107. Infrared processor; 108. Elastic wave processor; 110. Screen; 111. Ink; 112. LCD panel; 120. Infrared sensor; 121. Infrared transmitter; 122. Infrared receiver; 131. First touch state; 132. Second touch state; 133. Third touch state; 134. Fourth touch state; 135. Fifth touch state; 200. Elastic wave sensor; 201. First surface; 202. Second surface; 203. Third surface; 210. Piezoelectric sensor; 220. First flexible circuit board; 230. First holder; 240. Single-strand connecting wire; 211. Piezoelectric structure; 212. First electrode; 213. Second electrode; 221. First solder pad; 222. Second solder pad; 223. First glue; 224. First plate; 225. Second plate; 226. Shielding film; 300. Second glue; 400. Printed circuit board; 410. Interface; 411. Fourth holder; 420. Second flexible circuit board; 430. Third flexible circuit board; 431. Second holder; 432. Third holder; 440. Opening; 441. Cover body; 510. Primary preprocessing circuit; 511. First band-pass filter; 5111. First low-pass filter; 5112. First high-pass filter; 512. First signal amplifier; 520. Secondary preprocessing circuit; 521. Second band-pass filter; 5211. Second low-pass filter; 5212. Second high-pass filter; 522. Second signal amplifier; 523. Common mode voltage filter; 524. First direct current (DC) blocking circuit; 525. First voltage bias circuit; 526. Second DC blocking circuit; 527. Second voltage bias circuit.

## DESCRIPTION OF THE PREFERRED EMBODIMENTS

In order to make the purpose, technical solution, and advantages of the present disclosure clearer, the embodiments of the present disclosure will be further described in detail in conjunction with the accompanying drawings.

It should be clarified that the described embodiments are only a portion of the embodiments of the present disclosure, not all of them. Based on the embodiments in the present disclosure, all other embodiments obtained by those skilled in the art without creative labor fall within the protection scope of the present disclosure.

When the following description refers to the accompanying drawings, unless otherwise indicated, the same numbers in different drawings represent the same or similar elements. The embodiments described in the following exemplary embodiments do not represent all embodiments consistent with the present disclosure. On the contrary, they are only examples of devices and methods that are consistent with some aspects of the present disclosure as detailed in the attached claims.

In the description of the present disclosure, it should be understood that the terms "first", "second", "third", etc. are only used to distinguish similar objects, and do not need to be used to describe a specific order or sequence, nor can they be understood as indicating or implying relative importance. For those skilled in the art, the specific meanings of the above terms in this application can be understood based on specific circumstances. In addition, in the description of the present disclosure, "multiple" refers to two or more unless otherwise specified. "And/or" describes the association relationship of the associated object, indicating that there can be three types of relationships, for example, A and/or B can represent: the existence of A alone, the existence of A and B simultaneously, and the existence of B alone. The character "/" generally indicates that the associated object is an "or" relationship.

Ⅰ. Interactive board

In various business scenarios such as work, study, and life, users often use interactive boards to assist in business operations. Interactive boards are often hung on walls of meeting rooms, classrooms, and other places, or supported by movable brackets for convenient use in different places. For example, as shown in Fig. 1A, in office business scenarios, users use an interactive board 100 to assist meetings in the meeting room, and as shown in Fig. 1B, in teaching business scenarios, users use an interactive board 100 to assist classes in the classroom.

An interactive board integrates one or more functions such as projector, electronic whiteboard, screen, audio, television and video conference terminal. For different versions of functions, the interactive board may be composed of one physical entity or two or more physical entity.

As shown in Figs. 1A and 1B, these physical entities include a screen 110, and the screen may be used to display various information, and its types may include LED (Light Emitting Diode) screen, OLED (Organic Light Emitting Diode) screen, LCD (Liquid Crystal Display) screen, and the like.

In addition, according to different business scenarios (such as screen transfer, screen projection, and screen merging), interactive boards may establish data connections with at least one external device. The external devices include but are not limited to: mobile phones, laptops, USB (Universal Serial Bus) flash drives, USB screen drivers (such as USB Dongles), tablets, desktops, and other interactive boards.

The communication mode between external devices and intelligent interactive boards may be achieved through USB connection, internet, local area network, Bluetooth, Wi Fi (wireless fidelity), ZigBee (ZigBee protocol), etc.

Interactive boards may manipulate the information displayed on the screen through the touch technology, thus achieving human-computer interaction. That is, a user interface (UI) is displayed on the screen, and the user touches the screen surface by a touch object. At this time, the positioning operation is performed to locate a position of a touch object on the screen, triggering the corresponding position function on the interface.

The touch object includes at least one of the followings:

a hand, and a stylus.

The hand may include portions such as the fingertips, knuckles, palms, and back of the hand. Styluses, also known as handwriting pens, are generally components that manufacturers of interactive boards provide for interactive boards.

Styluses are tools for writing on interactive boards, which may be divided into stylus heads, stylus bodies, and other parts. A material of a shell is mostly plastic.

In some designs, a material with high reflectivity for an infrared signal may be added at the stylus head and a position of the stylus body near the stylus head to improve the sensitivity of the stylus in an infrared touch system.

A controller and one or more sensors may be added inside the stylus. The controller is a logical device that controls the stylus, which is electrically connected to the sensor to achieve different functions for the interactive board in conjunction with the sensor.

For example, the sensor may include a Bluetooth module, a Wi-Fi module, a vibration sensor, a pressure sensor, and the like. A communicable sensor such as a Bluetooth module and a Wi-Fi module establishes wireless connections with the interactive board to communicate therewith. The vibration sensor may generate a vibration simulated tactile sensation when a user is writing, and the pressure sensor may detect a pressure of the writing of the user, which is not limited in this embodiment.

In the absence of a stylus that is compatible with the interactive board, ordinary solid objects may be used as an alternative stylus to perform touch operations on the interactive board, which is not limited in this embodiment.

The interactive board supports a single point touch, allowing users to perform a touch operation with their hands on the screen surface, and users may also use a stylus to perform a touch operation on the screen surface.

The interactive board supports multi-touch. A single user may use both a hand and a stylus at the same time. Multiple fingers and styluses may perform touch operations on the screen surface. Multiple users may also use hands or styluses respectively to perform touch operations on the screen surface.

It can be understood that the screen surface is the side facing the user and displaying information to the external environment of the interactive board. **In** order to protect the screen from scratches, a cover plate is generally installed on the screen surface. The material of the cover plate may include glass, PET (thermoplastic or saturated polyester), etc. Therefore, in the embodiments of this description, the screen surface may refer to the surface of the cover plate of the screen.

In addition, in some designs, a protective material on the surface of the display module is the screen surface, which is not limited in this embodiment.

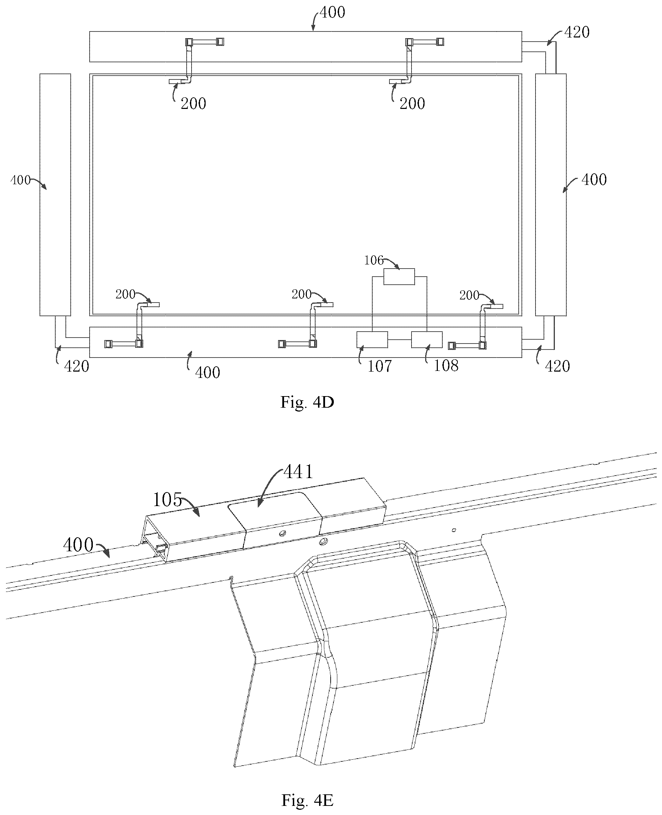

As shown in Fig. 4D, the interactive board may be provided with components such as Central Processing Unit (CPU) 106, Graphics Processing Unit (GPU), Random Access Memory (RAM), and Read Only Memory (ROM) so as to support the installation of one or more operating systems, such as Android, Windows, and the like, therefore, a central processing unit 106, also known as a host, comes with its own application (i.e. system program) in the operating system, and may also install third-party applications in the operating system. In terms of architecture, these applications belong to the upper level applications, and the specific type and content of the application may be set according to the actual situation. Typically, this application has electronic whiteboard function, which may be achieved through electronic whiteboard function: writing, drawing, annotations, courseware production, and display and playback functions.

Furthermore, in response to the business characteristics of business scenarios such as education and office scenarios, the functions of customizable applications, especially those in customized operating systems, may be customized to meet the business requirements of business scenarios such as education and office scenarios.

For example, an application provides wireless screen transfer services, which may perform wireless transfer screen of images from a mobile apparatus such as a computer, a phone, and a tablet to the interactive board.

In addition, a reverse operation may be performed on a mobile apparatus on the interactive board to achieve writing, annotation, and other operations, thus enabling bidirectional interaction in presentation presentations.

For example, when writing is performed on the screen of the interactive board, the application may provide graphic assistance and other design to meet efficient writing requirements of teaching, meetings, and other business operations.

For example, a timing service and a screen projection service to time duration of a business such as teaching and meeting operations is provided, which avoids timeout and delay, and enables a mobile apparatus on site to scan and vote, thereby improving a decision-making efficiency.

For example, an application may provide remote multi terminal interaction in meeting and teaching scenarios, the screen is projected and an annotation is added at a terminal in one region, and a terminal in another region display in real time screen projection contents and annotations.

In a touch technology, considering a large size of a screen of an interactive board, up to 55 inches or even hundreds of inches, an infrared touch system may be composed of an electronic component such as an infrared sensor, a printed circuit board, and an infrared processor, which provides a support of touch technology for the screen.

An infrared touch system uses an infrared signal for a touch operation, which is unlike a capacitive screen that relies on a principle of changing a capacitance of a touch point for a touch operation. An infrared signal is less affected by the environment, and in addition to the hand, various touch objects such as a stylus may also be used for touch operations. Moreover, under the influence of stains, water, wind, and other environments, the infrared touch system may still maintain a high sensitivity for a touch operation.

In addition, as compared with a capacitive screen, the infrared touch system has a particularly significant cost advantage in a large-sized interactive board. Therefore, an infrared touch system is often used in the interactive board.

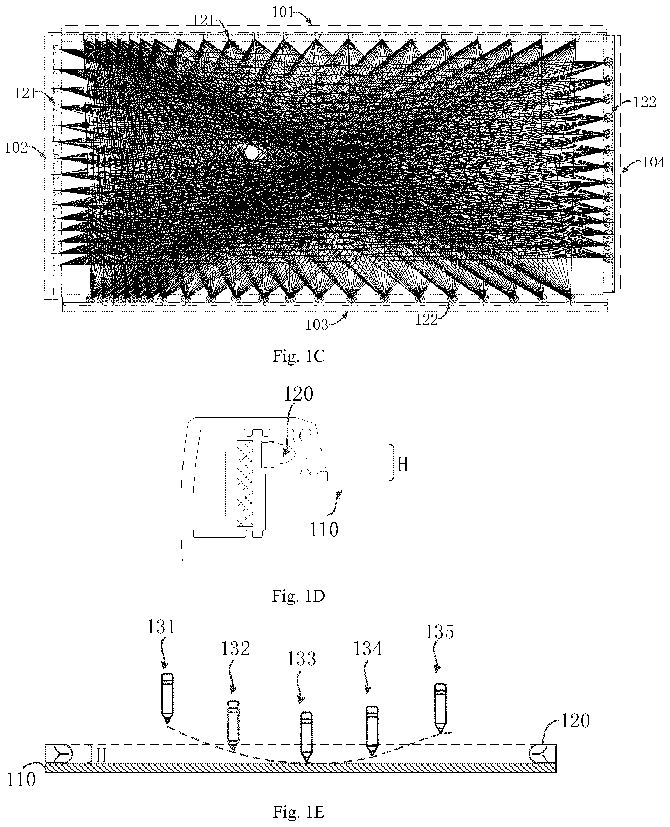

In the optional implementation, as shown in Fig. 1C, the infrared sensor is installed on both sides of the screen surface. The infrared sensor includes an infrared emitter 121 (also known as an infrared lamp bead) and an infrared receiver 122. The infrared emitter 121 is configured to emit infrared signals, and the infrared receiver 122 is configured to receive infrared signals. The screen is provided with a frame having a printed circuit board (PCB), and the effect is to arrange the infrared emitter 121 and the infrared receiver 122 around the screen, forming a cross beam grid. Typically, the infrared beam grid is above the cover plate, and in addition, the infrared beam grid may also be located inside the cover plate or other positions. The dense infrared signals in different directions form a beam grid, which uses the changes in the infrared beam grid caused by touch objects to locate touch points.

When the touch object blocks the infrared signal, a change will be caused in the light measurement value at the corresponding infrared receiver 122. In most cases, the light measurement value is weakened, while in infrared touch technologies such as in-glass, the light measurement value increases. Therefore, based on the light measurement value of the infrared signal, the position of the touch point (i.e. a projection of the touch object on the screen, as shown in an approximately circular blank region in Fig. 1C) on the screen may be judged.

In general, multiple infrared emitters are installed on a first side of the frame of the screen, while multiple infrared receivers are installed on a second side of the frame of the screen. The first side is opposite to the second side, that is, the infrared receiver is within a scanning range of the infrared transmitter, so that the infrared signal emitted by the infrared emitter is received by the infrared receiver.

In some designs, the infrared transmitter and infrared receiver are installed on the same side of the screen frame.

In some designs, infrared sensors only include single-ended infrared emitters.

In order to better understand the present disclosure for those skilled in the art, in this embodiment, multiple infrared emitters are installed on the first side of the screen frame, and multiple infrared receivers are installed on the second side of the screen frame as an example of an infrared sensor.

Furthermore, multiple infrared emitters form a collection and are installed in the form of light strips on the printed circuit board. For ease of differentiation, the light strip is designated as first light strip, and the first light strip is provided with an emission driver chip. The emission driver chip is connected to multiple infrared emitters and may be configured to provide first control signals to multiple infrared emitters, and control the infrared emitters to emit infrared signals.

Multiple infrared receivers form a collection and are installed in the form of light strips on the printed circuit board. For ease of differentiation, this light strip is designated as second light strip, and the second light strip is provided with a receiving driver chip. The receiving driver chip is connected to multiple infrared receivers and may be configured to provide second control signals to multiple infrared receivers, and control the infrared receivers to receive infrared signals.

For different business requirements, the shape of the screen varies, such as rectangles, hexagons, circles, etc. The shape of the frame also varies with the shape of the screen, such as rectangles, hexagons, circles, etc. For different shaped frames, the settings of the infrared emitter and receiver in each infrared sensor also vary.

In one example, as shown in Fig. 1C, the shape of the frame of the interactive board is rectangular. In this example, the frame of the interactive board includes a first frame 101, a second frame 102, a third frame 103, and a fourth frame 104. In a vertical direction, the first frame 101 is opposite to the third frame 103, and in the horizontal direction, the second frame 102 is opposite to the fourth frame 104. For this, the first frame 101 is located at the top, hence also known as a sky side, the third frame 103 is located at the bottom, hence also known as a ground side, the second frame 102 is also known as a left side, and the fourth frame 104 is also known as a right side.

In one set of infrared sensors, the infrared transmitter 121 is arranged on the first frame 101, and the infrared receiver 122 is arranged on the third frame 103.

In another set of infrared sensors, the infrared transmitter 121 is arranged on the second frame 102, and the infrared receiver 122 is arranged on the fourth frame 104.

As shown in Fig. 4D, an infrared processor 107 is installed inside the interactive board. The infrared processor 107 is a microcontroller unit (MCU) that is matched with the infrared sensor, such as 811 SOC (System on Chip). When the infrared processor has a logical processing ability of infrared signals, the infrared processor may provide touch processing services for upper layer applications or elastic wave processors based on the infrared signals, that is, the infrared processor may process the infrared signal scanned by the infrared sensor on the touch object, such as calculating the coordinates of the touch object (X coordinate, Y coordinate), calculating width and height, marking time of the appearance of the touch object, calculating the cross-sectional area of the touch object, and the like, to form a touch data package (i.e. touch point data).

It should be noted that in some models of interactive boards, the central processing unit (CPU) has the logical processing ability of infrared signals. At this time, the CPU may provide touch processing services for upper level applications or elastic wave processors based on the infrared signals. That is, the infrared processor uploads the infrared signals to the CPU, and the CPU may process the infrared signals scanned by the infrared sensor on the touch object. For example, the CPU may calculate the coordinates of the appearance of the touch object (X coordinate, Y coordinate), calculate the width and height, mark the time when the touch object appears, calculate the cross-sectional area of the touch object, and the like, to form a touch data package (i.e. touch point data).

There are USB components between the central processing unit 106 and the infrared processing unit 107, such as USB HUB (hub), USB switch, USB Redriver (signal relay), etc. The central processing unit 106 may serve as a HID (Human Interface Device), and the infrared processing unit 107 communicates with the central processing unit 106 through USB components. When the infrared processing unit 107 generates touch data packets, the touch data packet is transmitted to the central processor 106, and the touch data packet is reported to the upper layer application of the operating system.

In addition to the infrared touch system composed of the electronic component such as the infrared sensor, the printed circuit board, the infrared processor, or the central processing unit, in some designs, the screen of the interactive board may also be a capacitive screen, a resistive screen, or an electromagnetic screen, and itself supports touch operation, which is not limited in this embodiment.

As shown in Fig. 1D, in general, due to the fact that the infrared sensor 120 is higher than the surface of the screen 110 (especially the cover plate), the infrared sensor 120 transmits light through a filter strip (also known as a filter). The filter strip is usually made by adding dye to the raw material and using injection molding or casting technology. The filter strip may transmit infrared light while filtering out other ambient light, thereby improving a signal-to-noise ratio of the infrared signal. Then, the infrared sensor 120 scans the infrared signal on the surface of screen 110 within a certain height range. Therefore, the infrared sensor 120 forms a touch region in the vertical direction of the screen 110, having a height of H, which is generally greater than 2mm (millimeters) and cannot be ignored.

For the infrared touch system to achieve the touch function of the interactive board, when a touch object (such as a hand or stylus) is written on the screen, the general process is to first press the touch object, move the touch object when it touches the screen surface, and finally lift the touch object.

As shown in Fig. 1E, a partial processing operation of the infrared touch system is described from a first touch state 131, a second touch state 132, a third touch state 133, a fourth touch state 134 to a fifth touch state 135 when the touch object is pressed *(Down),* moved *(Move),* and raised *(Up)* in one touch operation.

In the first touch state 131, the touch object begins to press and is above the touch region, that is, a distance between the touch object and the plane on which the surface of the screen 120 is located is greater than H, and the infrared signal scanned by the infrared sensor 120 is not blocked by the touch object. At this time, the infrared processor or central processing unit does not report the touch point data.

In the second touch state 132, the touch object continues to be pressed and is in the touch region, without touching the surface of the screen 120. That is, the distance between the touch object and the plane on which the surface of the screen 120 is located is greater than 0 and less than H. The infrared signal scanned by the infrared sensor 120 is blocked by the touch object. At this time, the infrared processor or central processor reports the touch point data.

In the third touch state 133, the touch object is in the touch region and has touched the surface of the screen 120. The touch object may be moved on the surface of the screen 120, that is, the distance between the touch object and the plane on which the screen surface is located is less than or equal to 0 (less than 0 indicates a phenomenon that the screen surface is concave under the force of the touch object). Obviously, the distance between the touch object and the surface of the screen 120 is less than H. At this time, the infrared signal scanned by the infrared sensor 120 is blocked by the touch object, and the infrared processor or central processing unit reports the touch point data.

In the fourth touch state 134, the touch object begins to lift and is in the touch region, without touching the surface of the screen 120. That is, the distance between the touch object and the plane on which the surface of the screen 120 is located is greater than 0 and less than H. The infrared signal scanned by the infrared sensor 120 is blocked by the touch object. At this time, the infrared processor or central processor reports the touch point data.

In the fifth touch state 135, the touch object continues to lift and be above the touch region, that is, the distance between the touch object and the plane on the surface of the screen 120 is located is greater than H, and the infrared signal scanned by the infrared sensor 120 is not blocked by the touch object. At this time, the infrared processor or central processing unit does not report touch point data.

The touch apparatuses that users use in their daily lives are mostly mobile phones and tablets. These touch apparatuses often use resistive or capacitive screens, so that most users are accustomed to using resistive or capacitive touch operations. That is, when the touch object touches the screen surface, it will only report touch point data and perform corresponding operations.

Due to the habit of using resistive or capacitive touch operations formed by users in long-term life, work, and learning, for interactive boards, the infrared touch system is imperceptible to users. Even if the touch object enters the touch region of the infrared sensor, the touch point data is reported. Considering the high cost of learning infrared touch operations, promotion has certain difficulties, Therefore, regardless of whether the interactive board uses an infrared touch system or a capacitive screen, users currently use resistive or capacitive touch operations on the interactive board, that is, pressing the touch object until it touches the surface screen to achieve touch operations on the interactive board.

It should be noted that for infrared touch technologies such as in-glass, the touch region may be ignored. At this case, in interactive boards, infrared touch operations are basically consistent with resistive touch operations and capacitive touch operations.

As described above, an interactive board using infrared touch technology, where the touch object blocks the infrared signal but the actual touch object does not touch the screen surface, will also have the same touch effect as the touch object touching the screen surface. Therefore, it will bring users a bad touch interaction experience. Based on this issue, the present disclosure creatively introduces an elastic wave sensor. By combining the signals of elastic wave sensors and infrared touch technology, this problem has been solved, providing users with a better touch interaction experience.

II. Elastic Wave Sensor

When a touch object touches the screen surface, deformation occurs at a place of which the screen surface is touched, resulting in the generation of elastic waves, and the elastic waves propagate through the screen.

Stress wave is a propagation form of stress and strain disturbance, and the elastic wave is a type of stress wave, that is, the form of stress and strain caused by disturbance or external force transmitted in an elastic medium. There is an elastic force that interacts between particles in an elastic medium. After a particle leaves its equilibrium position due to disturbance or external force, an elastic restoring force causes vibration of a particle, and then causes displacement and vibration of the surrounding particles, and as a result, the vibration propagates in the elastic medium and is accompanied by energy transfer. The stress and strain will change wherever the vibration reaches.

The frequency of elastic waves generated when a touch object touches the screen surface of an interactive board is determined by the two contact media, that is, the touch object and the screen. During the touch process, low-frequency fundamental waves and higher-order harmonics are generated, and the energy of low-frequency fundamental waves is generally much higher than that of higher-order harmonics. Therefore, in this embodiment, for the elastic waves generated when some commonly used touch objects touch the screen surface of the interactive board, a resonant frequency of the piezoelectric sensor (elastic wave sensor) is designed to be consistent with the frequency of the fundamental wave, and the frequency of the fundamental wave is positioned as the working frequency for material recognition, so as to improve the signal-to-noise ratio of the piezoelectric sensor (elastic wave sensor) and thus improve the signal-to-noise ratio of the sensor.

At least one elastic wave sensor is installed on the screen of the interactive board, where a working frequency of the elastic wave sensor is basically matched (also known as being identical) with the frequency (i.e. material frequency) used to distinguish different materials in the elastic wave generated by the touch object touching the screen surface. Under this condition, a sensitivity of detecting the elastic wave generated by conventional touch objects such as hands and styluses when writing on the screen in the interactive board can be enhanced, so that the piezoelectric sensor (elastic wave sensor) detects the elastic waves generated when a touch object touches the screen surface, thereby generating high-quality elastic wave signals, improving the accuracy of detecting the material of the touch object such as the hand and the stylus in the scenario of the interactive board, providing a perceptual basis for adding a material recognition function to the interactive board. The material recognition function can increase the diversity of writing functions in the interactive board, enhance the functionality of a certain operation related to writing in the interactive board, simplify the convenience of a certain operation related to writing, and thus improve the service quality of the interactive board.

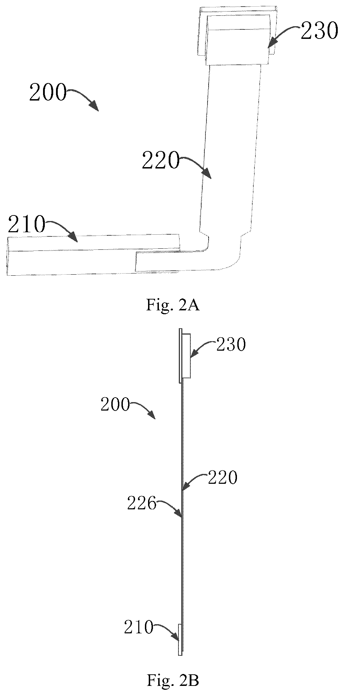

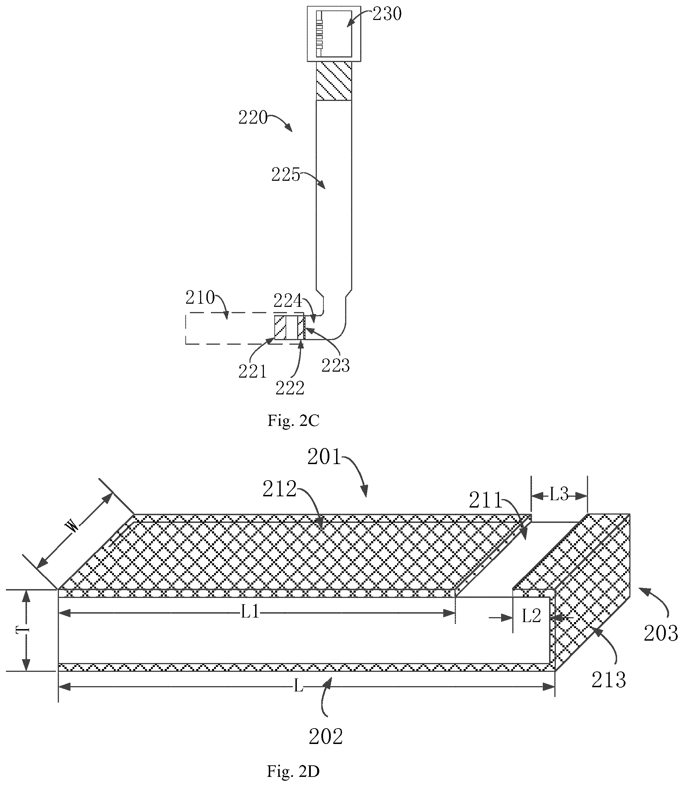

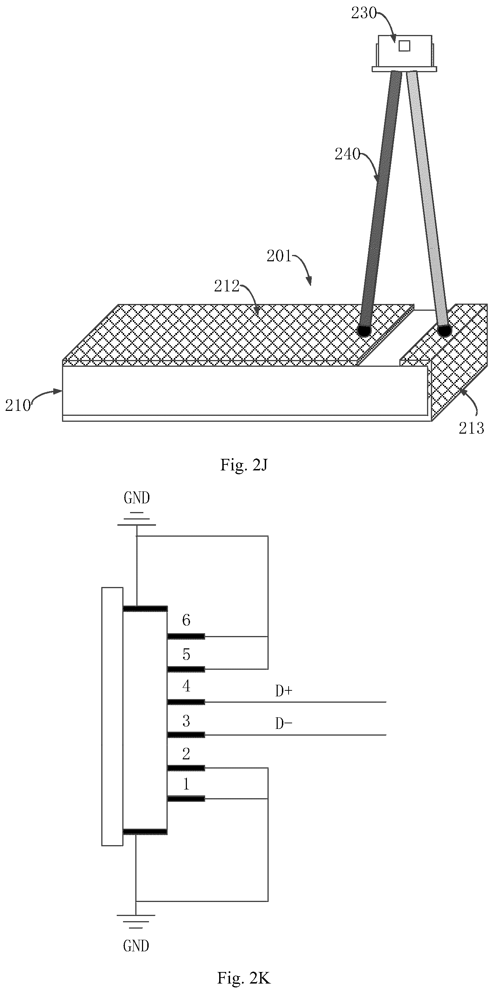

According to the embodiment of the present disclosure, a new sensor design is provided, as shown in Figs. 2A, 2B, 2C, and 2J. The elastic wave sensor 200 may include the following structure:

1. Piezoelectric sensor 210

The piezoelectric sensor is a sensing component that utilizes a piezoelectric effect generated by a certain dielectric material under force, and is a self-generating and electromechanical conversion sensing component.

The so-called piezoelectric effect refers to a phenomenon where a certain dielectric material undergoes deformation (including bending and stretching deformation) under the action of external forces in a certain direction, resulting in the generation of charges on their surface due to changes in the internal charge distribution of the material.

Furthermore, the piezoelectric sensor is influenced by an elastic waves and generate elastic wave signals using positive piezoelectric effects.

The so-called positive piezoelectric effect may refer to that a certain dielectric material in a piezoelectric sensor generates a certain amount of charge on the electrode surface and is in a charged state when a force is applied along a certain direction (such as the deformation caused by the touch object touching the surface of a screen of an interactive board) to make it deform, and returns to a normal uncharged state when the external force is removed.

In practical applications, a shape of the piezoelectric sensor includes at least one of the followings: a cuboid, a cube, and a cylinder.

In general, performances of a cube based piezoelectric sensor and a cylinder based piezoelectric sensor is better, and when elastic waves propagate from different directions on the screen to the elastic wave sensor, the sensitivity of the cube based piezoelectric sensor and the cylinder based piezoelectric sensor may remain relatively consistent.

In addition to rectangles, cubes, and cylinders, other irregularly shaped piezoelectric sensors may also be used, which is not limited in this embodiment.

The various structural components in the interactive board are relatively compact, and the original design did not have a piezoelectric sensor, so there was no dedicated space reserved for installing piezoelectric sensors. Therefore, the space available for installing piezoelectric sensors in the original structure of the interactive board is relatively small. For the ease of differentiation, the space available for installing piezoelectric sensors in the interactive board is recorded as the target space. If a cube based piezoelectric sensor and a cylinder based piezoelectric sensor are selected, significant modifications may be required to the original structure of the interactive board. Therefore, in the case of limited target space, in order to reduce changes to the original structure of the interactive board and reduce production costs, this embodiment may select a rectangular piezoelectric sensor.

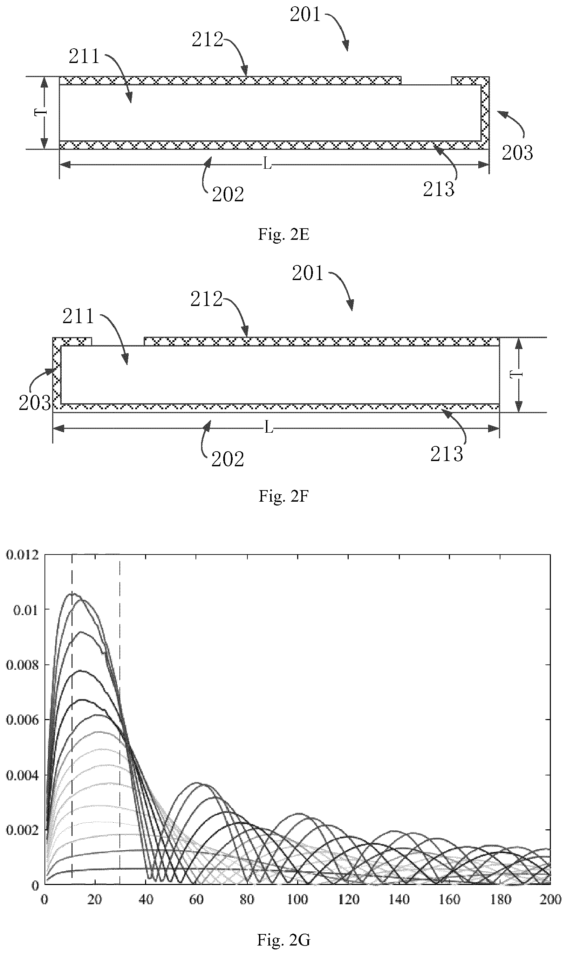

For a rectangular body, as shown in Figs. 2D, 2E, and 2F, the piezoelectric sensor includes the following dimensions:

1.1.1. Length (L)

In this embodiment, a length L of the piezoelectric sensor is designed to be the half wavelength of the elastic wave generated by the touch object on the screen surface. Therefore, at the frequency of the elastic wave, the piezoelectric sensor resonates and generates gain, which enhances the sensitivity of the elastic wave sensor.

Furthermore, the length L of a piezoelectric sensor refers to the length of an effective working region of the electrodes, and the effective working region refers to certain regions where the electrodes may convert stress into charge.

In cases where electrodes are designed with flanging, electrodes in the certain regions (such as electrodes in flanging) cannot convert stress into charge. The regions where these electrodes are located are ineffective working regions, and the ineffective working regions of the electrodes is not calculated within the length L of the piezoelectric sensor.

In addition, if the length L of the piezoelectric sensor is designed to be one wavelength of the elastic wave generated by the touch object touching the screen surface, at the frequency of the elastic wave, the electric potential generated by the piezoelectric sensor is mutually offset, so that the sensitivity of the elastic wave sensor decreases.

Some commonly used touch objects for users are mainly styluses and hands. For styluses, touch operations may be triggered by their head or by their tail.

Whether it is the stylus head or the stylus tail, the frequency of the elastic waves generated on the surface of the touch screen is generally 0-5kHz (kHz).

When users use their hands (especially fingers) to trigger touch operations on the interactive boards, their touch on the screen surface of the interactive board may usually be distinguished as knocking or friction. The frequency of the elastic wave (fundamental frequency) generated when the hands (especially fingers) of the user knock the screen surface of the interactive board is generally within 1kHz, while the frequency of elastic waves generated by friction between the hands (especially fingers) of the user and the screen surface of the interactive board is generally around 15kHz.

As shown in Fig. 2G, a horizontal axis of a coordinate system is a length of a certain piezoelectric sensor (mm), and a vertical axis of a coordinate system is an elastic wave signal generated by the piezoelectric sensor (V (volts)). Fig. 2G shows a curve of the elastic wave signal, presented by the elastic wave in a 0-20kHz frequency band detected by this piezoelectric sensor, changing with length (curve corresponding to 1kHz, 2kHz, 3kHz, 4kHz, 5kHz, 6kHz, 7kHz, 8kHz, 9kHz, 10kHz, 11kHz, 12kHz, 13kHz, 14kHz, 15kHz, 16kHz, 17kHz, 18kHz, 19kHz and 20kHz from top to bottom at 10mm (a dashed line on the left in Fig. 2G)).

It may be seen that when the length of the piezoelectric sensor is between 10mm and 30mm (dashed line on the right in Fig. 2G), the elastic wave in the 0-20kHz frequency band is enhanced, which may cover some commonly used touch objects. Therefore, in this embodiment, the length of the piezoelectric sensor of the elastic wave sensor is between 10mm and 30mm, including 10mm and 30mm.

Furthermore, in a range of 10mm to 30mm, an intermediate value of 20mm may be selected as the length of the piezoelectric sensor. Thus, the piezoelectric sensor may generate a certain gain for some commonly used touch objects by users, and has wide applicability.

It should be noted that a length L of 20mm for a piezoelectric sensor allows for certain errors (also known as tolerances). For example, the error of the length L for a piezoelectric sensor is expressed as 20mm±0.3mm, which means that a maximum of 0.3mm is allowed on the basis of 20mm, a maximum of 0.3mm is allowed on the basis of 20mm, and a range of 19.7mm-20.3mm may be considered as an error range. Within this error range, the length of a piezoelectric sensor may be considered as 20mm.

Furthermore, the error of the length L of the piezoelectric sensor may be used to control the capacitance error of the elastic wave sensor. For the same elastic wave sensor, the error of the length L of the piezoelectric sensor should be consistent to ensure the consistency of the capacitance of the elastic wave sensor.

1.1.2. Width (W)

In an ideal situation, the width W of a piezoelectric sensor is the same as the length L of the piezoelectric sensor, which will improve the performance of the piezoelectric sensor.

If the length of the piezoelectric sensor is 10mm-30mm, the width of the piezoelectric sensor is correspondingly 10mm-30mm.

If the length of the piezoelectric sensor is preferably 20mm, the width of the piezoelectric sensor is correspondingly preferably 20mm.

In practical applications, there are limitations in the target space available for installing piezoelectric sensors in interactive boards. In this case, in order to reduce changes in the original structure of the interactive board, this embodiment may shorten the width W of the piezoelectric sensor, that is, the width W of the piezoelectric sensor is smaller than the length L of the piezoelectric sensor.

The basic requirement for the width W of piezoelectric sensors is that the width of the piezoelectric sensor is smaller than the width of the target space, so that the piezoelectric sensor may be installed in the target space of the interactive board.

In general, the width of the target space that may be used to install piezoelectric sensors in interactive boards is about 10mm, so the width W of piezoelectric sensors may be designed to be less than 10mm.

Furthermore, if considering the limitations of the actual installation process, the width W of the piezoelectric sensor may be designed to be 5mm, making it easy to install the piezoelectric sensor on the screen of the interactive board using the corresponding process.

It should be noted that a width W of 5mm for a piezoelectric sensor allows for certain errors. For example, the error of the width W of a piezoelectric sensor is expressed as 5mm±0.1mm, which means that a maximum of 0.1mm is allowed on the basis of 5mm and a maximum of 0.1mm is allowed on the basis of 5mm. Within the range of 4.9mm-5.1mm, it may be considered as an error range. Within this error range, the width of a piezoelectric sensor may be considered as 5mm.

Furthermore, the error of the width W of the piezoelectric sensor may be used to control the capacitance error of the elastic wave sensor. For the same elastic wave sensor, the error of the width W of the piezoelectric sensor should be consistent to ensure the consistency of the capacitance of the elastic wave sensor.

1.1.3 Thickness (T)

The thickness T of a sensor is also known as height, considering that the capacitance value of a piezoelectric sensor is inversely proportional to the thickness T of the sensor. That is, the thicker the piezoelectric sensor, the smaller its capacitance value. Therefore, in an ideal situation, the larger the thickness T of a piezoelectric sensor, the better the performance of an elastic wave sensor.

In practical applications, the basic requirement for the thickness T of piezoelectric sensors is that the thickness T of the piezoelectric sensor is less than the height of the target space, so that the piezoelectric sensor may be installed in the target space of the interactive board.

In general, operational amplifiers are used to amplify the small charges generated by piezoelectric sensors. From the positive piezoelectric effect of piezoelectric sensors, it may be seen that when the piezoelectric sensor undergoes deformation under force, a certain amount of charge is generated. The output voltage of the piezoelectric sensor (i.e. the input voltage of the voltage amplifier) may be calculated by the formula:

$$U_{in} = \frac{Q}{C_p + C_e}$$

where Q is a charge generated by the piezoelectric sensor during deformation, and $C_p$ is a capacitance of the piezoelectric sensor itself, $C_e$ refers to parasitic capacitance, such as a capacitance of a wire or an input capacitance of the operational amplifier.

While the capacitance of the operational amplifier is remained unchanged, reducing the capacitance of the piezoelectric sensor itself may increase the input voltage of the operational amplifier, thereby improving the signal-to-noise ratio.

Under normal conditions, parasitic capacitance $C_e$ may be ignored. If the capacitance $C_p$ of the piezoelectric sensor itself is less than parasitic capacitance $C_e$. The output voltage is influenced by the parasitic capacitance $C_e$, which makes the circuit unstable, therefore, the capacitance $C_p$ of the piezoelectric sensor itself cannot be as small as possible.

In general, the height of the target space that may be used to install piezoelectric sensors in an interactive board is about 10mm, so the thickness T of the elastic wave sensor may be designed to be less than 10mm.

Furthermore, if the influence of parasitic capacitance is considered, the thickness T of the piezoelectric sensor may be designed to be 2mm.

It should be noted that the thickness T of a piezoelectric sensor is 2mm, which allows for certain errors. For example, the error of the thickness T of a piezoelectric sensor is expressed as 2mm±0.08mm, which means that a maximum of 0.08mm is allowed on the basis of 2mm, a maximum of 0.08mm is allowed on the basis of 2mm, and a range of 1.92mm to 2.08mm may be considered as an error range. Within this error range, the thickness of a piezoelectric sensor may be considered as 2mm.

Furthermore, the error of the thickness T of the piezoelectric sensor may be used to control the capacitance error of the elastic wave sensor. For the same elastic wave sensor, the error of the thickness T of the piezoelectric sensor should be consistent to ensure the consistency of the capacitance of the elastic wave sensor.

In addition, the piezoelectric sensor exhibits a piezoelectric effect after polarization, and its polarization direction is in the direction of the thickness T.

In the optional implementation, as shown in Figs. 2D, 2E, and 2F, the piezoelectric sensor has the following structure:

1.2.1 Piezoelectric Structure 211

The piezoelectric sensor has at least one layer of a piezoelectric structure 211. The piezoelectric structure 211 is a component made of a piezoelectric material (i.e. a sensitive functional material that exhibits a piezoelectric effect).

In practical applications, the materials of piezoelectric structures may include piezoelectric crystals, piezoelectric ceramics, organic piezoelectric materials, piezoelectric polymer materials, such as PZT (Pb ($Zr_{1-x}TiO_3$), lead zirconate titanate), $BaTiO_3$ (barium titanate), AlN (aluminum nitride), ZnO (zinc oxide), PVDF (polyvinylidene fluoride), and the like.

PZT has excellent piezoelectric and dielectric properties, high sensitivity, and good stability. Therefore, in this embodiment, the material of the piezoelectric structure may be selected as PZT.

Furthermore, PZT may be classified into different categories, such as PZT-2 (lead zirconate titanate 2 series), PZT-4 (lead zirconate titanate 4 series), PZT-5 (lead zirconate titanate 5 series), and PZT-8 (lead zirconate titanate 8 series).

PZT-5 is a soft material. In this embodiment, the material of the piezoelectric structure may be selected as PZT-5, which includes PZT-5A, PZT-5D, PZT-5J, PZT-5H, PZT-5X, and the like. The components of these materials are different, and the specific performance shows differences, that is, the dielectric constant, dielectric loss, electromechanical coupling coefficient, and piezoelectric constant may all vary. According to this embodiment, optional materials may be selected based on the business requirements of material recognition.

It should be noted that different production enterprises may implement unified industrial standards or customize the names in PZT-5. For example, some production enterprises may name PZT-5A as PZT-51, which is not limited in this embodiment.

1.2.2 Electrode

An electrode partially or completely covers a surface of the piezoelectric structure, forming a layer structure that is used to conduct the piezoelectric structure and other electronic components, thereby transmitting the elastic wave signal generated by the piezoelectric sensor.

In general, the smaller the resistance of the electrode, the better the performance of the piezoelectric structure. This is manifested by the electrode resistance being less than the preset resistance threshold.

Preferably, the resistance of the electrode is less than 1 ohm (ohms), which may meet the requirements for detecting the elastic waves generated by some commonly used touch objects on the screen surface of the interactive board.

In addition, in order to ensure the stability of the elastic filter performance, there are certain requirements for the adhesion force of the electrode, which is manifested as the adhesion force of the electrode being greater than the preset adhesion threshold.

Preferably, the adhesion force of the electrode is greater than $2.5N/mm^2$ (N/square millimeter), which may meet the stability of elastic filter performance.

In this embodiment, the material of the electrode may be preferably silver, that is, the surface of the piezoelectric structure is covered with a silver layer, and the electrode formed by silver may meet the requirements of resistance, adhesion, etc.

In addition to silver, the electrode material may also be copper, aluminum, gold, and other materials, which is not limited in this embodiment.

As shown in Figs. 2D, 2E, and 2F, the electrodes may be divided into a first electrode 212 and a second electrode 213. The first electrode 212 and the second electrode 213 are independent and not connected to each other, and may serve as positive and negative electrodes, respectively.

If the first electrode 212 is the positive electrode, the second electrode 213 is the negative electrode.

For the first electrode 212 and the second electrode 213, a flanging design may be used. The flanging design is not only convenient for installing piezoelectric sensors, but also for connecting lead wires to the first electrode 212 and the second electrode 213.

In the optional implementation, due to the fact that the piezoelectric structure is the main structure of the piezoelectric sensor and the thickness of the electrode is small, its coverage on the surface of the piezoelectric structure does not affect the surface structure of the piezoelectric structure. Therefore, according to this embodiment, it may be considered that the surface of the piezoelectric structure is consistent with the surface of the piezoelectric sensor.

As shown in Figs. 2D, 2E, and 2F, the piezoelectric structure (piezoelectric sensor) includes a first surface 201, a second surface 202, and a third surface 203 adjacent to both the first surface 201 and the second surface 202.

The first surface 201 and the second surface 202 are generally the two surfaces with the largest area and independent of each other in the piezoelectric structure (piezoelectric sensor). When the piezoelectric sensor has a regular shape such as a cube, rectangle, cylinder, etc., the area of the first surface 201 is usually equal to that of the second surface 202. For example, the first surface 201 is the upper surface in the piezoelectric structure (piezoelectric sensor), and the second surface 202 is the lower surface in the piezoelectric structure (piezoelectric sensor).

The third surface 203 is a surface that is adjacent to both the first surface 201 and the second surface 202 along the length L direction, such as the side surface in a piezoelectric structure (piezoelectric sensor). Adjacency may refer to the first surface 201 having a common side with the third surface 203, and the second surface 202 having a common side with the third surface 203.

Some piezoelectric structures (piezoelectric sensors) have a large number of side surfaces, such as rectangular, cubic, and other shaped piezoelectric structures (piezoelectric sensors), which have four side surfaces, and the third surface 203 is one of the independent side surfaces. In this case, the second electrode 213 may cover the whole third surface 203.

Some piezoelectric structures (piezoelectric sensors) have a relatively small number of side surfaces, for example, cylinder based piezoelectric structures (piezoelectric sensors) have one side surface. The third surface 203 is a reused side surface, which is called multiplexing. In addition to the second electrode 213 covering the third surface 203, a part of the third surface 203 is also retained and does not cover the second electrode 213.

The first electrode 212 covers a part of the first surface 201, and the second electrode 213 covers a part of the first surface 201, the whole second surface 202, and a part of the third surface 203 or the whole third surface 203, respectively. That is, the second electrode 213 is led from the second surface 202 to the first surface 201 through the third surface 203, thereby forming an easily connected positive and negative electrodes with the first electrode 212 of the first surface 201.

On the first surface 201, the first electrode 212 covers the first side of the first surface 201, the second electrode 213 covers the second side of the first surface 201, and the first side is opposite to the second side. If the first side is on the left, the second side is on the right, and if the first side is on the right, the second side is on the left. There is a gap between the first electrode 212 and the second electrode 213, which is marked as the first gap for ease of differentiation, and the piezoelectric structure 211 on the first gap does not cover the electrode.

On the first surface 201, if the area of the first electrode 212 is greater than that of the first gap, and the area of the first gap is greater than that of the second electrode 213, then the area of the first electrode 212 is greater than that of the second electrode 213.

Taking a rectangular based piezoelectric structure (piezoelectric sensor) as an example, if the first surface 201 is the upper surface of the piezoelectric structure (piezoelectric sensor), the first surface 201 is a rectangle, and if the second surface 202 is the lower surface of the piezoelectric structure (piezoelectric sensor), the second surface 202 is a rectangle.

In this case, on the first surface 201, if the shape of the first electrode 212 is rectangular and the shape of the second electrode 213 is rectangular, the shape of the first gap is also rectangular.

A width W of the first electrode 212 is the same as that of the piezoelectric sensor (piezoelectric structure), a width W of the second electrode 213 is the same as that of the piezoelectric sensor (piezoelectric structure), and the width W of the first gap is the same as that of the piezoelectric sensor (piezoelectric structure), that is, the width W of the first electrode 212, the width W of the second electrode 213, and the width of the first gap are equal. The length L1 of the first electrode 212 is greater than that of the first gap, and the length L2 of the first gap is greater than that of the second electrode 213. That is, the length L1 of the first electrode 212 is greater than the length L3 of the first gap, and the length L3 of the first gap is greater than the length L2 of the second electrode 213. Thus, the length L1 of the first electrode 212 is greater than the length L2 of the second electrode 213.

In addition, the length L3 of the first gap is greater than the thickness T of the piezoelectric sensor. Thus, the breakdown of piezoelectric structures can be avoided during the polarization process.

In a flanging design, the second electrode 213 located on the second surface 202 is in the effective working region, and the second electrode 213 located on the first surface 201 and the second electrode 213 located on the third surface 203 are both in the ineffective working region. Therefore, the length L of the piezoelectric sensor refers to the length of the second electrode 213 located on the second surface 202, and does not incorporate the second electrode 213 located on the first surface 201, the second electrode 213 located on the third surface 203 into the length L of the piezoelectric sensor.

For example, under the conditions of a piezoelectric sensor having a length L of 20mm, a width W of 5mm, and a thickness T of 2mm, on the first surface 201, the length L1 of the first electrode 212 is 17mm, the width W is 5mm, the length L2 of the second electrode 213 is 1mm, the width W is 5mm, and the length L3 of the first gap is 2mm, and the width W is 5mm.

On the second surface 202, the length of the second electrode 213 is denoted as the length L of the piezoelectric sensor, which is 20mm. On the third surface 203, the length of the second electrode 213 is denoted as the thickness T of the piezoelectric sensor, which is 2mm.

It should be noted that the length L1 of the first electrode 212 is 17mm, the length L2 of the second electrode 213 is 1mm, and the length L3 of the first gap is 2mm, which allows for certain errors. For example, the error of the length L1 of the first electrode 212 is expressed as 17mm±0.2mm, that is, the minimum of 0.2mm is allowed on the basis of 17mm, the maximum of 0.2mm is allowed on the basis of 17mm, and the range of 16.8mm to 17.2mm may be considered as the range of errors. Within the range of this error, it may be considered that the length L1 of the first electrode 212 is 17mm; the error of the length L2 of the second electrode 213 is expressed as 1mm±0.1mm, which means that a maximum of 0.1mm is allowed on the basis of 1mm, and a maximum of 0.1mm is allowed on the basis of 1mm, and a range of 0.9mm-1.1mm may be considered as an error range. Within this error range, the length L2 of the second electrode 213 may be considered as 1mm; the error of the length L3 of the first gap being 2mm is expressed as 2mm±0.1mm, which means that a maximum of 0.1mm is allowed on the basis of 2mm, and a maximum of 0.1mm is allowed on the basis of 2mm, and a range of 1.9mm-2.1mm may be considered as an error range. Within this error range, the length L3 of the first gap may be considered as 2mm.

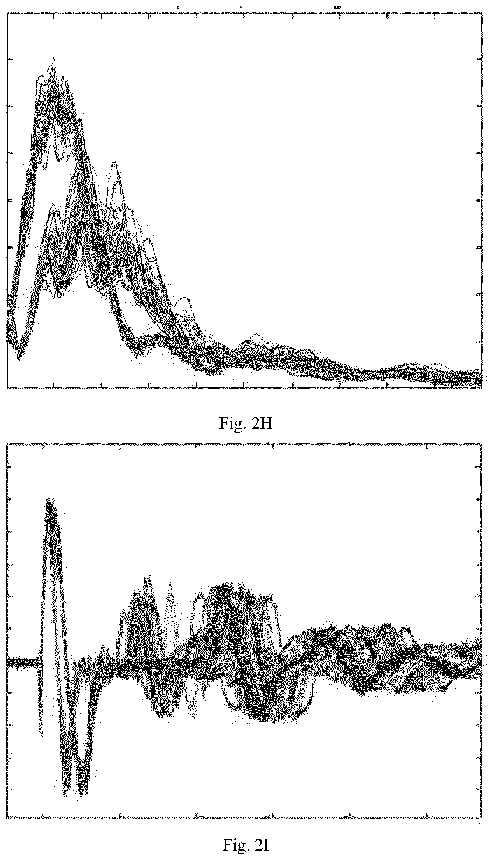

The above-mentioned piezoelectric sensor is used to detect the elastic waves generated by two different materials of touch objects when the screen surface is touched. The elastic wave signal shown in Fig. 2H is obtained in the frequency domain, and the elastic wave signal shown in Fig. 2I is obtained in the time domain. Whether it is the frequency domain or time domain, the elastic wave signals corresponding to different materials of touch objects are clearly distinguished. It is beneficial to improve the accuracy of using elastic wave signals in the frequency domain and/or time domain to recognize the material of the touch object.

It should be noted that piezoelectric structures (piezoelectric sensors) may have other surfaces besides the first surface 201, the second surface 202, and the third surface 203, which do not cover the electrodes.

Due to the polarization direction of the piezoelectric sensor being in the direction of the thickness T, and the electrode of the piezoelectric sensor being perpendicular to the polarization direction, the electrode of the piezoelectric sensor is pasted on the screen of the interactive board, so the polarization direction of the piezoelectric sensor is perpendicular to the plane on which the screen of the interactive board is located.

When a user touches the screen surface of the interactive board with a touch object, the screen surface of the interactive board undergoes bending deformation at the touch portion, resulting in generating elastic waves. The elastic waves diffuse to various positions in the screen of the interactive board, and may even be transmitted to other parts in direct or indirect contact with the screen in the interactive board. The position of the elastic wave transmission includes the position of the piezoelectric sensor.

At this case, the position where the piezoelectric sensor is installed also undergoes bending deformation. The stress generated by bending deformation acts on the surface of the piezoelectric sensor, causing deformation of the piezoelectric sensor, so that charges are generated.

At the same time, due to the presence of a first electrode 212 and a second electrode 213 in the piezoelectric sensor 210, and the piezoelectric structure 211 between the first electrode 212 and the second electrode 213 being an insulator with a high dielectric constant such as a piezoelectric ceramic sheet, the piezoelectric sensor 210 itself is also a capacitor. When the charge fills the piezoelectric capacitor, a voltage is generated at both ends of the piezoelectric sensor 210 to convert mechanical energy into electrical energy.

2. Lead wire

In the elastic wave sensor 200, the first end of the lead wire is connected to the piezoelectric sensor 210, especially the electrode of the piezoelectric sensor 210. The second end of the lead wire is connected to the first holder 230, especially the pin in the first holder 230. The lead wire is used for transmitting elastic wave signals generated by the piezoelectric sensor 210.

The lead wire is generally a flexible wire, that is, a wire with bending characteristics, which has a high fault tolerance for the installation position of piezoelectric sensor 210 and the wiring of the first holder 230, which can improve the convenience of installing and connecting elastic wave sensor 200 in an interactive board, and improve production efficiency.

Furthermore, there are one or more lines in the lead wire for transmitting elastic wave signals, and the number of lines in the lead wire for transmitting elastic wave signals is related to the form of transmitting elastic wave signals.

For example, the form of transmitting elastic wave signals is differential transmission, that is, the elastic wave signal is a differential signal, which is also known as a differential mode signal, and is relative to a common mode signal. The differential signal transmits signals on both lines, with equal amplitudes and opposite phases, thus using a numerical value to represent the difference between two physical quantities.

Then, there are two lines in the lead wire for transmitting elastic wave signals, of which one is connected to the positive electrode (such as the first electrode 212) in the electrode of the piezoelectric sensor 210, and the other is connected to the negative electrode (such as the second electrode 213 located on the first surface 201) in the electrode of the piezoelectric sensor 210.

The above forms of transmitting elastic wave signals and the number of lines are only examples. When this embodiment is implemented, other forms of transmitting elastic wave signals and the number of lines may be set according to the actual situation. For example, the form of transmitting elastic wave signals is single ended transmission, that is, the elastic wave signal is a single ended signal. At this time, a grounded line is connected to the electrode of the piezoelectric sensor, and the difference between the piezoelectric sensor and the ground is detected as an elastic wave signal, etc., which is not limited in this embodiment. Moreover, in addition to the forms of transmitting elastic wave signals mentioned above and number of lines, those skilled in the art may also use other forms of transmitting elastic wave signals and number of lines according to actual requirements, which is not limited in this embodiment.

Different forms of lead wires have different advantages and disadvantages in production, performance, and other aspects. This embodiment may select the corresponding form of lead wire based on comprehensive considerations in production, performance, and other aspects, and then select the process of connecting the lead wire to the piezoelectric sensor 210 (especially the electrode of the piezoelectric sensor 210).

In optional implementation, the lead wire may include at least one of the followings forms:

2.1. First flexible circuit board 220

The lead wire connected to the piezoelectric sensor 210 is a flexible printed circuit (FPC), and for ease of differentiation, the flexible printed circuit is denoted as the first flexible circuit board 220.

The flexible circuit board, also known as soft circuit board and flexible printed circuit board, is a kind of highly reliable and flexible printed circuit board made of polyimide or polyester film and other materials. It has the characteristics of high wiring density, light weight, thin thickness and good flexibility, which is convenient to install in the interactive board.

The first flexible circuit board 220 has at least a line for transmitting elastic wave signals, with a first end of the line connected to the electrode of the piezoelectric sensor 210, and a second end of the line connected to the pin *pin* of the first holder 230.

The first end of the first flexible circuit board 220 has a solder pad, and the solder pad is matched with the electrodes of the piezoelectric sensor 210. The solder pad on the first flexible circuit board 220 may be connected to the electrodes of the piezoelectric sensor 210 using processes such as hot pressing. The hot pressing process may reduce or avoid short circuits between the electrodes of the piezoelectric sensor 210, ensuring consistency in performance.

In order to improve the stability of the connection, when the first end of the first flexible circuit board 220 is connected to the electrode of the piezoelectric sensor 210, a first adhesive 223 may be added between the first end of the first flexible circuit board 220 and the electrode of the piezoelectric sensor 210.

Furthermore, the number of solder pads in the first flexible circuit board 220 is equal to that of electrodes in the piezoelectric sensor 210.

The solder pads on the first flexible circuit board 220 include a first solder pad 221 and a second solder pad 222. The first solder pad 221 of the first flexible circuit board 220 is matched with the first electrode 212 of the piezoelectric sensor 210, and the second solder pad 222 of the first flexible circuit board 220 is matched with the second electrode 213 of the piezoelectric sensor 210, so that the first solder pad 221 is connected to the first electrode 212, and the second solder pad 222 is connected to the second electrode 213.

As shown in Figs. 2D, 2E, and 2F, if the piezoelectric sensor 210 has a first surface 201, a second surface 202, and a third surface 203 adjacent to both the first surface 201 and the second surface 202, and the first electrode 212 covers a part of the first surface 201, and the second electrode 213 covers a part of the first surface 201, the whole second surface 202, and a part of the third surface 203 or the whole third surface 203, respectively, and then, the first surface 201 of the piezoelectric sensor 210 is connected to one end of the first flexible circuit board 220.

On the one hand, a size of the first solder pad 221 matches with the size of the first electrode 212. Matching may refer to the size of the first solder pad 221 being less than or equal to that of the first electrode 212. If the first electrode 212 is rectangular and the first solder pad 221 is also rectangular, the length of the first solder pad 221 is less than or equal to the length of the first electrode 212, and/or the width of the first solder pad 221 is less than or equal to that of the first electrode 212, so that the first solder pad 221 is connected to the first electrode 212.

On the other hand, the size of the second solder pad 222 matches with the size of the second electrode 213 on the first surface 201. Matching may refer to the size of the second solder pad 222 being less than or equal to that of the second electrode 213 on the first surface 201. If the second electrode 213 is rectangular and the second solder pad 222 is also rectangular, the length of the second solder pad 222 is less than or equal to that of the second electrode 213 on the first surface 201, and/or, the width of the second solder pad 222 is less than or equal to that of the second electrode 213 on the first surface 201, so that the second solder pad 222 is connected to the second electrode 213 on the first surface 201.

On the other hand, there is a first gap between the first electrode 212 and the second electrode 213, and a gap between the first solder pad 221 and the second solder pad 222. For ease of differentiation, this gap is referred to as the second gap, and the size of the second gap matches with the size of the first gap. Matching refers to the size of the second gap being less than or equal to that of the first gap. If the first gap is rectangular, the second gap is also rectangular, the length of the second gap is less than or equal to that of the first gap, and the width of the second gap is less than or equal to that of the first gap.

For example, under the conditions of a piezoelectric sensor 210 having a length L of 20mm, a width W of 5mm, and a thickness T of 2mm, on the first surface 201, the length L1 of the first electrode 212 is 17mm, the width W is 5mm, the length L2 of the second electrode 213 is 1mm, the width W is 5mm, and the length L3 of the first gap between the first electrode 212 and the second electrode 213 is 2mm, and the width W is 5mm.

Then, the first solder pad 221 on the first flexible circuit board 220 has a length of 2mm and a width of 3.8mm, the second solder pad 222 has a length of 1mm and a width of 3.8mm, and the second gap between the first solder pad 221 and the second solder pad 222 has a length of 2mm and a width of 3.8mm.

In this example, a first adhesive 223 may be added between the third surface 203 and the first flexible circuit board 220.

In order to facilitate the installation of elastic wave sensors and the connection of elastic wave sensors to electronic components in interactive boards, the first flexible circuit board 220 may be designed as a connected first plate 224 and second plate 225, where the first plate 224 is perpendicular to the second plate 225, and the length of the first plate 224 is smaller than that of the second plate 225, that is, the first flexible circuit board as a whole presents an "L" shape.

The first end of the line in the first flexible circuit board 220 is located on the first plate 224, that is, the piezoelectric sensor 210 is connected to the first plate 224.

The second end of the line in the first flexible circuit board 220 is located on the second plate 225, that is, the first holder 230 is connected to the second plate 225.

In addition to an "L" type, the first flexible circuit board can also be set in other shapes, such as being rectangular, etc., which is not limited in this embodiment.

In addition, with the development of electronic components in interactive boards towards miniaturization and portability, the assembly of electronic components is becoming increasingly intensive, and electromagnetic interference is becoming more apparent.

The first flexible circuit board 220 serves as a connecting wire in electronic components to conduct current and transmit elastic wave signals. When the transmission line of the elastic wave signals is distributed on the outer layer of the first flexible circuit board 220, in order to avoid signal distortion caused by electromagnetic interference during the transmission process of the elastic wave signal, the first flexible circuit board 220 may press a layer of electromagnetic shielding film 226 on the surface of the piezoelectric sensor 210 after pressing the covering film. The electromagnetic shielding film 226 may be a conductive layer, playing a role in shielding external electromagnetic interference, and at the same time, the attenuation of the elastic wave signal transmitted by the line in the first flexible circuit board may also be reduced.

2.2. Single-strand connecting wire 240

The wiring of the piezoelectric sensor 210 is a single-stranded connection wire 240, that is, the single-stranded connection wire is a separate conductive wire. The single-stranded connection wire 240 is a line used for transmitting signals. A first end of the single-stranded connection wire 240 (line) is connected to the electrode of the piezoelectric sensor 210, and the second end of the single-stranded connection wire 240 (line) is connected to the pin *pin* of the first holder 230.

The single-strand connection wire 240 may be made of wire with a larger cross-sectional area, which may be directly welded to the electrode of the piezoelectric sensor 210. The welding process is mature and stable, costs may be saved, and the solder joint strength is high, which may provide higher maximum pulling force (such as the solder joint strength in the horizontal direction ≥4N (Newton), and the solder joint strength in the vertical direction ≥4N), thereby ensuring the stability of the elastic wave sensor 200.

In addition, the single-strand connection wire 240 has good bending performance, making it easy to install in interactive boards.

If the elastic wave signal is a differential signal, the lead wires are two single-stranded connecting wires 240. At this time, different colors may be configured for each single-strand connecting wire 240 to distinguish the wiring.

Furthermore, one single-strand connection wire 240 is welded to the first electrode 212 of the piezoelectric sensor 210, and the other single-strand connection wire 240 is welded to the second electrode 213 of the piezoelectric sensor 210.

In order to enable those skilled in the art to better understand the present disclosure, in this embodiment, an example of using the first flexible circuit board as a lead wire is explained.

3. First holder 230

The second end of the line on the lead wire (such as the first flexible circuit board 220) is connected to a holder, and for ease of differentiation, the holder is denoted as the first holder 230.

In the first holder 230, multiple pins *pin* may be designed based on the characteristics of the elastic wave signal, and the number of pins *pin* is related to the form of transmitting elastic wave signals.

In the optional implementation, in the case of transmitting elastic wave signals in differential form, the first holder 230 includes at least two pins, which are respectively used to transmit two signals (positive signal and negative signal) with equal amplitude and opposite phases in the elastic wave signal.

If the first holder 230 includes two pins to ensure wiring stability, two pins may be used.

Due to the difficulty of securing the two pins, there may be looseness during wiring. Therefore, additional pins may be added to the two pins used for transmitting elastic wave signals, that is, the first holder 230 includes at least four pins, of which two are used for transmitting elastic wave signals in differential form, and the other at least two pins are grounded. The two pins used for transmitting elastic wave signals are arranged in the middle of all pins, that is, the two pins used for transmitting elastic wave signals are arranged by the grounded pins, which may not only shield the signal from the ground to ensure the quality of the elastic wave signal, but also increase the volume of the first holder 230 to facilitate carrying the buckle, thereby preventing the wiring from loosening and ensuring the stability of the wiring.

In one example, as shown in Fig. 2K, the first holder includes six pins, which are arranged in sequence from bottom to top, denoted as the first pin (1), the second pin (2), the third pin (3), the fourth pin (4), the fifth pin (5), and the sixth pin (6).

In this example, the first pin (1), second pin (2), fifth pin (5), and sixth pin (6) are all grounded to GND, the third pin (3) and fourth pin (4) are used to transmit the elastic wave signal generated by the piezoelectric structure in differential form, the third pin (3) is used to transmit the positive signal D+ in the elastic wave signal, and the fourth pin (4) is used to transmit the negative signal D- in the elastic wave signal.

The first pin (1) and the second pin (2) are located on the first side of the third pin (3) and the fourth pin (4), the fifth pin (5) and the sixth pin (6) are located on the second side of the third pin (3) and the fourth pin (4), that is, the first pin (1) and the second pin (2) are located on one edge of the first holder 230, and the fifth pin (5) and sixth pin (6) are located on the other edge of the first holder 230, the third pin (3) and the fourth pin (4) are located in the middle of the first holder 230.

In this embodiment, the elastic wave sensor has high sensitivity in detecting the elastic wave generated by the touch object touching the screen surface of the interactive board, which ensures the quality of the elastic wave signal, provides basic conditions for recognizing the material of the touch object and other services, thereby improving the diversity of touch operations, and enriching the functions of the interactive board.

III. Installation example of elastic wave sensor on interactive board

1. Installation position

Due to the fact that elastic waves may be transmitted in interactive boards, theoretically, elastic wave sensors may be installed at any position on the screen capable of transmitting the generated elastic waves, which may be any position on the screen or any position that has direct or indirect contact with the screen, and may detect the elastic waves generated by the touch object touching the screen surface.

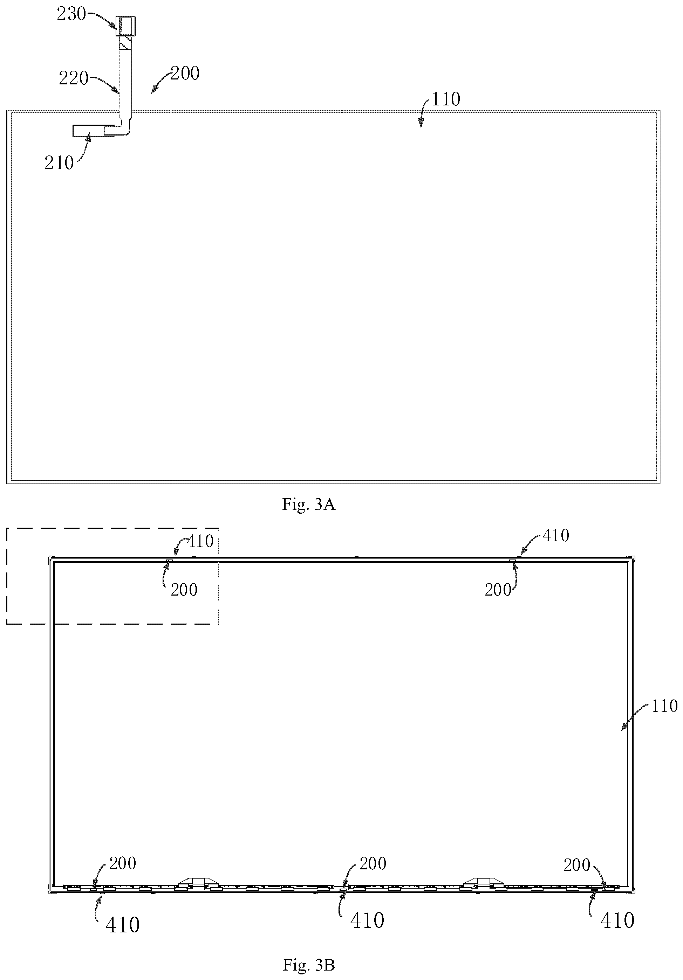

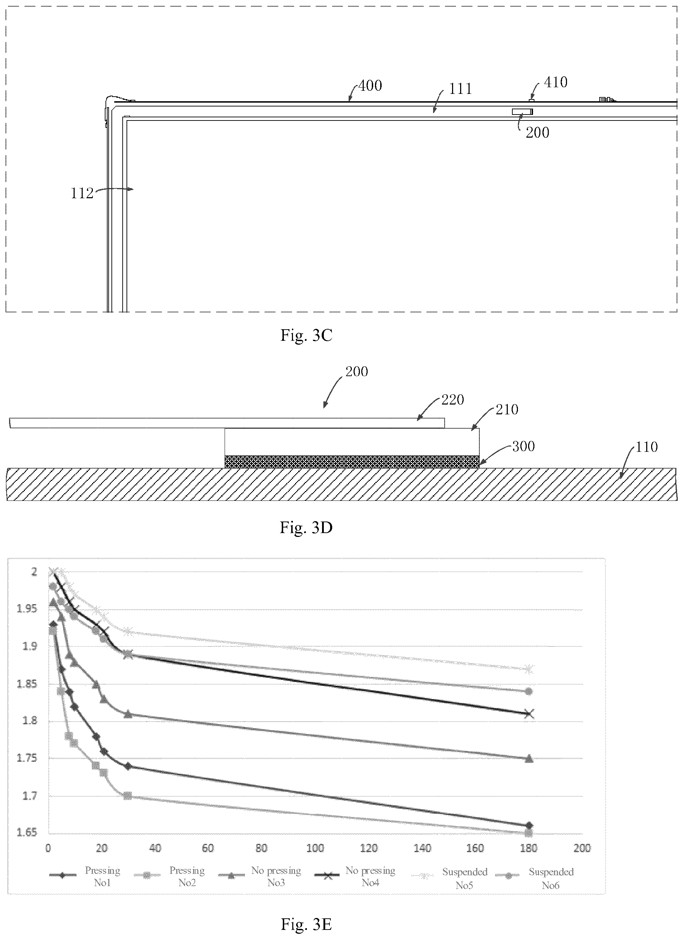

In the optional implementation, as shown in Figs. 3A, 3B, and 3C, the elastic wave sensor 200 may be installed on the back of the screen 110 to directly receive elastic waves transmitted from the surface of the screen 110, thereby improving detection accuracy.

The back of the screen 110 is a surface facing the interior of the interactive board, which is not visible to the user. The screen 110 is mostly a cover plate, which means that elastic wave sensor 200 may be installed on the back of the cover plate.

In theory, when an elastic wave sensor is installed in a center of the back of the screen, its detection accuracy is better. However, at this case, the elastic wave sensor may affect the visible region of the screen, thereby affecting the display effect of the screen.

As shown in Figs. 3A, 3B, and 3C, in order to avoid affecting the display effect of the screen 110, the elastic wave sensor 200 may be installed at the edge of the back of the screen 110 and outside the visible region of the screen.

Furthermore, the edge of the back of the screen 110 and a part of region or the whole region outside the visible region of the screen 110 are covered with the ink 111, which may provide insulation, acid resistance, moisture resistance, and protection. Therefore, the elastic wave sensor 200 may be installed at the edge of the back of the screen 110 and the region outside the visible region of the screen 110 covered with the ink 111.

2. Installation method

As shown in Figs. 3A and 3D, the structure of the elastic wave sensor 200 includes a piezoelectric sensor 210, a lead wire (such as the first flexible circuit board 220), and a first holder 230. The piezoelectric sensor 210 is mainly used to detect elastic waves and generate elastic wave signals, while the lead wire (such as the first flexible circuit board 220) and the first holder 230 are mainly used to transmit elastic wave signals. Therefore, when elastic wave sensor 200 is installed, at least the piezoelectric sensor 210 may be tightly attached to the back of the screen, while the lead wire (such as the first flexible circuit board 220) and the first holder 230 do not require to be tightly attached to the back of the screen.

Furthermore, the first surface 201 of the piezoelectric sensor 210 is connected to a lead wire (such as the first flexible circuit board 220), and thus, the second surface 202 of the piezoelectric sensor 210 is tightly attached to the back of the screen.

In practical applications, there are limitations in the target space available for installing piezoelectric sensors 210 in interactive boards. In this case, in order to reduce changes in the original structure of the interactive board, this embodiment may add a second adhesive 300 between the piezoelectric sensor 210 (especially the second surface 202 of the piezoelectric sensor 210) and the back of the screen 110, so that a second adhesive 300 is presented between the piezoelectric sensor 210 (especially the second surface 202 of the piezoelectric sensor 210) and the back of the screen 110, so as to attach the piezoelectric sensor 210 to the back of the screen 110 of the interactive board. The second adhesive 300 forms an adhesive layer between the piezoelectric sensor 210 (especially the second surface 202 of the piezoelectric sensor 210) and the back of the screen 110 of the interactive board.

When a piezoelectric sensor is pasted, an appropriate amount of the second adhesive may be firstly applied to the piezoelectric sensor 210 (especially the second surface 202 of the piezoelectric sensor 210), and then the side of the piezoelectric sensor 210 coated with a second adhesive is placed at a fixed position on the back of the screen 110, and finally a fixture is used to maintain the pressure of the piezoelectric sensor 210.

Through experimental testing, it has been found that parameters such as the thickness of the adhesive layer, the content of bubbles, and the curing degree have a significant impact on the sensitivity of the piezoelectric sensor. The pressure maintaining operation may ensure that the adhesion is tight and the thickness of the adhesive layer meets the requirements. The adhesion process also needs to ensure that there is less adhesive overflow, and there are no bubbles in the second adhesive water.

In addition, this embodiment requires at least one of the followings requirements for the second adhesive design to meet the sensitivity requirements.

2.1 Installation modulus

This embodiment requires a high Young's modulus of the second adhesive to ensure that the piezoelectric sensor is tightly attached to the back of the screen, ensuring the efficiency of elastic wave transmission from the screen surface to the piezoelectric sensor. The Young's modulus is a measure of the stiffness of a solid under load or its resistance to elastic deformation.

Assuming that the Young's modulus of the second adhesive is low, the second adhesive appears to be too soft and unable to effectively transmit deformation. The deformation variable transmitted to the piezoelectric sensor of the elastic wave sensor significantly decreases, resulting in a decrease in the amplitude (i.e. distortion) of the electrical signal (i.e. elastic wave signal) output by the piezoelectric sensor of the elastic wave sensor, and even the elastic wave cannot be transmitted to the piezoelectric sensor of the elastic wave sensor.

Furthermore, piezoelectric sensors with different Young's moduli may be attached to the back of the screen by using previously adhesive, and the attachment effect may be tested. Based on the experimental results, a threshold is designed for the Young's modulus. When the Young's modulus of the second adhesive is greater than this threshold, it may be considered that the second adhesive may tightly attach the piezoelectric sensor to the back of the screen. For easy identification, this threshold is denoted as the installation threshold.

For example, a mounting threshold is 1GPa (Gigopascals).

2.2 Thickness, Bubbles

Experimental tests have shown that the thickness of the adhesive layer formed by the second adhesive between the piezoelectric sensor and the back of the screen of the interactive board, as well as the content of bubbles inside (a comprehensive parameter reflecting the number and size of bubbles), have a significant impact on the sensitivity of the elastic wave sensor.

The thickness of the adhesive layer is negatively correlated with the sensitivity of the elastic wave sensor, that is, the larger the thickness of the adhesive layer (i.e., the thicker), the poorer the sensitivity of the elastic wave sensor. Conversely, the smaller the thickness of the adhesive layer (i.e., the thinner), the better the sensitivity of the elastic wave sensor.

The content of bubbles in the adhesive layer is negatively correlated with the sensitivity of the elastic wave sensor. That is, the higher the content of bubbles in the adhesive layer, the poorer the sensitivity of the elastic wave sensor. Conversely, the lower the content of bubbles in the adhesive layer, the better the sensitivity of the elastic wave sensor.

In this embodiment, experiments may be conducted on the sensitivity of elastic wave sensors with different thicknesses of adhesive layers in advance. Based on the experimental situation, a threshold may be designed for the thickness of the adhesive layer. When the thickness of the adhesive layer is less than this threshold, it may be considered that the sensitivity of the elastic wave sensor is met. For the convenience of differentiation, this threshold is denoted as the thickness threshold.

For example, the thickness threshold is 150um (micrometers).

In addition, since it is difficult to directly control the content of bubbles in the adhesive layer, this embodiment may use the capacitance change to uniformly conduct conformance testing on the thickness of the adhesive layer and the content of bubbles in the adhesive layer.

The principle of conformance testing is that when a load or a pre-tightening force is applied to the piezoelectric sensor, the equivalent capacitance of the piezoelectric sensor will decrease accordingly.

The conformance testing was carried out for the high content of bubbles in the adhesive layer. The experimental results are as follows:

|  | Sample 1 (nF) | Sample 2 (nF) | Sample 3 (nF) |
|---|---|---|---|
| Capacitance value before being pasted | 2.01 | 1.96 | 2.03 |
| Capacitance value after being pasted | 1.77 | 1.78 | 1.82 |

Sample 1, Sample 2, and Sample 3 are all elastic wave sensors used in this conformance testing. For Sample 1, Sample 2, and Sample 3, the second glue with the high content of bubbles is provided. The second glue is used to paste Sample 1, Sample 2, and Sample 3 to the back of the screen of the interactive board. After the second glue is cured, the thickness of the glue layer formed by the second glue meets the requirements, and the content of bubbles in the glue layer is too high. The value before being pasted may refer to the capacitance value detected before Sample 1, Sample 2, and Sample 3 are pasted onto the back of the screen of the interactive board by using the second adhesive. The value after being pasted may refer to the capacitance value detected after Sample 1, Sample 2, and Sample 3 are pasted onto the back of the screen of the interactive board by using the second adhesive.

Furthermore, for Sample 1, Sample 2, and Sample 3, both before and after being pasted, the probes of LCR (Heinrich Lenz/Capacitor/Resistance) bridges or self-developed circuits may be contacted with the electrodes of the piezoelectric sensor to detect the capacitance value of the piezoelectric sensor at a fixed frequency (such as 1kHz).

The conformance testing was carried out for the case that the adhesive layer was too thick. The experimental results are as follows:

|  | Sample 1 (nF) | Sample 2 (nF) | Sample 3 (nF) | Sample 4 (nF) |
|---|---|---|---|---|
| Capacitance value before being pasted | 2.03 | 2.01 | 2.02 | 2.01 |
| Capacitance value after being pasted | 1.79 | 1.74 | 1.75 | 1.83 |

Sample 1, Sample 2, Sample 3, and Sample 4 are all elastic wave sensors used in this conformance testing. For Sample 1, Sample 2, Sample 3, and Sample 4, the second glue with the acceptable content of bubbles is provided. The second glue is used to paste Sample 1, Sample 2, and Sample 3 to the back of the screen of the interactive board. After the second glue is cured, the adhesive layer formed by the second glue is too thick, and the content of bubbles in the adhesive layer meets the requirements. The value before pasting may refer to the capacitance value detected before Sample 1, Sample 2, Sample 3, and Sample 4 are pasted onto the back of the screen of the interactive board by using the second adhesive. The value after being pasted may refer to the capacitance value detected after Sample 1, Sample 2, Sample 3, and Sample 4 are pasted onto the back of the screen of the interactive board by using the second adhesive.

Furthermore, for Sample 1, Sample 2, Sample 3, and Sample 4, the probes of LCR bridges or self-developed circuits may be in contact with the electrodes of piezoelectric sensors before and after being pasted, or a fixture may be designed to directly connect FFC (Flexible Flat Cable) wires to the first holder on the elastic wave sensor, so as to detect the capacitance value of the piezoelectric sensor at a fixed frequency (such as 1kHz).

The conformance testing was carried out for the thickness of the adhesive layer and the content of bubbles in the adhesive layer to meet the requirements. The experimental results are as follows:

|  | Sample 1 (nF) | Sample 2 (nF) | Sample 3 (nF) | Sample 4 (nF) |
|---|---|---|---|---|
| Capacitance value before being pasted | 2.02 | 1.99 | 1.99 | 2.00 |
| Capacitance value after being pasted | 1.64 | 1.63 | 1.63 | 1.64 |

Sample 1, Sample 2, Sample 3, and Sample 4 are all elastic wave sensors used in this conformance testing. For Sample 1, Sample 2, Sample 3, and Sample 4, the second glue with the content of bubbles that meets the requirements is provided. The second glue is used to paste Sample 1, Sample 2, and Sample 3 to the back of the screen of the interactive board. After the second glue is cured, the thickness of the glue layer formed by the second glue and the content of bubbles in the glue layer meet the requirements. The value before being pasted may refer to the capacitance value detected before Sample 1, Sample 2, Sample 3, and Sample 4 are pasted onto the back of the screen of the interactive board by using the second adhesive. The value after being pasted may refer to the capacitance value detected after Sample 1, Sample 2, Sample 3, and Sample 4 are pasted onto the back of the screen of the interactive board by using the second adhesive.

Furthermore, for Sample 1, Sample 2, Sample 3, and Sample 4, before and after being pasted, the probes of LCR bridges or self-developed circuits may be in contact with the electrodes of the piezoelectric sensor to detect the capacitance value of the piezoelectric sensor at a fixed frequency (such as 1kHz).

From the experimental results of the above conformance testing, it may be found that when the content of bubbles of the adhesive layer is too high or the thickness of the adhesive layer is too large, the load or the pre-tightening force on the piezoelectric sensor is relatively low, so the change of the capacitance value of the piezoelectric structure is relatively small. When the content of bubbles of the adhesive layer and the thickness of the adhesive layer meet the requirements, the capacitance value of the piezoelectric structure significantly decreases and the value tends to stabilize.

In this embodiment, adhesive layers with different thicknesses and contents of bubbles may be pre-set to conduct experiments on the first change in capacitance value and sensitivity of the elastic wave sensor (piezoelectric sensor). A threshold is designed based on the experimental situation. When the first change in capacitance value is greater than this threshold, it may be considered that the thickness of the adhesive layer and the content of bubbles inside the adhesive layer meet the requirements, so as to meet the sensitivity requirements of elastic wave sensors (piezoelectric sensors), for ease of differentiation, this threshold is denoted as the first capacitance threshold.

The first change in capacitance value may refer to the ratio between the difference in the first capacitance difference and the capacitance value of the piezoelectric sensor in the non-installation state. The first capacitance difference refers to the difference obtained by subtracting the capacitance value of the piezoelectric sensor in the installation state from the capacitance value of the piezoelectric sensor in the non-installation state. The non-installation state refers to the difference obtained by pasting the elastic wave sensor (piezoelectric sensor) onto the back of the screen of the interactive board without using the second adhesive, the installation status refers to the use of a second adhesive to paste the elastic wave sensor (piezoelectric sensor) onto the back of the screen of the interactive board.

2.3 Curing degree

The second adhesive generally belongs to AB adhesive (AB adhesive is a nickname for two mixed hardening adhesives, one is the adhesive and the other is the hardening agent, which are mixed to achieve hardening). The curing degree of the adhesive layer may reflect the attachment situation of the elastic wave sensor (piezoelectric sensor). If the thickness of the adhesive layer and the content of bubbles inside the adhesive layer meet the requirements, when the curing degree of the adhesive layer is poor, it may cause poor attachment of elastic wave sensors (piezoelectric sensors), reduce yield, and increase production costs.

In optional implementation, the capacitance change may be used to conduct conformance testing on the curing degree of the adhesive layer.

As shown in Fig. 3E, an elastic wave sensor (piezoelectric sensor) is pasted onto the back of the screen of the interactive board by using a certain second adhesive. The thickness of the adhesive layer formed by the second adhesive and the content of bubbles inside the adhesive layer meet the requirements, simulating different curing degrees.

The horizontal axis of the coordinate axis is time (minutes), and the vertical axis is the capacitance change of the elastic wave sensor (piezoelectric sensor).

Pressing No1 refers to Sample 1, pressing No2 refers to Sample 2, no pressing No3 refers to Sample 3, no pressing No4 refers to Sample 4, suspended No5 refers to Sample 5, and suspended No6 refers to Sample 6.

Both Sample 1 and Sample 2 were pressed together when the elastic wave sensor (piezoelectric sensor) was pasted onto the back of the screen of the interactive board. If a fixture was used to perform a pressure maintaining operation, the curing degree of the adhesive layer was excellent.

Both Sample 3 and Sample 4 were not pressed together when the elastic wave sensor (piezoelectric sensor) was pasted onto the back of the screen of the interactive board. If no fixture was used to perform the pressure maintaining operation, the curing degree of the adhesive layer was ordinary.

Sample 5 and Sample 6 were both suspended when the elastic wave sensor (piezoelectric sensor) was pasted onto the back of the screen of the interactive board, that is, there was a second adhesive in some regions between the elastic wave sensor (piezoelectric sensor) and the back of the screen, and there was no second adhesive in some regions between the elastic wave sensor (piezoelectric sensor) and the back of the screen, the third surface of the elastic wave sensor (piezoelectric sensor) is bonded to the back of the screen, while the third surface of the elastic wave sensor (piezoelectric sensor) is not bonded to the back of the screen, resulting in poor curing of the adhesive layer.

Under conventional experimental conditions (such as temperature, humidity, etc.), the second adhesive of this type reaches surface dryness in about 4 minutes, and it will basically cure in about 2 hours. After 24 hours, it will completely cure. At different time points, the probes of LCR bridges or self-developed circuits may be contacted with the electrodes of the piezoelectric sensor to detect the capacitance value of the piezoelectric sensor at a fixed frequency (such as 1kHz). From the experiment, it may be observed that: the capacitance value of a piezoelectric sensor that meets the installation requirements will be significantly lower than that of a poorly installed piezoelectric sensor.

In this embodiment, experiments may be conducted on the second change in capacitance value of elastic wave sensors (piezoelectric sensors) in different installation states in advance. A threshold is designed based on the experimental situation. When the second change in capacitance value is greater than this threshold, it may be considered that the attachment meets the requirements, that is, the curing degree meets the requirements. For the ease of differentiation, this threshold is denoted as the second capacitance threshold.

The second change in capacitance value may refer to the ratio between a second capacitance difference and the capacitance value of the piezoelectric sensor in the non-installation state. The second capacitance difference refers to the difference obtained by subtracting the capacitance value of the piezoelectric sensor in the cured state from the capacitance value of the piezoelectric sensor in the non-installation state. The non-installation state refers to pasting the elastic wave sensor (piezoelectric sensor) onto the back of the screen of the interactive board without using the second adhesive, the curing state refers to using a second adhesive to paste the elastic wave sensor (piezoelectric sensor) onto the back of the screen of the interactive board, and it is in the curing process.

For the thickness of the adhesive layer, the content of bubbles in the adhesive layer, and the curing degree of the adhesive layer, the capacitance change of the elastic wave sensor (piezoelectric sensor) may be detected. Therefore, in this embodiment, the first and second capacitance thresholds may be unified as capacitance thresholds. When the capacitance value change of the elastic wave sensor (piezoelectric sensor) is greater than the capacitance threshold, the thickness of the adhesive layer, the content of bubbles and the curing degree inside the adhesive layer may be considered to meet the requirements.

The change in capacitance value may refer to the ratio between the capacitance difference and the capacitance value of the piezoelectric sensor in the non-installation state. The capacitance difference refers to the difference obtained by subtracting the capacitance value of the piezoelectric sensor in the installation and curing state from the capacitance value of the piezoelectric sensor in the non-installation state. The non-installation state refers to pasting the elastic wave sensor (piezoelectric sensor) onto the back of the screen of the interactive board without a second adhesive. The installation and curing state refers to pasting the elastic wave sensor (piezoelectric sensor) onto the back of the screen of the interactive board by using a second adhesive, and the preset curing time has been reached, which is the time consumed by the second adhesive curing.

In order to meet the requirements of parameters such as Young's modulus, thickness of adhesive layer, content of bubbles and curing degree within the adhesive layer, the material of the second adhesive may include at least one of the followings:

2.4.1. Epoxy resin adhesive

Epoxy resin adhesive generally refers to an adhesive made with epoxy resin as the main body, and epoxy resin adhesive is generally cured by adding an epoxy resin curing agent.

2.4.2 Polyurethane (PU)

A full name of polyurethane is poly (carbamate), which is a kind of macromolecular compound, including polyester type and polyether type. When polyurethane is used as adhesive, its molecular chain contains carbamate group (-NH-COO-) or isocyanate group (-NCO), resulting in high activity and polarity.

2.4.3 Cyanoacrylate

Cyanoacrylate is a resin belonging to the acrolein group, which is a collective term for a series of substances, such as Methyl-2-cyanoacrylate ($CH_2=C(CN)COOCH_3$).

When the cyanoacrylate adhesive is applied to the surface of an object, the solvent will evaporate, and the water on the surface of the object or from the air (more accurately, the hydroxide ions formed by the water) will cause the monomer to undergo rapid anionic polymerization reaction, forming long and strong chains, sticking the two surfaces together.

The above materials are only examples of the second adhesive. When this embodiment is implemented, other materials may be set for the second adhesive according to the actual situation, which is not limited in this embodiment. Moreover, in addition to the above-mentioned materials, those skilled in the art may also use other materials for the second adhesive according to actual requirements, which is not limited in this embodiment.

3. Installation posture

Due to the differences in dimensions in various directions of rectangular piezoelectric sensors, i.e. the differences in materials in each direction, their sensitivity in each direction will be inconsistent. Therefore, the posture of installing elastic wave sensors (especially piezoelectric sensors) will affect the sensitivity of elastic wave sensors (especially piezoelectric sensors) to detect elastic waves.

Considering that the screens of the interactive board have different shapes, in this embodiment, the posture of the piezoelectric sensor is adjusted for the screens of different shapes to improve the sensitivity of the elastic wave sensor (piezoelectric sensor).

As shown in Fig. 3A, taking the rectangular screen 110 as an example, when the piezoelectric sensor 210 is attached, the length direction of the piezoelectric sensor 210 is the same as that of the screen 110, that is, the long side of the first surface 201 and the long side of the second surface 202 of the piezoelectric sensor 210 are parallel to the long sides of the screen 110, and the short side (i.e. wide) of the first surface 201 and the short side of the second surface 202 of the piezoelectric sensor 210 are parallel to the short sides of the screen 110.

4. Overall distribution

The screen size of the interactive board is generally large, and the electronic whiteboard and document annotation services, ect. provided by interactive boards have a high freedom degree. Users may use a touch object to touch the screen of the interactive board at any coordinates on the screen surface to trigger touch operations (such as clicking on icons, writing handwriting, etc.), and the position of the elastic wave sensor installed on the screen is predetermined, the posture of an elastic wave sensor is predetermined, and the sensitivity and accuracy of detecting elastic wave signals generated at different coordinates on the screen of an interactive board vary depending on the given position and posture of the elastic wave sensor.

In general, the closer the coordinates that trigger the touch operation to the elastic wave sensor, the higher the accuracy of the elastic wave signal detected by the elastic wave sensor. Conversely, the farther the coordinates that trigger the touch operation to the elastic wave sensor, the lower the accuracy of the elastic wave signal detected by the elastic wave sensor.

It should be noted that the coordinates that trigger the touch operation being too close to the elastic wave sensor may cause the elastic wave signal generated by the elastic wave sensor to exceed the maximum voltage of the operational amplifier and leads to distortion.

While a certain sensitivity and accuracy is maintained, it may be considered that there is a detection range for the detection of elastic wave signals by elastic wave sensors. Therefore, based on the relationship between the detection range and the screen of the interactive board, the number and positions of elastic wave sensors installed on the screen of the same interactive board may be determined.

Considering that users may use a touch object to touch the screen of an interactive board at any coordinates on the screen surface, and a part of the screen located in an invisible region (such as a region blocked by a frame) is limited, the surface area of the screen of the interactive board represents the area where users touch the screen with the touch object.

In general, the number of elastic wave sensors is positively correlated with the surface area of the screen of the interactive board. That is, the larger the surface area of the screen of the interactive board, the more elastic wave sensors there are. Conversely, the smaller the surface area of the screen of the interactive board, the fewer the number of elastic wave sensors. At least one elastic wave sensor is installed on the back of the screen of the interactive board, that is, the number of elastic wave sensors should be at least one.

As shown in Fig. 3B, taking the rectangular screen 110 as an example, the number of elastic wave sensors 200 is five, and the elastic wave sensors 200 are located respectively:

on the top left side of the back of the screen 110, on the top right side of the back of the screen 110, on the bottom left side of the back of the screen 110, on the bottom middle of the back of screen 110, and on the bottom right side of the back of the screen 110.

The projection of the elastic wave sensor 200 located on the top left side of the back of the screen 110, the projection of the elastic wave sensor 200 located on the top right side of the back of the screen 110, the projection of the elastic wave sensor 200 located on the bottom left side of the back of the screen 110, the projection of the elastic wave sensor 200 located in the middle of the bottom of the back of the screen 110, and the projection of the elastic wave sensor 200 located on the bottom right side of the back of the screen 110 do not overlap in the horizontal direction, but are staggered, that is, the projection of the elastic wave sensor 200 located on the top left side of the back of the screen 110 is between the projection of the elastic wave sensor 200 located on the bottom left side of the back of the screen 110 and the projection of the elastic wave sensor 200 located in the middle of the bottom of the back of screen 110, the projection of the elastic wave sensor 200 located on the top right side of the back of the screen 110 is between the projection of the elastic wave sensor 200 located on the bottom right side of the back of the screen 110 and the projection of the elastic wave sensor 200 located in the middle of the bottom of the back of the screen 110, so that the detection range of each elastic wave sensor 200 is staggered, covering the screen 110 of the interactive board with the minimum number of elastic wave sensors 200, thereby reducing costs.

In this example, the top left side of the back of the screen 110, the top right side of the back of the screen 110, the bottom left side of the back of the screen 110, the bottom middle of the back of the screen 110, and the bottom right side of the back of the screen 110 all belong to a relative region, which may be set according to the actual situation of the screen 110 and elastic wave sensor 200, which is not limited in this embodiment.

For example, on the back of the screen 110 in an interactive board, coordinates with a distance less than the preset first distance threshold from the top side (top edge) of the screen 110 may be divided into the top of the back of the screen 110, or the region of the ink 111 near the top side of the screen 110 may be directly denoted as the top of the back of the screen 110, and the top of the back of the screen 110 may be evenly divided into two regions to distinguish the top left side of the back of the screen 110 and the top right side of the back of the screen 110. The elastic wave sensors 200 are installed near the center of the top left side of the back of the screen 110 and near the center of the top right side of the back of the screen 110.

Coordinates with a distance less than the preset second distance threshold between the bottom side (bottom edge) of the back of the screen 110 may be divided into the bottom of the back of the screen 110, or the region of the ink 111 near the bottom side of the back of the screen 110 may be directly denoted as the bottom of the back of the screen 110, and the bottom of the back of the screen 110 may be evenly divided into three regions to distinguish the bottom left side of the back of the screen 110 and the bottom middle of the back of the screen 110, and the bottom right side of the back of screen 110. The elastic wave sensors 200 are installed near the center of the bottom left side of the back of the screen 110, near the center of the bottom middle of the back of the screen 110, and near the center of the bottom right side of the back of the screen 110.

The number of elastic wave sensors mentioned above and their installation positions are only examples. When this embodiment is implemented, the number and installation positions of other elastic wave sensors may be set according to the actual situation. For example, the number of elastic wave sensors is 6, which are respectively installed on the top left side of the back of the screen, on the top middle of the back of the screen, on the top right side of the back of the screen, on the bottom left side of the back of the screen, in the middle of the bottom of the back of the screen, and on the right side of the bottom of the back of the screen. For another example, the number of the elastic wave sensors are four, which are respectively installed on the top left side of the back of the screen, on the top right side of the back of the screen, on the bottom left side of the back of the screen, on the bottom right side of the back of the screen, and the like, which is not limited in this embodiment. Moreover, in addition to the number their installation positions of elastic wave sensors and mentioned above, those skilled in the art may also set the number and their installation positions of other elastic wave sensors according to actual requirements, which is not limited in this embodiment.

IV. Connection specifications for elastic wave sensors

In this embodiment, as shown in Fig. 4D, an elastic wave processor 108 is installed in the interactive board. The elastic wave processor 108 is a MCU matched with an elastic wave sensor, and the elastic wave processor may provide at least material recognition services for the touch object based on the elastic wave signal, that is, recognition of the material of the touch object based on the elastic wave signal.

There are USB components between the central processing unit 106 and the elastic wave processor 108, such as USB HUB (hub), USB switch, USB Rediver (signal relay), etc. The central processing unit 106 may serve as an HID, and the elastic wave processor 108 communicates with the central processing unit 106 through USB components. When the elastic wave processor 108 generates information about the material of the touch object, the material and other information of the touch object are transmitted to the central processing unit 106, so as to report the material and other information of the touch object to the upper application of the operating system.

When a user triggers a touch operation using a touch object, the infrared signal and elastic wave signal are specific to the characteristics of the same touch object in different dimensions. Therefore, there is a certain correlation between the infrared signal and elastic wave signal, which may be mutually referenced and corrected. In the case where both the infrared processor 107 and the elastic wave processor 108 may communicate with the central processor 106, the central processing unit 106 may perform logical processing on touch point data or infrared signals provided by the infrared processor 107, information that may assist in processing elastic wave signals is generated, and this information is fed back to the elastic wave processor 108 to assist the elastic wave processor 108 in processing elastic wave information, thereby improving the computing ability and service quality of the elastic wave processor 108.

At an initial stage of the new material recognition service for the interactive board, both the elastic wave processor 108 and the infrared processor 107 are independent electronic components, which reduces the coupling between various functional systems of the interactive board, avoids the problem of thread preemption, and ensures the normal operation of the interactive panel as much as possible.

The infrared processor 107 is provided with logic code for processing infrared signals, and the elastic wave processor 108 is provided with logic code for processing elastic wave signals. Assuming that the elastic wave processor 108 and the infrared processor 107 are merged into the same electronic component, that is, the elastic wave processor 108 and the infrared processor 107 are different logical functional units in the same electronic component.

One of the development efforts to merge the elastic wave processor 108 with the infrared processor 107 is to merge the logic code for processing infrared signals with the logic code for processing elastic wave signals.

After a long period of iteration, the logic code for processing infrared signals has become relatively mature and stable, while the logic code for processing elastic wave signals is a newly developed logic code that lacks practical verification and may have unknown vulnerabilities *Bug,* which has already brought unknown risks to the operation of the interaction board.

In the process of merging the logic code for processing infrared signals with the logic code for processing elastic wave signals, not only will changes be made to the logic code for processing infrared signals, which may introduce unknown vulnerabilities *Bug,* but it also increases the development of the logic code for processing elastic wave signals, bringing more unknown risks to the operation of interactive boards.

Therefore, the elastic wave processor 108 and the infrared processor 107 are independent of each other, that is, the logical code for processing elastic wave signals in the elastic wave processor 108 is independent of the logical code for processing infrared signals in the infrared processor 107, which may avoid making changes to the logical code for processing infrared signals, avoid introducing vulnerabilities *Bug* caused by changing the logical code for infrared signals, ensure the stability of the interactive board, reduce development workload, and reduce development costs.

With the continuous iterative development of the interactive board and the continuous reduction of vulnerability

*Bug,* the elastic wave processor 108 and the infrared processor 107 may be combined into the same electronic component under the condition of ensuring the stable operation of the interactive board, that is, the elastic wave processor 108 and the infrared processor 107 are different logical function units in the same electronic component (such as MCU), and the communication and scheduling between the logical function units are convenient, thereby facilitating the synchronization of functions of the interactive board and improving the performance of interactive boards, which is limited in this embodiment.

In order to accurately collect the elastic wave signals generated by touch objects on the screen surface of the interactive board, different elastic wave sensors are installed at different positions on the back of the screen of the interactive board.

Assuming that FPC and other wires are used to connect these elastic wave sensors to the elastic wave processor, and these wires are pasted on the frame of the interactive board or the back of the screen of the interactive board, this layout manner will have the following problems:

(1) As shown in Fig. 3C, due to certain limitations in the size of the ink 111 on the back of the screen of the interactive board and the appearance of the liquid crystal panel (Open Cell, OC) 112, the size of the elastic wave sensor (especially the piezoelectric sensor 210) is limited, resulting in a relatively small lead wire (such as the first flexible circuit board) on the elastic wave sensor and a relatively small first holder for wiring, which may lead to assembly problems, the wires used to connect elastic wave sensors are difficult to access and have low manufacturability.
(2) Due to certain limitations in the overall layout of the interactive board, if the wire runs from the edge of the frame, it lead wires to low production efficiency.

In response to the problem of difficult access and wiring of lead wires (such as the first flexible circuit board) in elastic wave sensors, this embodiment proposes the following new layout manner applied to elastic wave sensors on interactive boards.

1. Wiring inside the frame

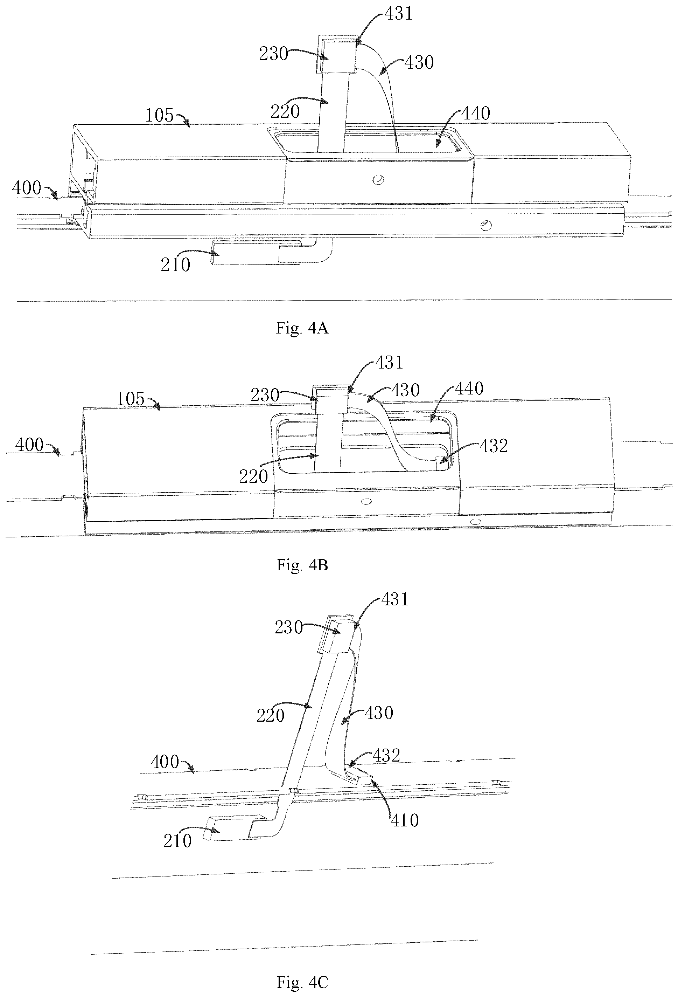

As shown in Figs. 4A, 4B, 4C, 4D, and 4E, multiple printed circuit boards 400 are arranged in the frame 105 of the interactive board. The printed circuit boards 400 are connected through flexible circuit boards, and for ease of differentiation, the flexible circuit board is denoted as the second flexible circuit board 400. The printed circuit board and the second flexible circuit board 400 form a transmission link for transmitting elastic wave signals, which has high connection reliability and ensures the stability of elastic wave signal transmission, and the structure is simple, which may improve production efficiency.

As an example, for a rectangle shaped frame, at least one independent printed circuit board 400 may be arranged in each frame 105 (i.e. the first frame 101, second frame 102, third frame 103, and fourth frame 104 in Fig. 1C). If there are at least two independent printed circuit boards in the same frame 105, the adjacent printed circuit boards 400 in the same frame 105 are connected through a second flexible circuit board 400. If two printed circuit boards 400 are located in the adjacent frame 105 (the left side of the first frame 101 is adjacent to the second frame 102, the right side of the first frame 101 is adjacent to the fourth frame 104, the left side of the third frame 103 is adjacent to the second frame 102, and the right side of the third frame 103 is adjacent to the fourth frame 104), the two printed circuit boards 400 are connected through a second flexible circuit board 400.

It should be noted that if the positions of the elastic wave processor 108 and the elastic wave sensor 200 are predetermined, a transmission link may be constructed between the elastic wave processor 108 and the elastic wave sensor 200, which is usually the shortest path transmission link, so as to reduce interference with the elastic wave signal and ensure the quality of the elastic wave signal. At this time, there is a transmission direction of the elastic wave signal on the transmission link. For each printed circuit board 400, the direction of connection is along the transmission direction of the elastic wave signal, that is, along the transmission direction of the elastic wave signal, the previous printed circuit board 400 is connected to the next printed circuit board 400 through a second flexible circuit board 400.

For example, assuming that the elastic wave processor 108 is located on the rightmost printed circuit board 400 of the third frame 103, two transmission links may be constructed for this.

The first transmission link and its transmission direction are:

S1. transmitting from the printed circuit board 400 located on the leftmost side of the first frame 101 to the printed circuit board 400 located on the rightmost side of the first frame 101;
S2. transmitting from the printed circuit board 400 located on the rightmost side of the first frame 101 to the printed circuit board 400 located on the top of the fourth frame 104;
S3. transmitting from the printed circuit board 400 located at the top of the fourth frame 104 to the printed circuit board 400 located at the bottom of the fourth frame 104; and

S4. transmitting from the printed circuit board 400 located at the bottom of the fourth frame 104 to the printed circuit board 400 located at the rightmost side of the third frame 103.

The second transmission link and its transmission direction are:

S1. transmitting from the printed circuit board 400 located at the top of the second frame 102 to the printed circuit board 400 located at the bottom of the second frame 102;
S2. transmitting from the printed circuit board 400 located at the bottom of the second frame 102 to the printed circuit board 400 located at the leftmost side of the third frame 103; and
S3. transmitting from the printed circuit board 400 located on the leftmost side of the third frame 103 to the printed circuit board 400 located on the rightmost side of the third frame 103.

For the first transmission link, the printed circuit board 400 located on the rightmost side of the first frame 101 is connected to the printed circuit board 400 located on the top of the fourth frame 104 through a second flexible circuit board 400, and the printed circuit board 400 located on the bottom of the fourth frame 104 is connected to the printed circuit board 400 located on the rightmost side of the third frame 103 through the second flexible circuit board 400.

For the second transmission link, the printed circuit board 400 located at the bottom of the second frame 102 and the printed circuit board 400 located at the leftmost side of the third frame 103 are connected through the second flexible circuit board 400.

In addition, the printed circuit board 400 located on the leftmost side of the first frame 101 is not connected to the printed circuit board 400 located on the top of the second frame 102 through the second flexible circuit board 400.

In this example, the first and second transmission links may coexist in the interactive board, thus covering the interactive board. Considering the differences in the number and distribution of elastic wave sensors, both the first and second transmission links may be fully used or partially used, which is not limited in this embodiment.

The above transmission links are only examples. When this embodiment is implemented, other transmission links may be arranged based on the actual number and distribution of elastic wave sensors, which is not limited in this embodiment. Moreover, in addition to the above-mentioned transmission links, those skilled in the art may also use other transmission links according to actual requirements, which is not limited in this embodiment.

In the original design of the interactive board, these printed circuit boards are arranged with infrared emitters and infrared receivers, provided with at least one lines for transmitting infrared signals, and a circuit for preprocessing infrared signals. For ease of differentiation, this circuit is denoted as an infrared line.

In this embodiment, at least one line for transmitting elastic wave signals may be added to the printed circuit board on the basis of the original design. For ease of differentiation, this line is denoted as an elastic wave line, which is ultimately connected to the elastic wave processor. The elastic wave line is located on the printed circuit board, which may greatly protect the elastic wave signal and greatly reduce interference as compared with external wiring. Not only does it have high stability, but it may also reduce the use of external wires and reduce costs. In addition, the fixed wiring of elastic wave lines on printed circuit boards may ensure consistency.

As shown in Figs. 3B and 3C, an elastic wave line on a certain printed circuit board 400 provides an interface 410 to the outside. The elastic wave sensor 200 is connected to the elastic wave line on the printed circuit board 400, so that after generating the elastic wave signal, the elastic wave sensor 200 may be transmitted it to the elastic wave processor through the elastic wave line.

In the same printed circuit board, the infrared line and the elastic wave line are independent of each other. In addition, the infrared line and the elastic wave line do not overlap in parallel, and the infrared line and the elastic wave line are isolated by a ground wire, thereby reducing the interference of the infrared signal on the elastic wave signal and reducing the noise of the elastic wave signal.

In this embodiment, an elastic wave circuit is added to the printed circuit board of the frame, allowing the wiring of the elastic wave sensor to be carried out within the frame, improving the manufacturability of the interactive board machine and thereby improving the production efficiency of the interactive board.

In the case where both the elastic wave processor 108 and the infrared processor 107 are independent electronic components, the elastic wave processor 108 and the infrared processor 107 may be installed on different printed circuit boards 400 or on the same printed circuit board 400, which is not limited in this embodiment.

In the case where the elastic wave processor 108 and the infrared processor 107 are installed on the same printed circuit board 400, the elastic wave processor 108 and the infrared processor 107 may be installed on the printed circuit board 400 belonging to the motherboard. Generally, in order to facilitate communication between the motherboard and other electronic components of the interactive board (especially the central processing unit 106), this motherboard is typically a printed circuit board 400 located on the rightmost side of the ground side (i.e. the third frame 103) in an interactive board.

At this time, the elastic wave processor 108 and the infrared processor 107 may be connected through serial ports, I2C (Inter Integrated Circuit Bus), SPI (Serial Peripheral Interface), etc. Therefore, the elastic wave processor 108 and the infrared processor 107 may communicate through GPIO (General Purpose Input/Output Port) and other manners, the elastic wave processor 108 and infrared processor 107 may achieve high accuracy and processing efficiency through certain coordination and collaboration.

2. Holder connection manner

As shown in Figs. 4A, 4B, 4C, 4D, and 4E, in order to allow the elastic wave sensor 200 to be connected to the printed circuit board 400 inside the frame 105, this embodiment adds an intermediate opening 440 and a corresponding cover body 441 in the profile of the frame 105. The cover body 441 may be detachably closed on the surface of the opening 440. For example, if the size of the cover body 441 is slightly larger than that of the surface of the opening 440, the cover body 441 may be manually inserted into the surface layer of the opening 440 and the cover body 441 may be manually removed. For another example, a buckle is arranged between the cover body 441 and the surface layer of the opening 440, and the buckle may lock the cover body 441. For still another example, the surface layer of the opening 440 is provided with holes, which may be aligned with screws to install the cover body 441, and the like.

The number of interfaces 410 and openings 440 on printed circuit board 400 is the same as that of elastic wave sensors 200. The interfaces 410 and openings 440 on printed circuit board 400 correspond one-to-one with elastic wave sensors 200.

These three are arranged in adjacent ranges, so that the elastic wave sensor 200 may be connected to the interface 410 on the printed circuit board 400 through the opening 440.

Taking a rectangular screen as an example, as shown in Fig. 3B, the number of interfaces 410 on printed circuit board 400 is five, located:

on the left side of the sky side (within the first frame) printed circuit board 400, on the right side of the sky side (within the first frame) printed circuit board 400, on the left side of the ground side (within the third frame) printed circuit board 400, in the bottom middle of the ground side (within the third frame) printed circuit board 400, and on the bottom right side of the ground side (within the third frame) printed circuit board 400.

Correspondingly, the number of openings 440 is five, located:
on the left side of the sky side (first frame), on the right side of the sky side (first frame), on the left side of the ground side (third frame), in the middle of the ground side (third frame), and on the right side of the ground side (third frame).

Correspondingly, the number of elastic wave sensors 200 is five, located:
on the top left side of the back of the screen, on the top right side of the back of the screen, on the bottom left side of the back of the screen, in the bottom middle of the back of the screen, on the bottom right side of the back of the screen.

Then, the installation relationship of these three is as follows:

the elastic wave sensor 200 on the top left side of the back of the screen passes through the opening 440 on the left side of the sky side (first frame) and is connected to the interface 410 on the left side of the printed circuit board 400 on the sky side (first frame);
the elastic wave sensor 200 on the top right side of the back of the screen passes through the opening 440 on the right side of the sky side (first frame) and is connected to the interface 410 on the right side of the printed circuit board 400 on the sky side (first frame);
the elastic wave sensor 200 on the bottom left side of the back of the screen passes through the opening 440 on the left side of the ground side (third frame) and is connected to the interface 410 on the left side of the printed circuit board 400 on the ground side (third frame);
the elastic wave sensor 200 at the bottom middle of the back of the screen passes through the opening 440 in the middle of the ground side (third frame) and is connected to the interface 410 in the middle of the ground side (third frame) printed circuit board 400;
the elastic wave sensor 200 on the bottom right side of the back of the screen passes through the opening 440 on the right side of the ground side (third frame) and is connected to the interface 410 on the right side of the printed circuit board 400 on the ground side (within the third frame).

Considering that in order to improve the sensitivity of detecting elastic wave signals, the posture of the installation of elastic wave sensor 200 will be adjusted, that is, the length direction of the piezoelectric sensor 200 is the same as that of the screen. In order to facilitate the connection of elastic wave sensor 200 to the printed circuit board 400 inside the frame 105, the lead wires in elastic wave sensor 200 are easy to fold and bend, and under the condition where the position of the opening is given, the position requirements for installing elastic wave sensors (piezoelectric sensors) are not high. Taking the first flexible circuit board as an example, the first flexible circuit board is L-shaped, the shorter first plate is used to connect to the piezoelectric sensor, and the longer second plate extends into the opening 440 and connects to the interface 410 on the printed circuit board 400 inside the frame 105. Therefore, the projection of opening 440 in the horizontal direction and the projection of elastic wave sensor 200 in the horizontal direction may partially or completely overlap, or there may be some misalignment, and the two do not overlap, which is not limited in this embodiment.

Furthermore, there are limitations on the width of the profile of the frame 105. For example, the width of the profile of the frame 105 of a certain interactive board is 25.25mm. In order to ensure the overall strength of the profile, the profile of the frame 105 does not increase the opening 440 on the entire surface. Generally, a local opening 440 is added in the middle of the profile of the frame 105. At this time, the size of the opening 440 is limited. For example, in the profile of the frame 105 of the interactive board, an opening 440 having a rectangular shape and a size of 40mm × 14.6mm may be added.

Arranging the interface 410 on printed circuit board 400 inside the frame 105, technicians on the production line usually manually connect elastic wave sensor 200 to interface 410 on printed circuit board 400. However, the thickness of the fingers of technicians on the production line is generally greater than 15mm, making it difficult to extend their fingers into the profile of the frame 105 through the opening 440. Even if the technicians on the production line forcefully extend their fingers into the profile of the frame 105 through the opening 440, not only is it easy to cut hands and cause scratches, but the small movable space inside the profile of the frame 105 makes it difficult to operate, makes it difficult to connect elastic wave sensor 200 to interface 410 on printed circuit board 400, which results in difficulty in ensuring the quality and efficiency of installing elastic wave sensor 200, and also makes subsequent testing difficult.

In comparison, this embodiment adds a flexible circuit board to the interface 410 of the printed circuit board 400 for the elastic wave sensor 200. For ease of differentiation, the flexible circuit board is denoted as the third flexible circuit board 430.

On the one hand, the first end of the third flexible circuit board 430 is connected to an interface on the printed circuit board 400 to access an elastic wave line.

Furthermore, for the convenience of installation and maintenance, the connection manner between the third flexible circuit board 430 and the interface 410 on the printed circuit board is to use a holder, that is, the first end of the third flexible circuit board 430 is provided with a third holder 432, the interface 410 on the printed circuit board 400 is provided with a fourth holder 411, the fourth holder 411 is connected to the elastic wave line, and the third holder 432 is matched with the fourth holder 411. Generally, the third holder 432 is a male port, the fourth holder 411 is a female port. The third holder may also be a female port, and the fourth holder is a male port, which is not limited in this embodiment.

The third holder 432 of the third flexible circuit board 430 has been pre-connected to the fourth holder 411 on the printed circuit board 400 at the upstream node of the production line, and the cover body 441 has been covered.

On the other hand, the second end of the third flexible circuit board 430 is provided with a second holder 431, which is matched with the first holder 230. Generally, the first holder 230 is a male port, and the second holder 431 is a female port. The first holder 230 may also be a female port, and the second holder 431 is a male port, which is not limited in this embodiment.

During the installation process, the third flexible circuit board 430 is generally located inside the profile of the frame 105, and technicians on the production line may open the cover body 441.

On the one hand, the piezoelectric sensor 210 of the elastic wave sensor 200 is installed behind the back of the screen. The lead wire (such as the first flexible circuit board 220) and the first holder 230 are passed through the opening 440 from bottom to top, and a portion of the lead wire (such as the first flexible circuit board 220) and the first holder 230 are placed outside the profile of the frame 105.

On the other hand, tweezers and other tools are used to pick out the third flexible circuit board 430, and a part of the third flexible circuit board 430 (including the second holder 431) is placed outside the profile of the frame 105.

At this time, technicians on the production line may connect the first holder 230 of the elastic wave sensor 200 to the second holder 431 of the third flexible circuit board 430 outside the profile of the frame 105. After installation is completed, the lead wire (such as the first flexible circuit board 220), the third flexible circuit board 430, and the interconnected first and second holders 230 and 431 are plugged back into the profile of the frame 105, and cover the cover body 441.

In this embodiment, technicians on the production line may connect the first holder of the elastic wave sensor to the second holder of the third flexible circuit board outside the profile of the frame, thereby connecting the elastic wave sensor to the printed circuit board inside the frame. This greatly simplifies the operation of connecting the elastic wave sensor to the printed circuit board inside the frame when the profile size of the frame is limited, thereby ensuring the quality of wiring, and improving production efficiency.

The third flexible circuit board is easy to fold and bend, and the requirement for the installation position of the elastic wave sensor is not high when the position of the opening is given. Moreover, when the infrared touch system encounters abnormalities in daily use, the frame is often disassembled for maintenance, while the lead wires (such as the first flexible circuit board) and the third flexible printed circuit are both easy to disassemble. When the frame is disassembled, the lead wire (such as the first flexible circuit board) is simply separated from the third flexible circuit board. As compared with directly fixing it on the frame, the disassembly of the frame and maintenance are convenient, thereby ensuring overall yield.

V. Pre-processing circuit of elastic wave sensor

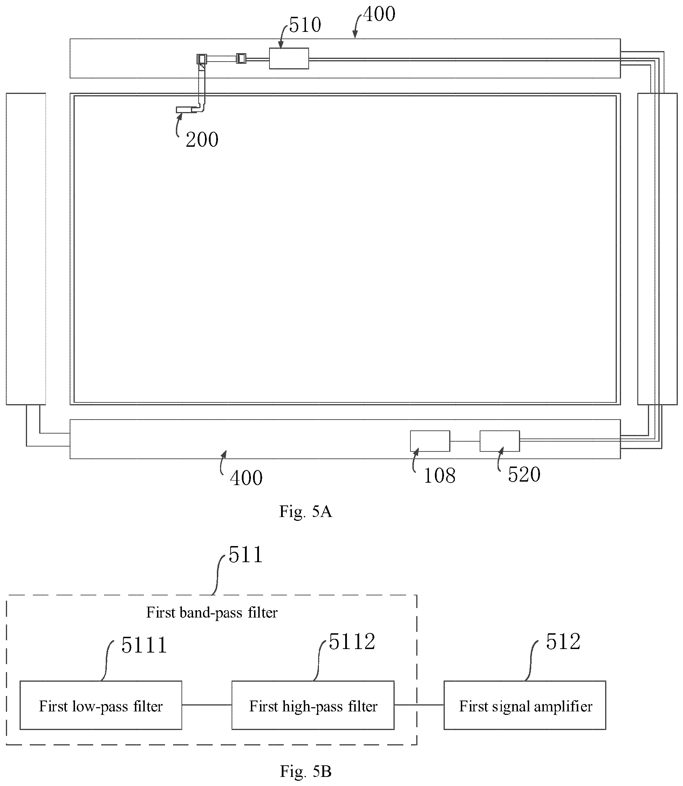

As shown in Fig. 5A, the elastic wave sensor 200 generates an elastic wave signal, which is transmitted to the elastic wave processor 108 through the elastic wave line in the printed circuit board 400 inside the frame. During this transmission process, the transmission link from the elastic wave sensor 200 to the elastic wave processor 108 is long, and there is some signal interference during the transmission process. In this embodiment, the following multi-level preprocessing circuits may be designed on this transmission link, so as to ensure the quality of elastic wave signals and facilitate the execution of material recognition services or other services by elastic wave processors.

1. Primary preprocessing circuit 510

In this embodiment, a preprocessing circuit is provided on the elastic wave circuit where the elastic wave sensor 200 is connected to the printed circuit board 400. For ease of differentiation, the preprocessing circuit is denoted as the primary preprocessing circuit 510, which is located on the elastic wave line at one end far from the elastic wave processor 108 and belongs to the entrance end of the transmission link for transmitting elastic wave signals.

In the optional implementation, the input end of the primary preprocessing circuit 510 is electrically connected to the output end of the elastic wave sensor (such as the first holder), used for first filtering processing of the elastic wave signal output by the elastic wave sensor, and amplifying the elastic wave signal after the first filtering processing.

Due to the dense electronic components around the transmission link of the elastic wave line, noise may be introduced into the elastic wave signal on the transmission link. However, filtering and amplifying the elastic wave signal to a certain extent at the entrance of the transmission link may reduce the amplification factor in the secondary preprocessing circuit 520, while ensuring the same valid signal amplification factor, reducing the amplification factor of the noise, and improving the overall signal-to-noise ratio.

The primary preprocessing circuit 510 does not change the transmission form of the elastic wave signal. If the elastic wave signal input to the primary preprocessing circuit 510 is a differential signal, the elastic wave signal output to the primary preprocessing circuit 510 remains a differential signal.

In the case where the elastic wave signal is a differential signal, the primary preprocessing circuit 510 performs a first filtering process on the positive signal in the elastic wave signal, amplifies the positive signal after the first filtering process, and performs a first filtering process on the negative signal in the elastic wave signal, and amplifies the negative signal after the first filtering process.

In terms of optional implementation, as shown in Fig. 5B, the primary preprocessing circuit 510 may include the following structure:

1.1. First band-pass filter 511

The first band-pass filter 511 belongs to a band-pass filter, which refers to a filter that may pass through frequency components within a certain frequency range but attenuate frequency components from other ranges to an extremely low level.

In this embodiment, the input end of the first band-pass filter 511 is the input end of the primary preprocessing circuit 510. The first band-pass filter 511 is used to filter the signals outside the first pass-band in the elastic wave signal. These signals are generally noise and invalid elastic wave signals, so that the signals within the first pass-band in the elastic wave signal may pass through. These signals are generally valid elastic wave signals.

When the elastic wave signal is a differential signal, the first band-pass filter 511 is used to filter out the signals outside the first pass-band in the positive signals of the elastic wave signal to cause the signals inside the first pass-band in the positive signals of the elastic wave signal to pass through, and filter out the signals outside the first pass-band among the negative signals of the elastic wave signal to cause the signals inside the first pass-band among the negative signals of the elastic wave signal to pass through.

In practical applications, the noise in interactive boards includes low-frequency signals and high-frequency signals.

The noise belonging to low-frequency signals includes power frequency noise inside the interactive board machine and noise generated during screen refresh. Power frequency noise generally occurs around 50Hz (Hz), and the noise generated during screen refresh generally occurs around 60Hz.

The noise belonging to high-frequency signals includes power supply noise in interactive boards, TCON (Timing Controller) noise, etc.

After repeated experimental demonstration, when users touch the screen surface with conventional touch objects such as styluses, hands, etc., the energy of the elastic wave generated is mainly concentrated in 100Hz-5kHz. In order to make the characteristics in the elastic wave signal not affected by the first pass-band with the first band-pass filter as far as possible, it should ensure that the first pass-band of the first band-pass filter 511 is within the range of valid elastic wave signals, therefore, this embodiment may set the first pass-band as 1kHz-40kHz, that is, the upper limit Fl of the first pass-band is 40kHz, and the lower limit Fh of the first pass-band is 1kHz.

As shown in Fig. 2H, the frequency spectrum of elastic wave signal gradually tends to be flat. Therefore, the center frequency of the first pass-band is set at more than 10kHz, preferably about 14kHz, which may be kept as flat as possible, so that the change of the magnification of the first signal amplifier 512 has less impact on the characteristics of the elastic wave signal itself.

Furthermore, the first band-pass filter 511 includes the following structure:

1.1.1 First low-pass filter 5111

The input end of the first low-pass filter 5111 is the input end of the first band-pass filter 511. The first low-pass filter 5111 is used to filter out the signals higher than the upper limit value of the first pass-band in the elastic wave signal to cause the signals lower than the upper limit value of the first pass-band in the elastic wave signal to pass through.

When the elastic wave signal is a differential signal, the first low-pass filter 5111 is used to filter out the positive signal of the elastic wave signal higher than the upper limit value of the first pass-band to cause the positive signal of the elastic wave signal lower than the upper limit value of the first pass-band to pass through, and filter out the negative signal of the elastic wave signal higher than the upper limit value of the first pass-band to cause the signal lower than the upper limit value of the first pass-band in the negative signal of the elastic wave signal to pass through.

1.1.2. First high-pass filter 5112

The first high-pass filter 5112 is used to filter out the signals in the elastic wave signal lower than the lower limit value of the first pass-band to cause the signals in the elastic wave signal higher than the lower limit value of the first pass-band to pass through.

When the elastic wave signal is a differential signal, the first high-pass filter 5112 is used to filter out the positive signal of the elastic wave signal lower than the lower limit value of the first pass-band to cause the positive signal of the elastic wave signal higher than the lower limit value of the first pass-band to pass through, and filter out the negative signal of the elastic wave signal lower than the lower limit value of the first pass-band to cause the negative signal of the elastic wave signal higher than the lower limit value of the first pass-band to pass through.

In this embodiment, the first low-pass filter 5111 is connected in series with the first high-pass filter 5112 to form the first band-pass filter 511.

1.2. First signal amplifier 512

In this embodiment, the input end of the first signal amplifier 512 is electrically connected to the output end of the first band-pass filter 511, and the first signal amplifier 512 is used to amplify the elastic wave signal output by the first band-pass filter 511 based on a predetermined first multiple (i.e. amplification factor).

In the case where the elastic wave signal is a differential signal, the first signal amplifier 512 is used to amplify the positive signal in the elastic wave signal based on the preset first multiple, and amplify the negative signal in the elastic wave signal based on the preset first multiple.

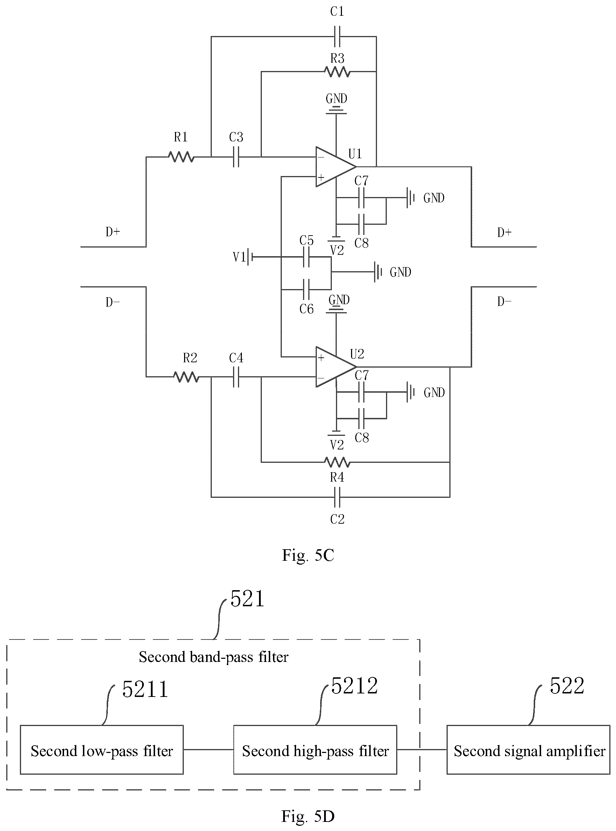

In an example of a primary preprocessing circuit, as shown in Fig. 5C, the primary preprocessing circuit includes a first band-pass filter and a first signal amplifier.

The first band-pass filter includes a first low-pass filter and a first high-pass filter.

The first low-pass filter includes a first resistor R1, a first capacitor C1, a second resistor R2, and a second capacitor C2. The first high-pass filter includes a third capacitor C3, a third resistor R3, a fourth capacitor C4, and a fourth resistor R4.

The first signal amplifier includes a first operational amplifier U1, a second operational amplifier U2, a fifth capacitor C5, a sixth capacitor C6, a seventh capacitor C7, and an eighth capacitor C8.

The first operational amplifier U1 includes a positive input terminal, a negative input terminal, an output terminal, a first power supply terminal, and a second power supply terminal.

The second operational amplifier U2 includes a positive input terminal, a negative input terminal, an output terminal, a first power supply terminal, and a second power supply terminal.

The first operational amplifier U1 and the second operational amplifier U2 belong to the same level of preprocessing circuit, that is, the first operational amplifier U1 and the second operational amplifier U2 belong to the same chip and can share grounding and power supply.

In the structure of processing positive signal D+ in elastic waves in the primary preprocessing circuit:

the first end of the first resistor R1 serves as the input end of the primary preprocessing circuit for receiving the positive signal D+ in the elastic wave signal; the second end of the first resistor R1 is electrically connected to the first end of the first capacitor C1 and the first end of the third capacitor C3, respectively.

The second end of the third capacitor C3 is electrically connected to the first end of the third resistor R3 and the negative input end of the first operational amplifier U1, respectively.

The positive input end of the first operational amplifier U1 is electrically connected to the first power supply V1, the first end of the fifth capacitor C5, and the first end of the sixth capacitor C6, respectively; the second end of the fifth capacitor C5 and the second end of the sixth capacitor C6 are both grounded to GND.

The first power terminal of the first operational amplifier U1 is grounded to GND.

The second power supply terminal of the first operational amplifier U1 is electrically connected to the second power supply V2, the first end of the seventh capacitor C7, and the first end of the eighth capacitor C8, respectively; the second end of the seventh capacitor C7 and the second end of the eighth capacitor C8 are both grounded to GND.

The second end of the first capacitor C1 and the second end of the third resistor R3 are respectively connected electrically to the output end of the first operational amplifier U1, serving as the output end of the primary preprocessing circuit for outputting the positive signal D+ in the elastic wave signal.

In this example, the first operational amplifier U1 amplifies the positive signal D+ in the elastic wave signal with a first multiple of R3/R1, which is the ratio of the third resistor R3 to the first resistor R1. However, in reality, the first multiple is less than R3/R1 due to the attenuation of the first band-pass filter.

In the structure of processing negative signals D- in elastic waves in the primary preprocessing circuit:

the first end of the second resistor R2 serves as the input end of the primary preprocessing circuit, receiving the negative signal D- in the elastic wave signal; the second end of the second resistor R2 is electrically connected to the first end of the second capacitor C2 and the first end of the fourth capacitor C4, respectively.

The second end of the fourth capacitor C4 is electrically connected to the first end of the fourth resistor R4 and the negative input end of the second operational amplifier U2, respectively.

The positive input end of the second operational amplifier U2 is electrically connected to the first power supply V1, the first end of the fifth capacitor C5, and the first end of the sixth capacitor C6, respectively; the second end of the fifth capacitor C5 and the second end of the sixth capacitor C6 are both grounded to GND.

The first power terminal of the second operational amplifier U2 is grounded to GND.

The second power supply terminal of the second operational amplifier U2 is electrically connected to the second power supply V2, the first end of the seventh capacitor C7, and the first end of the eighth capacitor C8, respectively; the second end of the seventh capacitor C7 and the second end of the eighth capacitor C8 are both grounded to GND.

The second end of the second capacitor C2 and the second end of the fourth resistor R4 are respectively electrically connected to the output end of the second operational amplifier U2, serving as the output end of the primary preprocessing circuit for outputting the negative signal D- in the elastic wave signal.

The structure of the primary preprocessing circuit mentioned above is only an example. When this embodiment is implemented, the structure of other primary preprocessing circuits may be set according to the actual situation, such as the first band-pass filter and the first signal amplifier being independent circuits, etc., which is not limited in this embodiment. Moreover, in addition to the structure of the first level preprocessing circuit mentioned above, those skilled in the art may also use other structures of the first level preprocessing circuit according to actual requirements, which is not limited in this embodiment.

2. Secondary preprocessing circuit 520

In this embodiment, a preprocessing circuit is provided on the elastic wave line at the portion where the elastic wave processor 108 is connected to the printed circuit board 400. For ease of differentiation, the preprocessing circuit is denoted as the secondary preprocessing circuit 520, which is located on the elastic wave line near the end of the elastic wave processor 108 and belongs to the output end of the transmission link for transmitting elastic wave signals.

In the optional implementation, the input end of the second stage preprocessing circuit 520 is connected to the output end of the primary preprocessing circuit 510 to perform a second filtering process on the elastic wave signal output by the primary preprocessing circuit 510, amplify and process the elastic wave signal after the second filtering process, and convert the elastic wave signal from a differential signal to a single ended signal.

The input of a single ended signal only has one input pin ADC IN, and the common ground GND is used as the return end of the circuit. The sampling value of ADC (Analog to Digital Converter) is equal to the voltage of ADC IN- the voltage of GND (OV). This input manner is simple and may facilitate the elastic wave processor to sample the elastic wave signal belonging to a single ended signal with ADC.

Assuming that the elastic wave signal is converted from a differential signal to a single ended signal in the primary preprocessing circuit 510, due to the weak anti-interference ability of the single ended signal, it is easy to introduce more interference in the long transmission link of the elastic wave signal, which affects the quality of the elastic wave signal. Therefore, in the transmission link of the elastic wave signal, the elastic wave signal is maintained as a differential signal, and the elastic wave signal is converted from a differential signal to a single ended signal at the output end of the transmission link that transmits the elastic wave signal, which can not only reduce interference during the transmission process, ensure the quality of the elastic wave signal, but also facilitate ADC sampling by the elastic wave processor 108.

In the optional implementation, as shown in Fig. 5D, the secondary preprocessing circuit 520 may include the following structure:

2.1. Second band-pass filter 521

The second band-pass filter 521 belongs to the band-pass filter. In some designs, the input end of the second band-pass filter 521 is the input end of the second stage pre-processing circuit 520. The second band-pass filter 521 is used to filter the signals outside the second pass-band in the elastic wave signal. These signals are generally noise and invalid elastic wave signals, allowing the signals inside the second pass-band in the elastic wave signal to pass through, and these signals are generally valid elastic wave signals.

When the elastic wave signal is a differential signal, the second band-pass filter 521 is used to filter out the signals outside the second pass-band in the positive signals of the elastic wave signal to cause the signals within the second pass-band in the positive signals of the elastic wave signal to pass through, and filter out the signals outside the second pass-band in the negative signals of the elastic wave signal to cause the signals within the second pass-band in the negative signals of the elastic wave signal to pass through.

Furthermore, the second band-pass filter 521 may include the following structure:

2.1.1. Second low-pass filter 5211

The input end of the second low-pass filter 5211 is the input end of the second band-pass filter 521. The second low-pass filter 5211 is used to filter out the signals in the elastic wave signal higher than the upper limit value of the second pass-band to cause the signals in the elastic wave signal lower than the upper limit value of the second pass-band to pass through.

When the elastic wave signal is a differential signal, the second low-pass filter 5111 is used to filter out the positive signal of the elastic wave signal higher than the upper limit value of the second pass-band to cause the positive signal of the elastic wave signal lower than the upper limit value of the second pass-band to pass through, and filter out the negative signal of the elastic wave signal higher than the upper limit value of the second pass-band to cause the negative signal lower than the upper limit value of the second pass-band in the elastic wave signal to pass through.

2.1.2. Second high-pass filter 5212

The second high-pass filter 5212 is used to filter out the signals in the elastic wave signal lower than the lower limit value of the second pass-band to cause the signals in the elastic wave signal higher than the lower limit value of the second pass-band to pass through.

When the elastic wave signal is a differential signal, the second high-pass filter 5212 is used to filter out the positive signal of the elastic wave signal lower than the upper limit value of the second pass-band to cause the positive signal the signal higher than the lower limit value of the second pass-band in the elastic wave signal to pass through, and filter out the negative signal of the elastic wave signal lower than the lower limit value of the second pass-band to cause the negative signal higher than the lower limit value of the second pass-band in the elastic wave signal to pass through.

In this embodiment, the second low-pass filter 5211 is connected in series with the second high-pass filter 5212 to form the second band-pass filter 521.

In some designs, the second high-pass filter 5212 may be omitted, meaning that the second band-pass filter 521 is equivalent to the second low-pass filter 5211. This may increase the gain of the low-frequency signal in the elastic wave signal, making the amplification of the low-frequency signal smoother.

2.2. Second signal amplifier 522

In this embodiment, the input end of the second signal amplifier 522 is electrically connected to the output end of the second band-pass filter 521, and the second signal amplifier 522 is used to amplify the elastic wave signal based on a predetermined second multiple (i.e. amplification factor) and convert the elastic wave signal from a differential signal to a single ended signal.

For the first multiple of the first signal amplifier 512 and the second multiple of the second signal amplifier 522, the magnitude of these two amplification factors is opposite to the energy of the elastic wave signal itself, which may ensure that the frequency points with larger energy of the elastic wave signal will not be distorted due to these two amplification factors.

When these two amplification factors are designed, it is possible to repeatedly use styluses, hands, and other commonly used touch points in the interactive board through experiments, and touch the screen surface of the interactive board with various forces. At this time, the distortion of the elastic wave signal after amplification may be measured to ensure that the elastic wave signal is not distorted when the user touches the screen surface of the interactive board with touch objects under normal force as much as possible. When users use a touch object to touch the screen surface of the interactive board with less force, the elastic wave signal is not too low, resulting in a low signal-to-noise ratio that affects feature collection. Based on these conditions, the first multiple value and the second multiple value are ultimately determined.

In general, the second multiple (such as 7) is smaller than the first multiple (such as 14), which may smoothly amplify the elastic wave signal and facilitate noise filtering.

In some designs, the second multiple may be equal to the first multiple, and the second multiple may also be greater than the first multiple, etc., which is not limited in this embodiment.

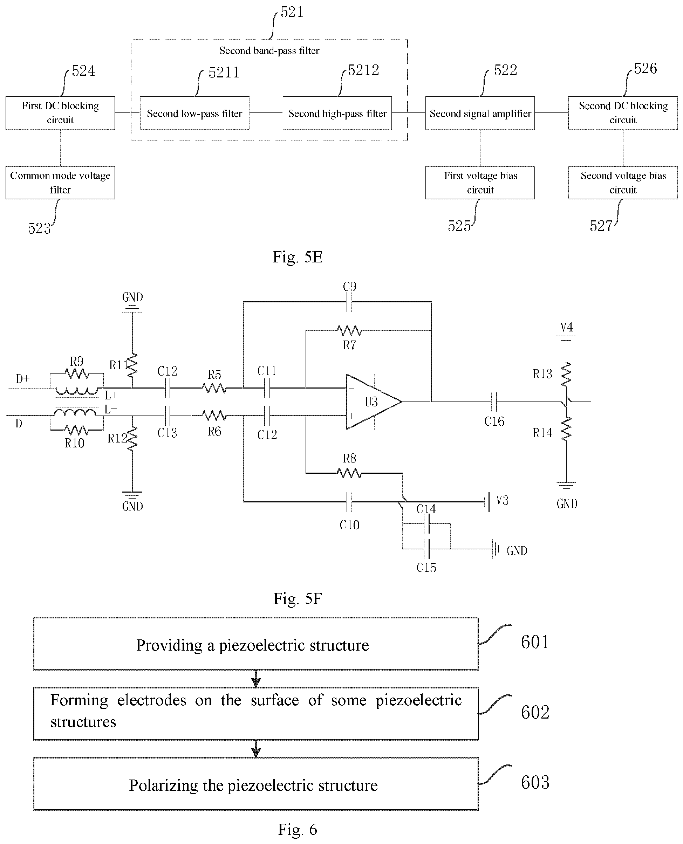

In addition, as shown in Fig. 5E, in addition to the second band-pass filter 521 (second low-pass filter 5211, second high-pass filter 5212) and the second signal amplifier, the second stage preprocessing circuit 520 may also include the following structure:

2.3 Common mode voltage filter 523

After the primary preprocessing circuit 510 outputs the elastic wave signal, the elastic wave signal is transmitted through a transmission link to the second stage preprocessing circuit 520. The transmission link is long, and the electronic components in the interactive board are relatively dense. During the transmission process, the elastic wave signal may introduce some common mode voltage, causing interference.

Due to the presence of both infrared signal transmission lines and elastic wave signal transmission lines on the same printed circuit board, the interference of infrared signals on elastic wave signals is particularly significant.

In this embodiment, a common mode voltage filter 523 may be arranged in the second stage preprocessing circuit 520. The input of the common mode voltage filter 523 is the input of the second stage preprocessing circuit 520, and the common mode voltage filter 523 is used to filter out the common mode voltage in the elastic wave signal.

In the case where the elastic wave signal is a differential signal, the common mode voltage filter 523 is used to filter out the common mode voltage in the positive signal of the elastic wave signal and the common mode voltage in the negative signal of the elastic wave signal, respectively.

It should be noted that in some cases, the common mode voltage introduced in the elastic wave signal is weak, and in this case, the common mode voltage filter 523 may be omitted.

2.4. First DC blocking circuit 524

After the primary preprocessing circuit 510 outputs the elastic wave signal, the elastic wave signal is transmitted through a transmission link to the secondary preprocessing circuit 520. The transmission link is long, and the electronic components in the interactive board are relatively dense. During the transmission process, the elastic wave signal may generate some DC voltage components, which will raise the valid AC signal voltage, causing the amplified AC signal to be flattened and distorted.

Due to the presence of both infrared signal transmission lines and elastic wave signal transmission lines on the same printed circuit board, the interference of infrared signals on elastic wave signals is particularly significant.

In this embodiment, a first DC blocking circuit 524 may be arranged in the second stage preprocessing circuit 520. If a common mode voltage filter 523 is arranged, the input end of the first DC blocking circuit 524 is electrically connected to the output end of the common mode voltage filter 523. If the common mode voltage filter 523 is ignored, the input end of the first DC blocking circuit 524 is the input end of the second stage preprocessing circuit 520. The first DC blocking circuit 524 is used to filter out the DC voltage in the elastic wave signal.

In the case where the elastic wave signal is a differential signal, the first DC blocking circuit 524 is used to filter out the DC voltage in the positive signal of the elastic wave signal and the DC voltage in the negative signal of the elastic wave signal, respectively.

2.5. First voltage bias circuit 525

The input end of the second signal amplifier 522 is electrically connected to the output end of the first voltage bias circuit 525. Due to the fact that half of the elastic wave signal waveform is a negative signal, and the subsequent second signal amplifier 522 is powered by a positive power source, the negative signal input to the second signal amplifier 522 will be flattened and cannot pass through the second signal amplifier 522, the voltage bias circuit 525 adds a specified value (i.e. half of the power supply VCC of the second signal amplifier 522, such as 1.65V) of voltage bias to the elastic wave signal, so that the useful elastic wave signal may be amplified by the second signal amplifier 522 with a double value (double value is the same as the power supply VCC of the second signal amplifier 522, such as 3.3V) of voltage.

2.6. Second DC blocking circuit 526

During the amplification process of the elastic wave signal, the second signal amplifier 522 may generate some uncertain DC voltage components, causing interference.

In this embodiment, a second DC blocking circuit 526 may be arranged in the secondary preprocessing circuit 520. The input end of the second DC blocking circuit 526 is electrically connected to the output end of the second signal amplifier 522, and the second DC blocking circuit 526 is used to filter out the DC voltage in the elastic wave signal.

2.7. Second voltage bias circuit 527

The input end of the second voltage bias circuit 527 is electrically connected to the output end of the second DC blocking circuit 526. The output end of the second voltage bias circuit 527 is the output end of the secondary preprocessing circuit 520. The second voltage bias circuit 527 is used to add a voltage bias of a specified value (i.e. half of the power VCC of the second signal amplifier 522, such as 1.65V) to the elastic wave signal, so that the elastic wave signal is moved up to the specified value as a whole (i.e. half of the power supply VCC of the second signal amplifier 522, such as 1.65V).

Due to the acquisition range of ADC being within twice the value (such as 0-3.3V), there is a DC bias in the elastic wave signal output by the second signal amplifier 522, which may not be the accurate specified value (such as 1.65V). Inaccurate bias may affect the accuracy of data collection when given to the ADC for acquisition and calculation.

After removing the inaccurate DC bias through the second DC blocking circuit 526, an accurate specified value (such as 1.65V) bias is added to the AC elastic wave signal through the voltage divider circuit 527 to ensure the accuracy of the data collected by ADC.

In an example of a two-stage preprocessing circuit, as shown in Fig. 5F, the two-stage preprocessing circuit includes a common mode voltage filter, a first DC blocking circuit, a second band-pass filter, a second signal amplifier, a first voltage bias circuit, a second DC blocking circuit, and a second voltage bias circuit.

The common mode voltage filter includes a ninth resistor R9, a first inductor L+, an eleventh resistor R11, a tenth resistor R10, a second inductor L-, and a thirteenth resistor R13.

The first DC blocking circuit includes a twelfth capacitor C12 and a thirteenth capacitor C13.

The second band-pass filter includes a second low-pass filter and a second high-pass filter.

The second low-pass filter includes a fifth resistor R5, a ninth capacitor C9, a sixth resistor R6, and a tenth capacitor C10, while the second high-pass filter includes an eleventh capacitor C11, a seventh resistor R7, a twelfth capacitor C12, and an eighth resistor R8.

The second signal amplifier includes a third operational amplifier U3, which includes a positive input terminal, a negative input terminal, and an output terminal.

The first voltage bias circuit includes a fourteenth capacitor C14 and a fifteenth capacitor C15.

The second DC blocking circuit includes a sixteenth capacitor C16.

The second bias circuit includes a thirteenth resistor R13 and a fourteenth resistor R14.

In the structure of processing positive signals in elastic waves in the secondary preprocessing circuit:

the first end of the first inductor L+ is electrically connected to the first end of the ninth resistor R9, serving as the input end of the secondary preprocessing circuit for receiving the positive signal D+ in the elastic wave signal; the second end of the first inductor L+ and the second end of the ninth resistor R9 are electrically connected to the first end of the eleventh resistor R11 and the first end of the twelfth capacitor C12, and the second end of the eleventh resistor R11 is grounded to GND.

The second end of the twelfth capacitor C12 is electrically connected to the first end of the fifth resistor R5.

The second end of the fifth resistor R5 is electrically connected to the first end of the ninth capacitor C9 and the first end of the eleventh capacitor C11, respectively.

The second end of the eleventh capacitor C11 is electrically connected to the first end of the seventh resistor R7 and the negative input end of the third operational amplifier U3, respectively.

In the structure of processing negative signals in elastic waves in the secondary preprocessing circuit:

the first end of the second inductor L- is electrically connected to the first end of the tenth resistor R10, serving as the input end of the secondary preprocessing circuit for receiving the negative signal D- in the elastic wave signal; the second end of the second inductor L- and the second end of the tenth resistor R10 are electrically connected to the first end of the twelfth resistor R12 and the first end of the thirteenth capacitor C13, and the second end of the twelfth resistor R12 is grounded to GND.

The second end of the thirteenth capacitor C13 is electrically connected to the first end of the sixth resistor R6.

The second end of the sixth resistor R6 is electrically connected to the first end of the tenth capacitor C10 and the first end of the twelfth capacitor C12, respectively.

The second end of the twelfth capacitor C12 is electrically connected to the first end of the eighth resistor R8 and the positive input end of the third operational amplifier U3, respectively.

The second end of the eighth resistor R8 and the second end of the tenth capacitor C10 are electrically connected to the third power supply V3, the first end of the fourteenth capacitor C14, and the first end of the fifteenth capacitor C15, respectively.

The second end of the fourteenth capacitor C14 and the second end of the fifteenth capacitor C15 are both grounded to GND.

In the structure of the secondary preprocessing circuit for summarizing and processing elastic wave signals:

the second end of the ninth capacitor C9 and the second end of the seventh resistor R7 are electrically connected to the output end of the first operational amplifier U1 and the first end of the sixteenth capacitor C16, respectively, for outputting elastic wave signals belonging to a single ended signal.

The second end of the sixteenth capacitor C16 is electrically connected to the first end of the thirteenth resistor R13 and the first end of the fourteenth resistor R14, respectively.

The second end of the thirteenth resistor R13 is connected to the fourth power supply V4.

The second end of the fourteenth resistor R14 is grounded to GND.

The structure of the secondary preprocessing circuit mentioned above is only an example. When this embodiment is implemented, the structure of other secondary preprocessing circuits may be set according to the actual situation, such as the second band-pass filter and the second signal amplifier being independent circuits, etc., which is not limited in this embodiment. Moreover, in addition to the structure of the secondary preprocessing circuit mentioned above, those skilled in the art may also use other secondary preprocessing circuit structures according to actual requirements, which is not limited in this embodiment.

In this embodiment, both the primary and secondary preprocessing circuits are used for material recognition services. Therefore, the input end of the primary preprocessing circuit is connected to the elastic wave sensor, the output end of the primary preprocessing circuit is connected to the input end of the secondary preprocessing circuit, and the output end of the secondary preprocessing circuit is connected to the input end of the elastic wave processor. The elastic wave signal processed by the secondary preprocessing circuit is transmitted to the elastic wave processor, which performs ADC sampling on the elastic wave signal, converts the elastic wave signal from an analog signal to a digital signal, calls the logical code of the material recognition service, and recognizes the material of the touch object based on the elastic wave signal.

Fig. 6 is a flowchart of a method for producing a piezoelectric sensor used for an interactive board according to some embodiments of the present disclosure. The present embodiment may be applied to the production of an elastic wave sensor used for an interactive board in the above-mentioned embodiments, as shown in Fig. 6. The method includes: Step 601, providing a piezoelectric structure.

Exemplarily, the material of the piezoelectric structure is lead zirconate titanate.

Furthermore, the material of the piezoelectric structure is the lead zirconate titanate 5 series.

As an example of using lead zirconate titanate (PZT) as a piezoelectric structure, the preparation process generally includes two processes:

1. Preparation of billets

A blank is prepared by dry compression molding. Before dry compression molding, the powder should be granulated by adding about 5% of the adhesive to the powder, stirring evenly and sieving, then pre-pressing the block, and finally grinding and sieving the pre pressing block.

The purpose of granulation is not only to distribute the adhesive more evenly in the powder, but also because the particles themselves are already compressed, there is less air in the compressed material, and it is easier to discharge, which is conducive to molding and the density of the formed sample is more uniform.

2. Sintering and mechanical processing of porcelain parts

After dry pressing, the blank is sintered into ceramics at a reasonable temperature. Sintering is the process of particle rearrangement, material densification, and grain growth. Excessive sintering temperature lead wires to excessive grain growth or uneven microstructure of the ceramic, while low sintering temperature may lead wire to incomplete grain development, which may affect the piezoelectric performance of PZT piezoelectric ceramic sheets.

At this time, the PZT piezoelectric ceramic sheet is mechanically processed, that is, polished and grinded to meet the size and flatness requirements.

Step 602, forming electrodes on the surface of some piezoelectric structures.

The surface of the piezoelectric structure is covered with metal electrodes for conductivity, exerting piezoelectric properties. The method of electrode placement varies depending on the material of the electrode, such as sintering silver layer, vacuum evaporation plating, chemical silver deposition, and chemical copper deposition.

In the optional implementation, the electrode includes a first electrode and a second electrode;

the surface of a piezoelectric structure includes a first surface, a second surface opposite to the first surface, and a third surface adjacent to both the first and second surfaces;

the first electrode covers a part of the first surface, while the second electrode covers a part of the first surface, the whole second surface, and the whole third surface or a part of the third surface, respectively.

Further, on the first surface, a first gap is presented between the first electrode and the second electrode; on the first surface, an area of the first electrode is greater than that of the second electrode, and the area of the second electrode is greater than that of the first gap.

Optionally, on the first surface, the shape of the first electrode is rectangular, the shape of the second electrode is rectangular, and the shape of the first gap is rectangular;

on the first surface, the length of the first electrode is greater than that of the first gap, the length of the first gap is greater than the length of the second electrode, and the length of the first gap is greater than the thickness of the piezoelectric sensor;

on the first surface, the width of the first electrode is the same as that of the piezoelectric sensor, the width of the second electrode is the same as that of the piezoelectric sensor, and the width of the first gap is the same as that of the piezoelectric sensor.

Optionally, on the first surface, the length of the first electrode is 16.8 mm to 17.2 mm, the length of the second electrode is 0.8 mm to 1.1 mm, and the length of the first gap is 1.9 mm to 2.1 mm.

Optionally, on the first surface, the length of the first electrode is 17 millimeters, the length of the second electrode is 1 millimeter, and the length of the first gap is 2 millimeters.

Optionally, the resistance of the electrode is less than 1 ohm.

Optionally, the adhesion of the electrode is greater than 2.5N/square millimeter.

Optionally, the electrode material is silver.

Step 603, polarizing the piezoelectric structure.

The basic structure of a piezoelectric sensor is composed of electrodes on the surface of a piezoelectric structure. After polarization, the piezoelectric sensor will display the piezoelectric effect. This embodiment reasonably selects the polarization conditions, namely polarization electric field, polarization temperature, and polarization time, based on the business requirements of detecting elastic wave signals, to achieve perfect polarization of the piezoelectric sensor and fully utilize its piezoelectric performance. Under the action of a polarized electric field, the electric domains may be aligned in the direction of the electric field. The higher the polarized electric field, the greater the effect of promoting the alignment of the electric domains, and the more perfect the polarization.

The polarization direction of the piezoelectric structure is the thickness direction of the piezoelectric sensor.

Overall, the working frequency of piezoelectric sensors matches with the material frequency, which is the frequency used to distinguish the material of the touch object in the elastic waves generated by the screen of the interactive board when the touch object touches it.

The touch object includes at least one of the followings:

a hand, and a stylus.

Optionally, the shape of a piezoelectric sensor includes at least one of the followings:

a cuboid, a cube, and a cylinder;

the length of the box is greater than or equal to the width of the box.

Optionally, the length of the effective working region of the electrode in the piezoelectric sensor matches with the half wavelength of the elastic wave.

Optionally, the length of the piezoelectric sensor is 10 millimeters to 30 millimeters, the width of the piezoelectric sensor is less than 10 millimeters, and the thickness of the piezoelectric sensor is less than 10 millimeters.

Optionally, the length of the piezoelectric sensor ranges from 19.7 mm to 20.3 mm, the width of the piezoelectric sensor ranges from 4.9 mm to 5.1 mm, and the thickness of the piezoelectric sensor ranges from 1.92 mm to 2.08 mm.

Optionally, the length of the piezoelectric sensor is 20 millimeters, the width of the piezoelectric sensor is 5 millimeters, and the thickness of the piezoelectric sensor is 2 millimeters.

In this embodiment, since the application of the piezoelectric sensor is basically similar to the previous embodiment, the description is relatively simple. The partial explanation of the previous embodiment is referred to for relevant details, and this embodiment will not be elaborated herein.

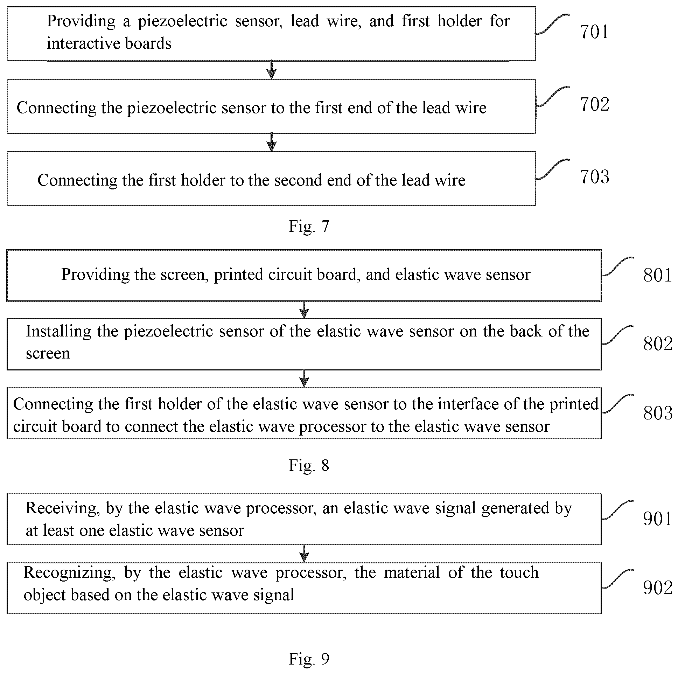

Fig. 7 is a flowchart of a method for producing an elastic wave sensor according to some embodiments of the present disclosure. This embodiment may be applied to the production of the elastic wave sensor in the above-mentioned embodiments, as shown in Fig. 7. The method includes:

Step 701, providing a piezoelectric sensor, lead wire, and first holder for interactive boards.
In the optional implementation, a piezoelectric sensor described in any embodiment of the present disclosure may be provided. The piezoelectric sensor may be designed and produced by a manufacturer of interactive boards and handed over to other suppliers, or may be designed and produced by the manufacturer of interactive boards themselves, which is not limited in this embodiment.
Step 702, connecting the piezoelectric sensor to the first end of the lead wire.

In this embodiment, processes such as welding, hot pressing, and conductive adhesive bonding may be used to connect the electrode of the piezoelectric sensor to the first end of the lead wire (such as the first flexible circuit board), so as to connect the piezoelectric sensor to the line on the lead wire (such as the first flexible circuit board).

Taking hot pressing as an example, ACF (anisotropic conductive film) is coated between the electrode of a piezoelectric sensor and the first end of the lead wire (such as the first flexible circuit board) on the circuit. ACF combines the piezoelectric sensor and the lead wire (such as the first flexible circuit board) to form an elastic wave sensor, and there are conductive particles (mainly gold-plated plastic balls) in ACF, the electrode of the piezoelectric sensor is connected to the lead wire (such as the first flexible circuit board), and after hot pressing and other processes, the conductive particles break to conduct, which is only in the vertical direction to avoid short circuits between the positive and negative electrodes.

This embodiment reasonably selects the conditions for hot pressing based on the business requirements of detecting elastic wave signals, such as temperature, time, and pressure, to ensure the reliability and continuity of the connection between the electrode of the piezoelectric sensor and the first end of the lead wire (such as the first flexible circuit board), while not affecting the polarization characteristics of the piezoelectric structure.

In the optional implementation, the lead wire has one or more lines for transmitting elastic wave signals generated by piezoelectric sensors.

Optionally, the lead wire has a dual line for transmitting elastic wave signals generated by piezoelectric sensors in the form of differential signals;

the electrodes of a piezoelectric sensor include a first electrode and a second electrode;
one of the lines is connected to the first electrode of the piezoelectric sensor, and the other line is connected to the second electrode of the piezoelectric sensor.

Exemplarily, the lead wire is a first flexible circuit board or a single-stranded connecting wire;
the first flexible circuit board is provided with a solder pad, which is connected to the electrodes of the piezoelectric sensor.

Furthermore, the solder pad includes a first solder pad and a second solder pad, and the electrode includes a first electrode and a second electrode;

the first solder pad is matched with the first electrode, and the first solder pad is connected to the first electrode;
the second solder pad is matched with the second electrode, and the second solder pad is connected to the second electrode.

If the surface of a piezoelectric sensor includes a first surface, a second surface opposite to the first surface, and a third surface adjacent to both the first and second surfaces; the first electrode covers a portion of the first surface, while the second electrode covers a part of the first surface, the whole second surface, and the whole third surface or a part of the third surface, respectively;

the size of the first solder pad matches with the size of the first electrode located on the first surface, and the size of the second solder pad matches with the size of the second electrode located on the first surface;
the first solder pad is connected to the first electrode located on the first surface, and the second solder pad is connected to the second electrode located on the first surface.

In addition, on the first surface, a first gap is presented between the first electrode and the second electrode;

a second gap is presented between the first and second solder pads;
the size of the first gap matches with the size of the second gap.

For example, the first solder pad has a length of 2 millimeters and a width of 3.8 millimeters, the second solder pad has a length of 1 millimeter and a width of 3.8 millimeters, and the second gap has a length of 2 millimeters and a width of 3.8 millimeters.

Optionally, a first adhesive is presented between the first flexible circuit board and the piezoelectric sensor.

Furthermore, if the surface of a piezoelectric sensor includes a first surface, a second surface opposite to the first surface, and a third surface adjacent to both the first and second surfaces; the first electrode covers a part of the first surface, while the second electrode covers a part of the first surface, the whole second surface, and the whole third surface or a part of the third surface, respectively;

a first adhesive is presented between the first flexible circuit board and the third surface.

Optionally, the first flexible circuit board includes a connected first board and a second board, with the first board perpendicular to the second board;

> the first end of the first flexible circuit board is located in the first plate;
> the second end of the first flexible circuit board is located in the second plate.

Optionally, the surface of the first flexible circuit board is covered with a shielding film.

Step 703, connecting the first holder to the second end of the lead wire.

In this embodiment, the first holder may be connected to the second end of the lead wire (such as the first flexible circuit board) using processes such as welding, clamping, etc., so that the first holder is connected to the line on the lead wire (such as the first flexible circuit board).

In the optional implementation, the first holder has one or more pins for transmitting elastic wave signals generated by the piezoelectric structure.

Furthermore, the first holder includes at least two pins, which are used to transmit the elastic wave signal generated by the piezoelectric sensor in the form of differential signals.

Exemplarily, the pins of the first holder include a first pin, a second pin, a third pin, a fourth pin, a fifth pin, and a sixth pin arranged in sequence;

> the first pin, second pin, fifth pin, and sixth pin are all grounded;
> the third and fourth pins are used to transmit elastic wave signals generated by piezoelectric structures in the form of differential signals.

In this embodiment, since the application of the elastic wave sensor is basically similar to the previous embodiment, the description is relatively simple. The partial explanation of the previous embodiment is referred to for relevant details, and this embodiment will not be elaborated herein.

Fig. 8 is a flowchart of a method for producing an interactive board according to some embodiments of the present disclosure. This embodiment may be applied to the production of interactive boards in the above-mentioned embodiments, as shown in Fig. 8. The method includes:

Step 801, providing the screen, printed circuit board, and elastic wave sensor.

At a certain node on the production line of interactive boards, some components of the screen (such as display modules and cover plates) have been assembled. At this time, the printed circuit board is arranged inside the frame of the screen, and an elastic wave processor is arranged on the printed circuit board, which is configured to the install the elastic wave sensor according to any embodiment of the present disclosure.

In the optional implementation, the elastic wave sensor may be designed and produced by the manufacturer of the interactive board and handed over to other suppliers, or it may be designed and produced by the manufacturer of the interactive board itself, which is not limited in this embodiment.

Step 802, installing the piezoelectric sensor of the elastic wave sensor on the back of the screen.

In this embodiment, the elastic wave sensor may be installed on the screen through methods such as dispensing adhesive and double-sided tape.

For example, double-sided tape may be selected as either UV (ultraviolet) cured tape or heat cured tape.

Optionally, the elastic wave sensor is installed on the back edge of the screen and located outside the visible region of the screen.

Furthermore, the elastic wave sensor is installed on the back of the screen in a region covered by ink.

Taking dispensing as an example, a second adhesive is presented between the piezoelectric sensor of the elastic wave sensor and the back of the screen.

Furthermore, if the surface of the piezoelectric sensor includes a first surface, a second surface opposite to the first surface, and a third surface adjacent to both the first and second surfaces; the first electrode of the piezoelectric sensor covers a part of the first surface, while the second electrode of the piezoelectric sensor covers a part of the first surface, the whole second surface, and the whole third surface or a part of the third surface, respectively; a second adhesive is presented between the second surface and the back of the screen.

Optionally, the Young's modulus of the second adhesive is greater than 1 gigapascal.

Optionally, at least one of the thickness, bubbles, and curing degree of the second adhesive has consistency.

Optionally, the thickness of the second adhesive is less than 150 microns.

Optionally, the material of the second adhesive includes at least one of the followings: epoxy resin adhesive, polyurethane, cyanoacrylate.

After pasting the piezoelectric sensor onto the screen, a suitable fixture may be used to perform pressure holding operations on the piezoelectric sensor.

The second adhesive is used to paste piezoelectric sensors onto the screen. In the production process, there are certain requirements for the relative position of the piezoelectric sensor after being pasted onto the screen, the thickness of the adhesive layer, the content of bubbles in the adhesive layer, and the curing degree. Therefore, before the second adhesive is cured, special or universal fixtures may be used to reasonably press and clamp between the piezoelectric sensor and the screen, ensuring that the second adhesive fully exerts its bonding strength, and ensuring consistency in parameters such as the relative position of the two after adhesive curing, the thickness of the adhesive layer, the content of bubbles in the adhesive layer, and the curing degree.

Furthermore, the fixture is customized based on factors such as the structural characteristics of piezoelectric sensors and screens, production rhythm, and the solidification characteristics of the second adhesive.

In a consistent manner, Step 802 may include the following steps:

Step 8021, acquiring the capacitance value of the piezoelectric sensor in the non-installation state.

The non-installation state refers to not using a second adhesive to stick the piezoelectric sensor to the back of the screen;

Step 8022, acquiring the capacitance value of the piezoelectric sensor in the installation and curing state.

The installation curing state refers to the piezoelectric sensor being pasted onto the back of the screen using a second adhesive and reaching the preset curing time.

Step 8023, calculating the ratio between the capacitance difference and the capacitance value of the piezoelectric sensor in the non-installation state to obtain the change in capacitance.

The capacitance difference is the difference between the capacitance value of the piezoelectric sensor in the non-installation state and the capacitance value of the piezoelectric sensor in the installed and solidified state.

Step 8024, when the capacitance change exceeds the preset capacitance threshold, determining that the thickness, the content of bubbles and the curing degree of the second glue all pass the conformance testing.

Step 8025, when the capacitance change does not exceed the preset capacitance threshold, determining that the thickness, the content of bubbles and the curing degree of the second glue does not pass the conformance testing.

In practical applications, the number of elastic wave sensors is positively correlated with the surface area of the screen.

For example, the number of elastic wave sensors is five, located:

on the top left side of screen back, on the top right side of screen back, on the bottom left side of screen back, on the bottom middle of screen back, on the bottom right side of screen back;

the projection of five elastic wave sensors is staggered in the horizontal direction.

Step 803, connecting the first holder of the elastic wave sensor to the interface of the printed circuit board to connect the elastic wave processor to the elastic wave sensor.

In the optional implementation, the printed circuit boards are connected by a second flexible circuit board, and the printed circuit board (including the second flexible circuit board) has an elastic wave circuit that transmits the elastic wave signal output by the elastic wave sensor.

In an embodiment of the present disclosure, the frame has an opening in the middle, a cover body, and a third flexible circuit board, with the first end of the third flexible circuit board connected to the interface;

in this embodiment, Step 803 may include the following steps:

Step 8031, disassembling the cover and removing the third flexible circuit board from the opening.

Step 8032, connecting the second end of the third flexible circuit board to the first holder of the elastic wave sensor to connect the elastic wave processor to the elastic wave sensor.

Technicians or automated production equipment on the production line may open the cover and use tools such as tweezers to remove the second holder from the frame. The first holder of the elastic wave sensor is connected to the second holder of the third flexible circuit board outside the profile of the frame.

When the operation is completed, the first end of the third flexible circuit board is connected to the interface, and the second end of the third flexible circuit board is connected to the first holder.

Optionally, the second end of the third flexible circuit board is provided with a second holder. During operation, the second holder is connected to the first holder, and upon completion of the operation, the second holder is connected to the first holder.

The first end of the third flexible circuit board is provided with a third holder, and the interface is provided with a fourth holder. The third holder is connected to the fourth holder.

Step 8033, replacing the third flexible circuit board from the opening and close the opening with the cover.

Technicians or automated production apparatus on the production line connect the first holder of the elastic wave sensor to the second holder of the third flexible circuit board outside the profile of the frame, and then plug the lead wire (such as the first flexible circuit board), the third flexible circuit board, and the interconnected first and second holders back into the profile of the frame, and cover the cover.

When the operation is completed, the cover body may be detachably closed to the opening; elastic wave sensors have a one-to-one correspondence with openings and interfaces.

In an embodiment of the present disclosure, a primary preprocessing circuit is also provided on the printed circuit board, which is located at the inlet of the elastic wave circuit in the printed circuit board. The primary preprocessing circuit is used for first filtering the elastic wave signal output by the elastic wave sensor and amplifying the elastic wave signal after the first filtering process.

In the optional implementation, the primary preprocessing circuit includes:

a first band-pass filter, which is used to filter out the signals outside the first pass-band in the elastic wave signals output by the elastic wave sensor to cause the signals within the first pass-band in the elastic wave signals to pass through;

the first signal amplifier for amplifying the elastic wave signal at a predetermined first multiple.

Furthermore, the first band-pass filter includes:

a first low-pass filter, configured to filter out the elastic wave signal output by the elastic wave sensor higher than an upper limit value of the first pass-band to cause the elastic wave signal that is lower than the upper limit value of the first pass-band to pass through;

a first high-pass filter, configured to filter out the elastic wave signal output by the elastic wave sensor lower than the lower limit value of the first pass-band to cause the elastic wave signal higher than the lower limit value of the first pass-band to pass through.

Exemplarily, the first low-pass filter includes a first resistor, a first capacitor, a second resistor, and a second capacitor, while the first high-pass filter includes a third capacitor, a third resistor, a fourth capacitor, and a fourth resistor;

the first signal amplifier includes a first operational amplifier, a second operational amplifier, a fifth capacitor, a sixth capacitor, a seventh capacitor, and an eighth capacitor;

the first end of the first resistor is configured to receive a positive signal in the elastic wave signal output by the elastic wave sensor; the second end of the first resistor is electrically connected to the first end of the first capacitor and the first end of the third capacitor, respectively;

the second end of the third capacitor is electrically connected to the first end of the third resistor and the negative input end of the first operational amplifier, respectively;

the positive input end of the first operational amplifier is electrically connected to the first power supply, the first end of the fifth capacitor, and the first end of the sixth capacitor, respectively; the second end of the fifth capacitor and the second end of the sixth capacitor are both grounded;

the first power supply terminal of the first operational amplifier is grounded;

the second power supply terminal of the first operational amplifier is electrically connected to the second power supply, the first end of the seventh capacitor, and the first end of the eighth capacitor, respectively; the second end of the seventh capacitor and the second end of the eighth capacitor are both grounded;

the second end of the first capacitor and the second end of the third resistor are respectively electrically connected to the output end of the first operational amplifier;

the first end of the second resistor is used to receive a negative signal in the elastic wave signal output by the elastic wave sensor; the second end of the second resistor is electrically connected to the first end of the second capacitor and the first end of the fourth capacitor, respectively;

the second end of the fourth capacitor is electrically connected to the first end of the fourth resistor and the negative input end of the second operational amplifier, respectively;

the positive input end of the second operational amplifier is electrically connected to the first power supply, the first end of the fifth capacitor, and the first end of the sixth capacitor, respectively; the second end of the fifth capacitor and the second end of the sixth capacitor are both grounded;

the first power terminal of the second operational amplifier is grounded;

the second power supply terminal of the second operational amplifier is electrically connected to the second power supply, the first end of the seventh capacitor, and the first end of the eighth capacitor, respectively; the second end of the seventh capacitor and the second end of the eighth capacitor are both grounded;

the second end of the second capacitor and the second end of the fourth resistor are respectively electrically connected to the output end of the second operational amplifier.

In another embodiment of the present disclosure, a secondary preprocessing circuit is also provided on the printed circuit board, which is located in the printed circuit board at the outlet of the elastic wave circuit. The secondary preprocessing circuit is used to perform a second filtering process on the elastic wave signal, amplify the elastic wave signal after the second filtering process, and convert the elastic wave signal from a differential signal to a single ended signal.

In the optional implementation, the secondary preprocessing circuit includes:

a second band-pass filter, configured to filter out the signals outside the second pass-band in the elastic wave signal to cause the signals inside the second pass-band in the elastic wave signal to pass through;

a second signal amplifier, configured to amplify and process elastic wave signals based on a preset second multiple.

The second multiple is less than the first multiple.

Furthermore, the second band-pass filter includes:

a second low-pass filter, configured to filter out the signals in the elastic wave signal higher than an upper limit value of the second pass-band to cause the signals in the elastic wave signal lower than the upper limit value of the second pass-band to pass through;

a second high-pass filter, configured to filter the signals in the elastic wave signal that are lower than the lower limit value of the second pass-band, so that the signals in the elastic wave signal that are higher than the lower limit value of the second pass-band pass through.

In addition, the secondary preprocessing circuit further includes:

a common mode voltage filter, configured to filter out common mode voltage in the elastic wave signal output by the primary preprocessing circuit;

a first DC blocking circuit, of which an input end is electrically connected to an output end of the common mode voltage filter, and configure to filter out the DC voltage in the elastic wave signal;

a first voltage bias circuit, of which an output end is electrically connected to the input end of the second signal amplifier for adding a specified value of voltage bias to the elastic wave signal;

a second DC blocking circuit, of which an input end is electrically connected to the output end of the second signal amplifier to filter out the DC voltage in the elastic wave signal;

a second voltage bias circuit, of which an input end is electrically connected to the output end of the second DC blocking circuit, and configured to add a specified value of voltage bias to the elastic wave signal.

Exemplarily, the second low-pass filter includes a fifth resistor, a ninth capacitor, a sixth resistor, and a tenth capacitor, while the second high-pass filter includes an eleventh capacitor, a seventh resistor, a twelfth capacitor, and an eighth resistor; the second signal amplifier includes a third operational amplifier; the common mode voltage filter includes a ninth resistor, a first inductor, an eleventh resistor, a tenth resistor, a second inductor, and a thirteenth resistor; the first DC blocking circuit includes a twelfth capacitor and a thirteenth capacitor; the first voltage bias circuit includes a fourteenth capacitor and a fifteenth capacitor; the second DC blocking circuit includes a sixteenth capacitor; the second bias circuit includes a thirteenth resistor and a fourteenth resistor;

The first end of the first inductor is electrically connected to the first end of the ninth resistor for receiving positive signals in the elastic wave signal; the second end of the first inductor and the second end of the ninth resistor are electrically connected to the first end of the eleventh resistor and the first end of the twelfth capacitor, and the second end of the eleventh resistor is grounded;

the second end of the twelfth capacitor is electrically connected to the first end of the fifth resistor;

the second end of the fifth resistor is electrically connected to the first end of the ninth capacitor and the first end of the eleventh capacitor, respectively;

the second end of the eleventh capacitor is electrically connected to the first end of the seventh resistor and the negative input end of the third operational amplifier, respectively;

the first end of the second inductor is electrically connected to the first end of the tenth resistor to receive negative signals in the elastic wave signal; the second end of the second inductor and the second end of the tenth resistor are electrically connected to the first end of the twelfth resistor and the first end of the thirteenth capacitor, and the second end of the twelfth resistor is grounded;

the second end of the thirteenth capacitor is electrically connected to the first end of the sixth resistor;

the second end of the sixth resistor is electrically connected to the first end of the tenth capacitor and the first end of the twelfth capacitor, respectively;

the second end of the twelfth capacitor is electrically connected to the first end of the eighth resistor and the positive input end of the third operational amplifier, respectively;

the second end of the eighth resistor and the second end of the tenth capacitor are electrically connected to the third power supply, the first end of the fourteenth capacitor, and the first end of the fifteenth capacitor, respectively;

the second end of the fourteenth capacitor and the second end of the fifteenth capacitor are both grounded;

the second end of the ninth capacitor and the second end of the seventh resistor are electrically connected to the output end of the first operational amplifier and the first end of the sixteenth capacitor, respectively, for outputting elastic wave signals belonging to a single ended signal;

the second end of the sixteenth capacitor is electrically connected to the first end of the thirteenth resistor and the first end of the fourteenth resistor, respectively;

the second end of the thirteenth resistor is connected to the fourth power supply;

the second end of the fourteenth resistor is grounded.

**In** an embodiment of the present disclosure, an infrared processor is installed on the printed circuit board and an infrared sensor is configured to scan infrared signals on the screen surface;

the infrared processor is connected to the infrared sensor.

In the optional implementation, the printed circuit board also has an infrared circuit for transmitting infrared signals generated by infrared sensors;

the infrared line and the elastic wave line do not overlap in parallel;

a ground wire is presented between the infrared line and the elastic wave line.

In this embodiment, since the application of the interactive board is basically similar to the previous embodiment, the description is relatively simple. A partial explanation of the previous embodiment is referred to for relevant details, and this embodiment will not be detailed herein.

Fig. 9 is a flowchart of a material recognition method according to some embodiments of the present disclosure. This embodiment may be applicable to the use of the elastic wave sensor to detect the generation of elastic wave signals when a touch object touches the screen surface of the interactive board, and to recognize the material of the touch object. This method may be executed by a material recognition device, which may be implemented in hardware and/or software form, this material recognition device may be configured in an interactive board. As shown in Fig. 9, this method includes:

Step 901, receiving, by the elastic wave processor, an elastic wave signal generated by at least one elastic wave sensor.

In any embodiment of the present disclosure, in an interactive board, at least one elastic wave sensor is installed on the screen, and the size of the elastic wave sensor meets the resonance of the elastic wave generated when the touch object touches the screen surface. The size of the elastic wave sensor meets the following requirements: the working frequency of the elastic wave sensor matches with (i.e. matches with) with the frequency used to distinguish different materials in the elastic wave generated when the touch object touches the screen surface.

When the interactive board is powered on and running, for the active elastic wave sensor, the central processing unit may send a start signal to the elastic wave processor. The elastic wave processor responds to the start signal and starts the elastic wave sensor when being powered on. For the passive elastic wave sensor, it will not be powered on. The elastic wave sensor continuously detects the elastic waves transmitted on the screen of the interactive board, thereby producing the elastic wave signal.

Therefore, in some cases, the elastic wave signal is generated by the elastic wave generated by the touch object touching the screen of the interactive board, and in some cases, the elastic wave signal is generated by noise and the elastic wave generated by the non-touch object touching the screen of the interactive board.

The elastic wave sensor transmits the elastic wave signal to the printed circuit board inside the frame of the interactive board.

A primary preprocessing circuit is installed at the signal inlet end of the printed circuit board, and a secondary preprocessing circuit is installed at the signal outlet end of the printed circuit board.

The elastic wave sensor inputs the elastic wave signal into a primary preprocessing circuit, which performs a first filtering process on the elastic wave signal and amplifies the elastic wave signal after the first filtering process.

The primary preprocessing circuit outputs the processed elastic wave signal, which is transmitted to the secondary preprocessing circuit through the elastic wave circuit inside the printed circuit board. The secondary preprocessing circuit performs a second filtering process on the elastic wave signal, amplifies the elastic wave signal after the second filtering process, and converts the elastic wave signal from a differential signal to a single ended signal.

The secondary preprocessing circuit outputs the processed elastic wave signal to the elastic wave processor, where the elastic wave processor may receive the elastic wave signal generated by the elastic wave sensor.

Step 902, recognizing, by the elastic wave processor, the material of the touch object based on the elastic wave signal.

In this embodiment, the elastic wave processor is provided with an analog-to-digital conversion circuit ADC, which may convert the elastic wave signal from an analog signal to a digital signal, call the logical code in the elastic wave processor to implement material recognition service, analyze the characteristics of the elastic wave signal, and recognize the material of the touch object.

The materials of different touch objects may vary, and the materials in the same touch object may also be different. The characteristics of the elastic wave signal generated by touch objects of different materials when touching the screen surface of the interactive board also vary. By collecting the elastic wave signal of the current touch object and analyzing its characteristics, the material of the touch object may be recognized.

In the optional implementation, the elastic wave processor may recognize the material of the touch object in at least one of the followings ways:

1. Machine learning or deep learning

In this method, the material of the touch object may be analyzed through machine learning or deep learning. The accuracy of machine learning or deep learning is high, and when manufacturers of interactive boards configure standard touch objects, high accuracy may be achieved in recognizing the material of the current touch object.

In this method, a machine learning model or a deep learning model may be pre-set, where the machine learning model is a classification model that applies machine learning, such as SVM (Support Vector Machine), LR (Logistic Regression), gradient lifting trees (GBTs), such as gradient lifting decision trees (GBDT), gradient lifting regression trees (GBRT), decision trees, and the like. Deep learning models are classification models that apply deep learning, such as LetNet, AlexNet, VGG, Inception, ResNet, DenseNet, and the like in Convolutional Neural Networks (CNN).

If the material output from the machine learning model or deep learning model is a preset material, it indicates that the user has used a touch object that is compatible with the interactive board to trigger touch operations. If the material output from the machine learning model or deep learning model is other than the preset material, it indicates that the user has used a touch object that is not compatible with the interactive board to trigger touch operations.

2. Rules

In this method, the material of the touch object may be analyzed through rules. The calculation of rules is relatively simple. When manufacturers of interactive boards configure standard touch objects, while maintaining the accuracy of recognizing the current touch object material, the calculation time is reduced.

In this method, elastic wave signals generated when touch objects of different materials touch the screen surface of an interactive board are collected as samples, and feature information is extracted from the elastic wave signal itself and/or the spectral information of the elastic wave signal.

The feature information may include features based on time domain or nonlinear features based on transform domain, such as peak point, interval between the $i^{th}$ peak point (i is a positive integer) and the $(i+1)^{th}$ peak point, Zero-crossing rate, short-term energy, short-term autocorrelation function, short-term average amplitude difference, short-term power spectral density, spectral entropy, fundamental frequency, formant, etc., which is not limited in this embodiment.

The feature information is analyzed corresponding to touch objects of different materials, and one or more rules is set under the dimension of feature information that may distinguish different materials. For example, feature information is greater than a certain threshold, feature information is within a certain range, the ratio between feature information is less than a certain threshold, and the like.

If the current touch object touches the screen surface of the interactive board, feature information may be extracted from the time-domain information and/or spectral information of the detected elastic wave signal, and compared with the corresponding rules of each material in sequence.

If the feature information conforms to the preset rules, it may be determined that the material of the touch object is the same as the preset material, that is, the user has triggered the touch operation using the touch object matched with the interactive board.

If the feature information does not comply with any preset rules, it is determined that the material of the touch object is different from the preset material and belongs to other materials besides the preset material, that is, the user has triggered a touch operation using a touch object that is not compatible with the interactive board.

3. Signal comparison

In this method, the material of the touch object may be analyzed through the comparison of elastic wave signals. The comparison application of elastic wave signals is relatively broad. In the case of user-defined touch objects, the elastic wave signals of the customized touch object may be collected as samples. The customized touch objects are far more than the touch objects provided by manufacturers of interactive boards, which enriches the types of touch objects. Different types of touch objects have different characteristics, different types of touch objects may be selected according to different scenarios, thereby enriching the diversity of writing.

In this method, the elastic wave signal generated by the touch object of the marked material on the screen surface may be collected as a sample before the interactive board leaves the factory or when the user defines the touch object.

These samples may be stored in a local database of the interactive board, and when a touch object touches the screen surface of the interactive board, samples of marked materials may be searched from the database.

Features (such as spectrum) are extracted from each sample, features (such as spectrum) are extracted from the current elastic wave signal, and the features of the current elastic wave signal are sequentially matched with the features of each sample (such as calculating the similarity between spectra). If the features of the current elastic wave signal are successfully matched with the features of a certain sample (such as the highest similarity and greater than or equal to the threshold), it may be determined that the touch object belongs to the preset material, that is, the user has used a touch object that is compatible with the interactive board to trigger a touch operation. If the matching of the current elastic wave signal feature with any sample feature fails (such as similarity less than the threshold), it may be determined that the touch object is different from the preset material, that is, the user has used a touch object that is not compatible with the interactive board to trigger a touch operation.

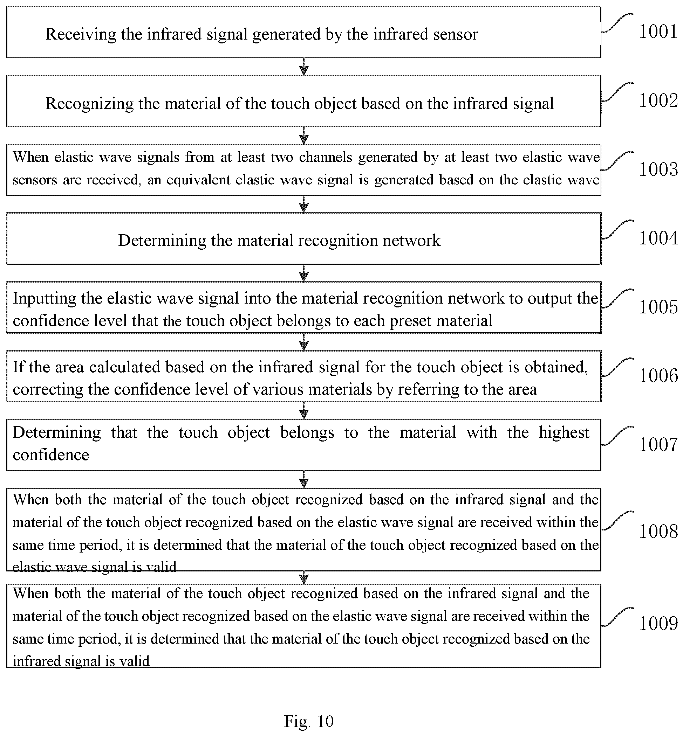

Fig. 10 is a flowchart of a material recognition method according to some embodiments of the present disclosure. On the basis of the above embodiments, this embodiment adds the operation of recognizing the material of a touch object based on infrared signals, generating an equivalent signal of an elastic wave signal, and refining the operation of recognizing the material of a touch object based on deep learning. As shown in Fig. 10, the method includes:
Step 1001, receiving the infrared signal generated by the infrared sensor.

During the startup and operation of the interactive board, the central processing unit may send a startup signal to the infrared processor. The infrared processor responds to the startup signal and powers up the infrared sensor. The infrared sensor scans the infrared signal above the screen surface of the interactive board and transmits it to the infrared processor. Therefore, the infrared processor may continuously receive the infrared signal generated by the infrared sensor.

When the central processing unit has the logical processing ability for infrared signals, the infrared processor may continuously upload infrared signals to the central processing unit.

Step 1002, recognizing the material of the touch object based on the infrared signal.

After receiving the infrared signal, the infrared processor or central processing unit may detect whether there is a touch object approaching or touching the screen surface based on the transmission of the infrared signal.

In general, the infrared processor or central processing unit may calculate the number of blocked optical paths in real-time from the infrared signal, and compare this number with the preset touch threshold. This touch threshold is generally an empirical value obtained by conducting experiments on conventional touch objects and counting the number of blocked optical paths.

If the number is less than the touch threshold, it indicates that the number of blocked light paths is relatively small, which may be unconventional touch objects such as insects or noise.

If the number is greater than or equal to the touch threshold, it indicates that there are a large number of blocked light paths, which may be approached or touched by conventional touch objects on the screen surface. At this time, the time of collecting the infrared signal (i.e. the infrared signal of the detected touch object) may be recorded as the touch time T1.

At this point, it is possible to compare the previous record of detecting the touch object and identify the touch state of the touch object. The touch state includes pressing *(Down),* moving (*Move),* and raising (*Up*).

When the infrared processor has the logic processing capability of infrared signal, on the one hand, the infrared processor transmits the infrared signal and the touch time to the central processor through USB components, and the central processor caches the infrared signal and the touch time T1, and recognizes the material of the touch object based on the infrared signal, or the infrared processor recognizes the material of the touch object according to the infrared signal, the material of the touch object and the touch time are transmitted to the central processor through the USB component, on the other hand, the infrared processor transmits the touch time T1 separately to the elastic wave processor through GPIO, and the elastic wave processor caches the touch time T1.

In the case where the central processing unit has the logical processing ability of infrared signals, the central processing unit recognizes the material of the touch object based on the infrared signal and separately transmits the touch time T1 to the elastic wave processor, which caches the touch time T1.

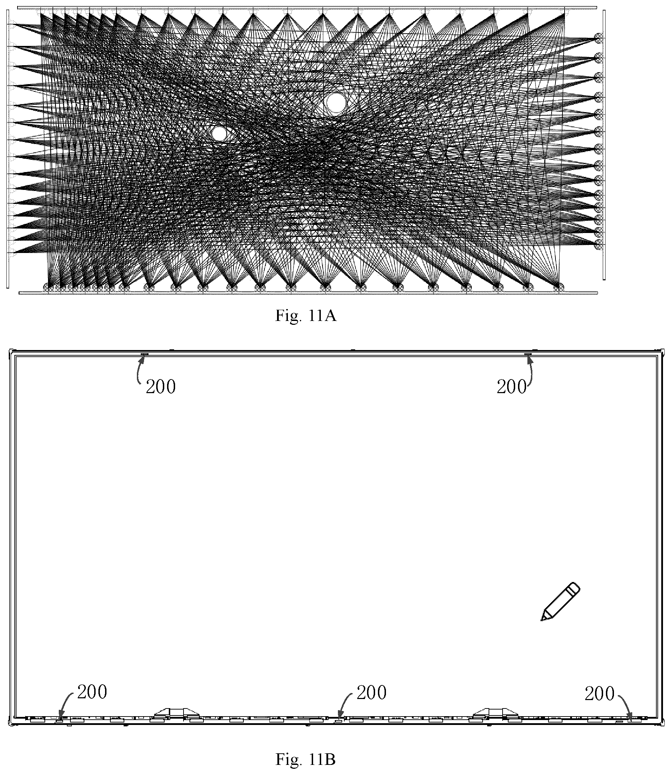

As shown in Fig. 11A, when the interactive board is provided with a fixed material touch object, the geometric parameters such as size and cross-section of the touch object of different materials are different, and the blocking of infrared light is not consistent. The area of the touch object of different materials has certain differences. The smaller circle is the stylus, and the larger circle is the finger. Therefore, the area of the touch object may be used as a feature to distinguish materials.

In the optional implementation, the area of different touch objects when blocking infrared signals on interactive boards may be calculated through experiments. Due to the fluctuation of this area, a reasonable fluctuation of the area may be represented by a range, which is recorded as the valid range.

If the area of the current touch object is within the valid range of a certain material, it may be considered that the touch object belongs to the material corresponding to the valid range.

Step 1003, when elastic wave signals from at least two channels generated by at least two elastic wave sensors are received, an equivalent elastic wave signal is generated based on the elastic wave signals of at least two channels.

In interactive boards, large screens are generally set up, and at least two elastic wave sensors are installed on the screen to cover the elastic waves generated when touched by a touch object at any position on the surface of the detection screen.

In this embodiment, each elastic wave sensor transmits its detected elastic wave signal in real time to the elastic wave processor. For the elastic wave processor, it may receive elastic wave signals generated by at least two elastic wave sensors. The elastic wave signals generated by each elastic wave sensor are treated as elastic wave signals of one channel, and the elastic wave processor may receive elastic wave signals of at least two channels.

Multiple elastic wave sensors run simultaneously on an interactive board to recognize the material of the touch object. As touch operation is a subjective behavior of the user, the coordinates of the touch object touching the screen surface may be at any position on the screen surface. Therefore, when the installation position of the elastic wave sensor is fixed, the strength and time of the elastic wave signal detected by different elastic wave sensors vary, it is easy to encounter situations where the elastic wave signal detected by the elastic wave sensor closer to the contact coordinate is stronger and earlier in time, while the elastic wave signal detected by the elastic wave sensor farther from the contact coordinate is weaker and longer in time.

For example, as shown in Fig. 11B, the user uses a stylus to touch the bottom right corner of the screen surface of the interactive board. The elastic wave sensor 200 located at the bottom right of the screen is the closest to the touch coordinate, followed by the elastic wave sensor 200 located in the middle of the screen bottom and the right side of the screen top. The elastic wave sensor 200 located at the bottom left of the screen and the left side of the screen top is the farthest from the touch coordinate. Therefore, the elastic wave sensor 200 located at the bottom right of the screen detects the strongest and earliest elastic wave signal, followed by the elastic wave sensor 200 located in the middle of the bottom and top right of the screen. The elastic wave sensor 200 located on the bottom left and top left of the screen detects the weakest and latest elastic wave signal.

Then, the vibration signals corresponding to the touch operation perceived by the sensors on the right and lower sides closer to the touch point are earlier than the vibration signals corresponding to the touch operation perceived by the sensors on the left and upper sides farther away from the touch point. Therefore, for sensors farther away from the touch operation, the vibration signals obtained will decay or be affected by noise for a longer time, and further affects the accuracy of touch object recognition.

In this case, the elastic wave processor may fuse the elastic wave signals of at least two channels into elastic wave signals of one channel, that is, equivalent the elastic wave signals generated by at least two elastic wave sensors to the elastic wave signals generated by one elastic wave sensor, avoiding that a single elastic wave sensor causes the elastic wave signal to fail due to abnormalities and lead wires to misidentification of materials. Moreover, the method of equivalent elastic wave signal can enhance the stability of the recognized elastic wave signal, avoiding signal interference caused by different modal effects at different positions and differences in elastic wave sensors, thereby improving the accuracy of material recognition.

In an embodiment of the present disclosure, Step 1003 may include the following steps:

Step 10031, identifying whether the touch object has touched the screen surface based on the elastic wave signal; if so, then proceeding to Step 10032.

The elastic wave signal reflects the transmission of elastic waves on the screen. The elastic wave signal when a touch object touches the screen surface is significantly different from the elastic wave signal when no touch object touches the screen surface in the time and/or frequency domains. Therefore, by analyzing the characteristics of the elastic wave signal, it may be determined whether the touch object touches the screen surface.

In an embodiment of the present disclosure, Step 100311 may include the following steps:

Step 100311, determining a noise threshold.

Due to the significant changes in the elastic wave signal when the touch object touches the screen surface, in this embodiment, it may be determined whether the touch object touches the screen surface based on the signal-to-noise ratio changes of the elastic wave signal.

Furthermore, the signal-to-noise ratio change of the elastic wave signal when a conventional touch object touches the screen surface may be experimentally tested, and a threshold may be set for this signal-to-noise ratio change, denoted as the noise threshold.

In one case, considering that the touch object touches the screen surface mainly in two touch states, whether the touch object touching the screen surface in the a touch state of pressing (*Down*) or the touch object touching the screen surface in the touch state of moving (*Move*), the elastic wave signal changes strongly in these two touch states. Therefore, a fixed empirical value may be set for the noise threshold for different touch states.

In another case, considering that the environment in which the interactive board is located is not consistent, wind blowing, nearby personnel walking, speaker vibration, and other situations may all generate elastic waves to a certain extent. In this case, the elastic wave sensor generates elastic wave signals that belong to noise.

In different situations, the noise in the environment varies. If a fixed noise threshold is used, the sensitivity of detecting whether the touch object touches the screen surface decreases. Therefore, the noise threshold may be dynamically adjusted for different environments to improve the sensitivity of detecting whether the touch object touches the screen surface, which avoids the issue of false triggering caused by vibration and noise interference of elastic wave signals, so that touch time T2 and corresponding elastic wave signals are detected more accurately, thereby improving the accuracy of material recognition.

In this case, the presence of touch time T1 in the recent period can be queried in the local cache of the elastic wave processor. The touch time T1 is the time when the infrared processor or central processor detects a touch object based on the infrared signal and collects the infrared signal. Therefore, the touch time T1 is the time when the infrared signal used to detect the touch object is collected. For easy identification, the infrared signal can be recorded as the target infrared signal, That is, the touch time T1 is the time when the target infrared signal is collected, and the target infrared signal is the infrared signal that detects the touch object, which is transmitted by the infrared processor or central processing unit to the elastic wave processor.

If there is no touch time T1 in the recent period, it may be considered that there is currently no touch object approaching or touching the screen surface of the interactive board. At this point, the noise threshold may be updated.

Furthermore, the peak value (VPP) of the elastic wave signal during the recent period may be queried.

Whether the peak value of the elastic wave signal has reached the preset energy threshold is judged.

If the peak value of the elastic wave signal is less than or equal to the preset energy threshold, it indicates that the background noise (i.e. background noise) of the current environment is small, and a smaller noise threshold is applicable. In this case, the noise threshold is set to the smaller first value TH1.

If the peak value of the elastic wave signal is greater than the preset energy threshold, it indicates that the bottom noise of the elastic wave signal is large, and a larger noise threshold is applicable. In this case, the noise threshold is set to the larger second value TH2, where the second value is greater than the first value.

If a touch time T1 exists in the recent period, it may be considered that there is currently a touch object approaching or touching the screen surface of the interactive board. At this time, the current noise threshold may be maintained without updating it.

Step 100312, adding a time window to the elastic wave signal.

In this embodiment, a preset length time window may be added to the elastic wave signal, and the time window may be moved based on the preset step size.

In general, the step size of the movement is smaller than the length of the time window.

Step 100313, calculating the ratio of the energy of the elastic wave signal within the current time window to the energy of the elastic wave signal within the previous time window.

Step 100314, when the ratio is greater than the noise threshold, determining whether the touch object touches the screen surface.

The ratio of the energy of the elastic wave signal within the current time window to the energy of the elastic wave signal within the previous time window is calculated, to obtain the change in signal-to-noise ratio.

The ratio is compared with the current noise wave signal.

If the ratio is greater than the noise threshold, it indicates a significant change in the signal-to-noise ratio and it may be considered as having a touch object touching the screen surface.

If the ratio is less than or equal to the noise threshold, it indicates that the change in signal-to-noise ratio is small, and it may be considered that no touch object has touched the screen surface.

Step 10032, determining the touch time.

If it is determined that the touch object touches the screen surface, the time of collecting the elastic wave signal may be recorded as the touch time T2, and the touch time T2 may be cached locally in the elastic wave processor. Therefore, the touch time T2 is the time of collecting the elastic wave signal when the touch object touches the screen surface based on the elastic wave signal. For ease of differentiation, the elastic wave signal may be recorded as the target elastic wave signal, that is, Touch time T2 is the time when the target elastic wave signal is collected, and the target elastic wave signal is the elastic wave signal that detects the touch object. Therefore, touch time T2 is the time when the elastic wave signal used to detect the touch object is collected.

Multiple elastic wave sensors are installed on the back of the screen of the interactive board. Due to differences in parameters such as intensity and time, the elastic wave signals collected by each elastic wave sensor for the same touch object touching the surface of the interactive board may vary.

If these differences are small, it is possible to maintain the time for the elastic wave sensor to collect the elastic wave signal.

If these differences are significant, the time when the elastic wave sensor collects the elastic wave signal may be corrected. The touch time T2 is selected from the time when the corrected elastic wave signal is collected, thereby improving the accuracy of the touch time T2.

In the optional implementation, the strength relationship of the signal-to-noise ratio of the elastic wave signal of each channel reflects to some extent the length relationship between the elastic wave sensor and the coordinates of the touch object touching the screen surface. The stronger the signal-to-noise ratio of the elastic wave signal is, the closer the elastic wave sensor is to the coordinates of the touch object touching the screen surface, and the shorter the time for the elastic wave to be transmitted to the elastic wave sensor, the higher the time accuracy of the elastic wave sensor in collecting the elastic wave signal, on the contrary, the weaker the signal-to-noise ratio of the elastic wave signal is, the farther the elastic wave sensor is from the coordinate where the touch object touches the screen surface, the longer the time for the elastic wave to transmit to the elastic wave sensor. There may be phenomena such as signal attenuation or noise influence, which weakens the energy of the elastic wave signal, and then, the lower the accuracy of the time when the elastic wave sensor collects the elastic wave signal, therefore, the elastic wave signal with the highest signal-to-noise ratio may be selected as the reference signal among the elastic wave signals of each channel.

The time for collecting elastic wave signals from each channel is compared with the time for collecting reference signals.

When the difference between the time for collecting the elastic wave signal of a certain channel and the time for collecting the reference signal is greater than the preset interval threshold, it indicates that there is a significant difference between the two. The time for collecting the elastic wave signal of that channel may be adjusted to the time for collecting the reference signal.

When the difference between the time for collecting the elastic wave signal of a certain channel and the time for collecting the reference signal is less than or equal to the preset interval threshold, it indicates that the difference between the two is small and the time for collecting the elastic wave signal of that channel may be maintained.

The interval threshold may be a default empirical value, or may be dynamically adjusted based on the distribution of elastic wave sensors to improve the accuracy of correction as much as possible, which is not limited in this embodiment.

Furthermore, the interval threshold is the ratio of the reference distance to the propagation speed of the reference signal, where the reference distance is the maximum distance between multiple elastic wave sensors.

In this example, the propagation speed of the elastic wave signal in each channel is fixed, so the interval threshold is determined by the maximum distance between the elastic wave sensors. The interval threshold between different sizes of interactive plates may be different.

For example, on a certain interactive board, the time for the touch object to touch the screen surface is 0ms (millisecond) and the coordinates are (x0, y0). The duration of the elastic wave on the screen is 100ms. At this time, the elastic wave sensor A closest to (x0, y0) may detect the elastic wave and generate the elastic wave signal at $1^{st}$ ms after the touch object touches the screen surface, that is, the time for the elastic wave sensor A to collect the elastic wave signal is $1^{st}$ ms. Due to the fact that elastic wave sensor A is the closest elastic wave sensor to (x0, y0), the signal-to-noise ratio of the generated elastic wave signal is the highest, serving as a reference signal. However, an elastic wave sensor B, which is farther away from (x0, y0), takes $5^{th}$ ms to acquire the elastic wave generated when the same touch object touches the screen surface. That is, the time for elastic wave sensor B to collect the elastic wave signal is $5^{th}$ ms, and if the interval threshold on the current interactive board is $2^{nd}$ ms, the difference between the time when elastic wave sensor B collects elastic wave signals and the time when elastic wave sensor A collects elastic wave signals is greater than the interval threshold, and thus, the time when elastic wave sensor B collects elastic wave signals is corrected to $1^{st}$ ms.

Step 10033, extracting partial elastic wave signals located after the touch time in each channel as a first candidate signal in each channel.

After determining the touch time T2, elastic wave signal having a fixed length obtained backward by taking T2 as a starting point in each channel is recorded as the first candidate signal D1 of each channel. Then $D1=(d_1, d_2,..., d_n)^T$, where $d_1, d_2,..., d_n$ are the elastic wave signals located after touch time T2 in the first, second,..., and nth channels respectively, with superscript T indicating transposition.

In general, the time length may be set according to the actual business and belongs to a default empirical value, such as 50ms or 60ms.

Exemplarily, the touch time T2 is $1^{st}$ ms, the time length is 50ms, and the first candidate signal is the elastic wave

signal from the 1st ms to the 51st ms.

Step 10034, extracting signals in the preset frequency band from the first candidate signals of each channel to obtain the second candidate signal in each channel.

In this embodiment, experiments may be conducted on the elastic wave signals generated by conventional touch objects touching the screen surface of the interactive board in advance to find the frequency band where the valid signal is located, and the upper and lower limits of this frequency band may be represented.

For the first candidate signal D1 of each channel, the energy amplitude of the first candidate signal D1 in the time domain may be compared with the upper and lower limits of the frequency band.

If the energy amplitude of the first candidate signal D1 in the time domain is greater than the upper limit value, it indicates that the first candidate signal D1 is distorted and belongs to an abnormal signal. This part of the abnormal signal should be filtered out.

If the energy amplitude of the first candidate signal D1 in the time domain is less than the lower limit value, it indicates that the energy of the first candidate signal D1 is too low and the signal is invalid, belongs to an abnormal signal and should be filtered out.

If the energy amplitude of the first candidate signal D1 in the time domain is less than or equal to the upper limit value and greater than or equal to the lower limit value, the first candidate signal D1 is valid.

By using FFT (Fast Fourier Transform) and other methods to convert the valid first candidate signal D1 from the time domain to the frequency domain, the second candidate signal D2 in each channel is obtained, and thus, D2=($d_{21}$, $d_{22}$,..., $d_{2n}$)$^T$, where $d_{21}$, $d_{22}$,..., $d_{2n}$ are the valid elastic wave signals in the first, second,..., and nth channels, respectively.

Step 10035, fusing the second candidate signal from each channel into the third candidate signal.

For the second candidate signal of each channel, a channel fusion strategy may be used to eliminate the influence of differences in elastic wave sensors and the influence of different modes caused by the touch position, and the valid elastic wave signals in each channel may be fused into the third candidate signal D3.

Before fusion, methods such as Min Max Normalization, Z-score Normalization, neural network normalization (such as logarithmic function normalization, arctangent function normalization), and L2 norm normalization may be used to normalize the second candidate signal channel by channel, i.e, each given second candidate signal is defined within a certain range (such as [0, 1], [-1, 1], etc.) to eliminate the adverse effects caused by singular sample data.

In the optional implementation, the fusion strategy includes at least one of the followings:

1. Weighted average

In this fusion strategy, the elastic wave sensor is configured with corresponding weights based on factors such as the installation position of the elastic wave sensor, and the product between the second candidate signal D2 of each channel and the corresponding weights of each channel is calculated as the modulation candidate signal. The modulation candidate signals of each channel are added to obtain the third candidate signal D3.

The process of weighted averaging may be expressed as:

$$D3 = \sum_{i=1}^{n} w_i \times d_{2i}$$

where $n$ is the number of channels, $w_i$ is the weight corresponding to the i-th channel, $d_{2i}$ is the second candidate signal for the i-th channel.

2. Neural network

In this fusion strategy, one or more layers of neural networks are loaded, and the second candidate signal D2 of each channel is linearly fused and activated to obtain the third candidate signal D3 in the neural network.

The process of neural networks may be expressed as:

$$D3 = f(\sum_{i=1}^{n} w_i \times d_{2i} + b_i)$$

where $n$ is the number of channels, $w_i$ and $b_i$ are parameters in the neural network, f is an activation function, which is used to activate the features output by one or more layers of neural networks, $d_{2i}$ is the second candidate signal for the ith channel.

3. System functions

In this fusion strategy, the system function of elastic waves propagating from the touched coordinates to each elastic wave sensor is calculated. The second candidate signal D2 of each channel elastic wave sensor is divided by the system function and the mean is taken to obtain the third candidate signal D3.

The process of system functions may be expressed as:

$$D3 = \frac{\sum_{i=1}^{n} \frac{d_{2i}}{H_i}}{n}$$

where $n$ is the number of channels, $d_{2i}$ is the second candidate signal for the i-th channel, often represented by a Laplace transform signal, $H_i$ is the system function corresponding to the i-th channel.

The above fusion strategy is only an example. When this embodiment is implemented, other fusion strategies may be set according to the actual situation, which is not limited in this embodiment. Moreover, in addition to the above fusion strategies, those skilled in the art may also adopt other fusion strategies according to actual requirements, which is not limited in this embodiment.

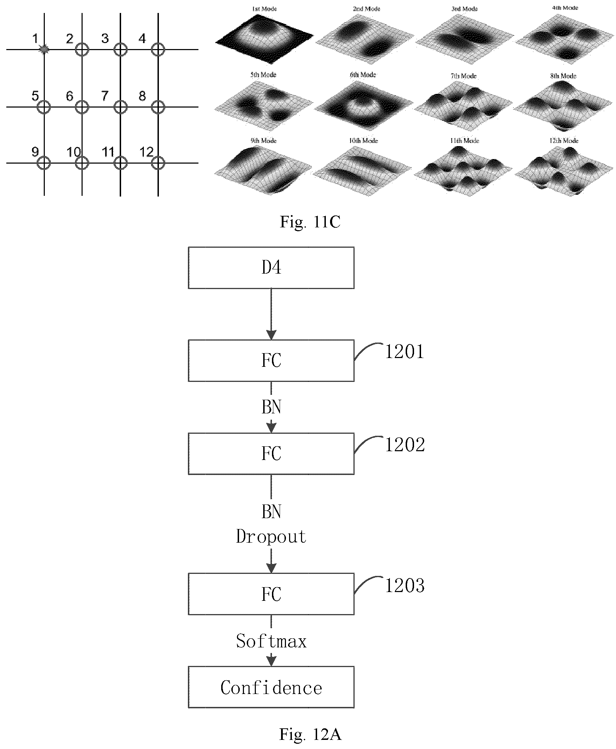

As shown in Fig. 11C, on the left side of Fig. 11C, coordinates numbered 1-12 are provided on the screen surface of an interactive board. The touch object touches the screen surface at the coordinates numbered 1. At this time, on the right side of Fig. 11C are the modal modes of elastic waves transmitted at each coordinate. Therefore, elastic wave sensors at different positions will collect different modes of elastic waves, showing differences in the generated elastic wave signals. Each elastic wave sensor reflects partial information about the vibration characteristics of the touch object, thus limiting the material recognition rate of a single elastic wave sensor, resulting in a decrease in recognition rate. Therefore, the linear or nonlinear superposition of elastic wave signals collected by multiple elastic wave sensors is used to achieve fusion, enhance the expression of material information, make the elastic wave signal more stable, and avoid the impact of differences in elastic wave signals generated by various elastic wave sensors due to different contact coordinates on material recognition.

Step 10036, filtering the third candidate signal to obtain an equivalent elastic wave signal.

In this embodiment, algorithms such as smooth filtering (such as adding a Hamming window to perform convolutional filtering on the third candidate signal) may be used to filter the third candidate signal, obtaining an equivalent elastic wave signal D4, enhancing the stability of the elastic wave signal, suppressing some noise interference, and thus improving the accuracy of material recognition.

Step 1004, determining the material recognition network.

**In** this embodiment, a model based on deep learning may be pre-constructed, denoted as a material recognition network. This embodiment does not limit the type and layer structure of the material recognition network.

The material recognition network is trained with samples pre-labeled with multiple materials of the touch object, so that the material recognition network is used to recognize the material of the touch object based on the elastic wave signal, that is, the input of the material recognition network is the elastic wave signal, and the output is the confidence (also known as probability) that the touch object belongs to various materials.

Furthermore, material recognition networks are not limited to manually designed neural networks. Material recognition networks may also be optimized through model quantification methods, or may be searched through NAS (Neural Architecture Search) methods, which is not limited in this embodiment.

When the material of a touch object is recognized, the material recognition network (including parameters) may be loaded into memory for operation.

In an embodiment of the present disclosure, as shown in Fig. 12A, the material recognition network includes a first fully connected layer 1201, a second fully connected layer 1202, and a third fully connected layer 1203. The first fully connected layer 1201, the second fully connected layer 1202, and the third fully connected layer 1203 all belong to Fully Connected (FC) layer, where each node is connected to all nodes of the previous layer to synthesize the input features, is mapped from one feature space to another through nonlinear changes, and for the third fully connected layer, each node is mapped from one feature space to the sample label space (i.e. label) through nonlinear changes.

In this embodiment, some commonly used touch objects may be divided into different materials in advance based on the business requirements of the interactive board.

Exemplarily, the material of the touch object includes at least one of the followings: a stylus, and a hand.

In this example, if the stylus tip and the stylus head are made of different materials, the material of the stylus may be further distinguished as the stylus tip and the stylus head.

For these touch objects, the elastic wave signal generated when they touch the screen surface of the interactive board may be collected, and the material may be labeled as the elastic wave signal.

In this embodiment, Step 1004 may include the following steps:

Step 10041, in the first fully connected layer, mapping the elastic wave signal as a sample to the first feature signal.

In this embodiment, a sufficient number of equivalent elastic wave signals D4 are pre-collected, some of which are used as samples to train the material recognition network, and some are used as validation sets to validate the material recognition network.

For the elastic wave signal D4, its material may be manually labeled and one hot label may be generated:

$$L_q= (l_1,l_2,\ldots,l_t)^{\text{T}}$$

$$l_{i=q}=1 \ (i=1,2,\ldots,t)$$

$$l_{i\neq q}=0 \ (i=1,2,\ldots,t)$$

$L_q$ is the label of the qth material, and t is the total number of materials.

As shown in Fig. 12A, the elastic wave signal D4 as a sample is input into the first fully connected layer 1201. In the first fully connected layer 1201, the elastic wave signal is mapped as a new feature, recorded as the first feature signal, and output to the first fully connected layer 1201.

Furthermore, the elastic wave signal D4 is a one-dimensional data $X=(x_1, x_2,..., x_n)^T$, where n is the number of sampling points. The first feature signal $S=(s_1, s_2,..., s_m)^T$ is obtained by mapping through the first fully connected layer 1201, and m is the number of nodes (i.e. the number of dimensions of the first feature signal) in the first fully connected layer 1201. The mapping process is represented as follows:

$$s_j = g(\sum_{i=1}^{k} w_{ij} \times x_{ij} + b_{ij})$$

where $s_j$ is the jth node corresponding to the first characteristic signal, $x_{ij}$ is the elastic wave signal in ith frame, totaling k frames, $w_{ij}$ and $b_{ij}$ is the weight parameter of the jth node in the first full connection layer 1201, and g is the activation function.

For the first feature signal, operators such as BN (Batch Normalization), GN (Group Normalization), FRN (Filter Response Normalization) may be used to perform normalization processing on the first feature signal. The first feature signal is marked as $V=(v_1, v_2,..., v_n)^T$ to accelerate training speed and alleviate gradient dispersion.

Taking BN as an example, the normalization process is as follows:

$$v_j = \gamma_b \left(\frac{s_j - m_b}{\sigma_b}\right) + \beta_b$$

where $v_j$ is the first feature signal normalized by the jth frame, $\beta_b, \gamma_b, m_b, \sigma_b$ are all training parameters, $s_j$ is the first feature signal corresponding to the jth node.

After the first fully connected layer 1201 and normalization processing, the equivalent elastic wave signal is nonlinearly mapped into the first characteristic signal.

Step 10042, in the second fully connected layer, mapping the first feature signal to the second feature signal.

In this embodiment, as shown in Fig. 12A, the first feature signal is input into the second fully connected layer 1202, and in the second fully connected layer 1202, the first feature signal is mapped to a new feature, denoted as the second feature signal, and output to the second fully connected layer 1202.

For the second feature signal, operators such as BN, GN, FRN may be used to perform normalization processing on the first feature signal, accelerating training speed and alleviating gradient dispersion.

When training the material recognition network, Dropout operation is executed, that is, temporarily discard (or shield) the neurons of at least one of the first full connection layer 1201, the second full connection layer 1202 and the third full connection layer 1203 based on a certain probability (such as Bernoulli distribution probability) in this training, that is, during this training, some neurons of at least one of the first full connection layer 1201, the second full connection layer 1202 and the third full connection layer 1203 do not work, which has the effect of simplifying the material recognition network, so as to avoid overfitting.

Step 10043, in the third fully connected layer, mapping the second feature signal to the third feature signal.

In this embodiment, as shown in Fig. 9E, the second feature signal is input into the third fully connected layer 1203. In the third fully connected layer 1203, the second feature signal is mapped to a new feature, denoted as the third feature signal, and output to the third fully connected layer 1203.

Step 10044, mapping the third feature signal to the confidence level that the touch object belongs to various materials.

In this embodiment, as shown in Fig. 12A, Softmax and other functions may be used to map the third feature signal to the confidence that the touch object belongs to various materials. The confidence is represented as $Y=(y_1, y_2,..., y_t)^T$, where t is the type of material.

Step 10045, calculating the loss value based on the confidence level of each material and the material used as the label.

For elastic wave signals, there are both labeled labels (i.e. materials) and predicted materials. At this time, the labeled labels (i.e. materials) and the confidence of each material may be simultaneously substituted into cross entropy loss function, comparison loss function, LOG (logarithm) function, KL (Kullback Leible) divergence, average absolute error and other loss function, so as to calculate the difference between the second category and the article status. If the loss value *Loss* is obtained, the loss value represents the loss of the material recognition network in classifying touch objects.

In an example, each material is traversed, if the touch object belongs to that material, the label labeled as belonging to that material will be set to 1. If the touch object label does not belong to that material, the label labeled as belonging to that material will be set to 0.

For each material, a logarithm of the confidence level of the touch object belonging to that material is taken.

For each material, the product between the label and the logarithm are calculated. For all materials, the opposite number of the sum of all products is taken as the loss value.

In this example, the loss function is expressed as follows:

$$\text{Loss} = -\sum_{i=1}^{t} l_i log y_i$$

where **Loss** is the loss value, t is the number of materials, $i \in t$, $l_i$ is the label that labels the touch object as belonging to material i, usually 0 or 1, and $y_i$ is the confidence level of predicting that the touch object belongs to material i.

Step 10046, updating the parameters in the first fully connected layer, the second fully connected layer, and the third fully connected layer based on the loss value.

In this embodiment, back-propagation may be performed on the first fully connected layer 1201, the second fully connected layer 1203, and the third fully connected layer 1203, and the loss value may be substituted into optimization algorithms such as SGD (stochastic gradient descent) and Adam (adaptive momentum) to calculate the gradient of the parameters in the first fully connected layer 1201, the parameters in the second fully connected layer 1202, and the parameters in the third fully connected layer 1203, respectively, the parameters in the first fully connected layer 1201, the second fully connected layer 1202, and the third fully connected layer 1203 are updated based on this gradient.

The structure of the material recognition network mentioned above is only as an example. When this embodiment is implemented, the structure of other material recognition networks may be set according to the actual situation. For example, the structure of the material recognition network includes four fully connected layers, etc., which is not limited in this embodiment. Moreover, in addition to the structure of the material recognition network mentioned above, those skilled in the art may also use other material recognition network structures according to actual requirements, which is not limited in this embodiment.

Step 10047, judging whether the preset training conditions are met; if so, then proceeding to step 10048; if not, returning to steps 10041 to 10047.

Step 10048, confirming that the material recognition network training is completed.

In this embodiment, training conditions may be pre-set, which are the conditions for stopping the training of the material recognition network. For example, the loss value is less than a certain threshold, the amplitude of continuous changes in the loss value is less than a certain threshold, the number of iterations of training exceeds a certain threshold, and the like. In each round of iterative training, it is determined whether the training conditions are met.

If the training conditions are met, it may be considered that the training of the material recognition network has been completed. The structure of the material recognition network and the trained parameters are recorded in the database.

If the training conditions are not met, the next round of iterative training is proceeded to and steps 10041 to 10047 are repeated. The iterative training is repeated until the material recognition network training is completed.

For the trained material recognition network, a validation set may be used to determine whether the material recognition network meets the requirements. When a certain indicator in the validation set meets the requirements, if the recognition accuracy exceeds a certain threshold, the parameters in the material recognition network are determined as the final parameters.

Step 1005, inputting the elastic wave signal into the material recognition network to output the confidence level that the touch object belongs to each preset material.

In this embodiment, the equivalent elastic wave signal is input into the material recognition network, which processes the elastic wave signal based on its own logic and outputs the confidence level that the touch object belongs to each preset material.

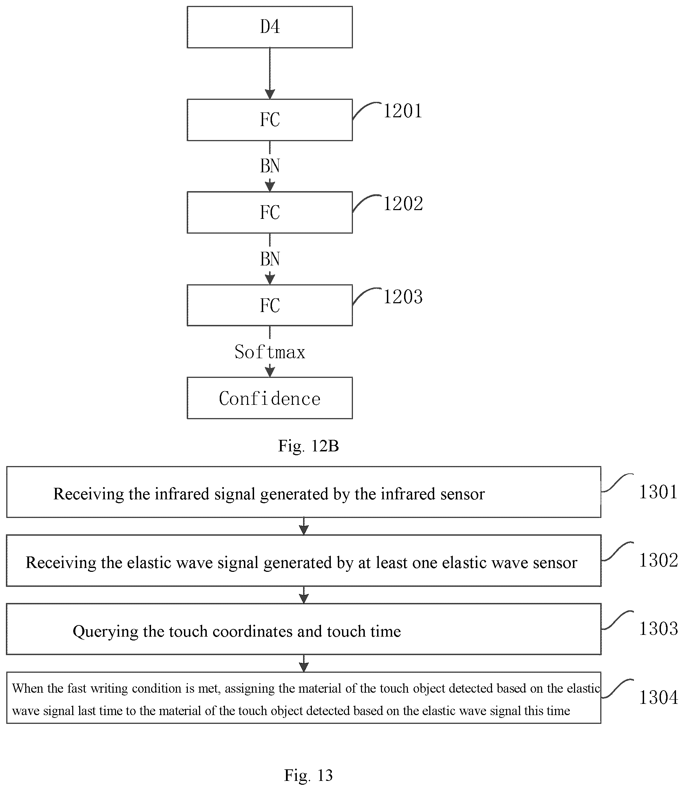

In an embodiment of the present disclosure, as shown in Fig. 12B, the material recognition network includes a first fully connected layer 1201, a second fully connected layer 1202, and a third fully connected layer 1203. In this embodiment, step 1005 may include the following steps:

Step 10051, in the first fully connected layer, mapping the elastic wave signal to the first characteristic signal.

In this embodiment, as shown in Fig. 12B, the equivalent elastic wave signal D4 is input into the first fully connected layer 1201. In the first fully connected layer 1201, the elastic wave signal is mapped as a new feature, denoted as the first feature signal, and output to the first fully connected layer 1201.

For the first feature signal, operators such as BN, GN, FRN may be used to perform normalization processing on the first feature signal, so as to accelerate training speed and alleviating gradient dispersion.

Step 10052, in the second fully connected layer, mapping the first feature signal to the second feature signal.

In this embodiment, as shown in Fig. 12B, the first feature signal is input into the second fully connected layer 1202, and in the second fully connected layer 1202, the first feature signal is mapped to a new feature, denoted as the second feature signal, and output to the second fully connected layer 1202.

For the second feature signal, operators such as BN, GN, FRN may be used to perform normalization processing on the first feature signal, so as to accelerate training speed and alleviating gradient dispersion.

Step 10053, in the third fully connected layer, mapping the second feature signal to the third feature signal.

In this embodiment, as shown in Fig. 12B, the second feature signal is input into the third fully connected layer 1203, and in the third fully connected layer 1203, the second feature signal is mapped to a new feature, denoted as the third feature signal, and output to the third fully connected layer 1203.

Step 10054, mapping the third feature signal to the confidence level that the touch object belongs to various materials.

In this embodiment, as shown in Fig. 12B, Softmax and other functions may be used to map the third feature signal to the confidence that the touch object belongs to various materials.

In this embodiment, the material recognition network has higher accuracy and robustness.

Step 1006, if the area calculated based on the infrared signal for the touch object is obtained, correcting the confidence level of various materials by referring to the area.

In this embodiment, when the central processing unit receives an infrared signal reported by the infrared processing unit, it may calculate the projection of the touch object based on the strength of the measured values in the infrared signal, thereby calculating the area of the touch object. The area is the cross-sectional area of the touch object blocking the infrared signal.

In the case of interactive boards provided with fixed material touch objects, the area of touch objects of different materials has certain differences, which may be used as a characteristic of different materials.

The central processing unit may transmit the area of the touch object to the elastic wave processor through a USB component. After receiving the area of the touch object, the elastic wave processor predicts the material belonging to the touch object and its confidence. Reference may be made to the area of the touch object to fine tune and modify the confidence of various materials, so that the information dimension is enriched and the problem of material recognition rate caused by vibration interference of the elastic wave signal is improved.

In the optional implementation, the area of different touch objects when infrared signals are blocked on interactive boards may be calculated through experiments. Due to the fluctuation of this area, a reasonable fluctuation of the area may be represented by a range, which is recorded as the valid range.

For a given material, whether the area of the current touch object is within the valid range of the material is judged.

If the area of the current touch object is within the valid range of the material, it is possible that the current touch object belongs to the material. At this point, the confidence level corresponding to the material may be increased, and the increase is generally an empirical value.

If the area of the current touch object is outside the valid range of the material, it is possible that the current touch object does not belong to the material. In this case, the confidence level corresponding to the material may be reduced, and the reduction is generally an empirical value.

Step 1007, determining that the touch object belongs to the material with the highest confidence.

In this embodiment, various confidence levels may be compared to screen out the highest confidence level, thereby determining that the current touch object belongs to the material corresponding to this confidence level.

After the elastic wave processor detects the material of the touch object, it may be reported to the central processor through a USB component, which caches the material of the touch object.

If the material output from the material recognition network is a preset material, it indicates that the user has used a touch object that is compatible with the interactive board to trigger a touch operation. If the material output from the material recognition network is a material other than the preset material, it indicates that the user has used a touch object that is not compatible with the interactive board to trigger a touch operation.

Step 1008, when both the material of the touch object recognized based on the infrared signal and the material of the touch object recognized based on the elastic wave signal are received within the same time period, it is determined that the material of the touch object recognized based on the elastic wave signal is valid.

Step 1009, when both the material of the touch object recognized based on the infrared signal and the material of the touch object recognized based on the elastic wave signal are received within the same time period, it is determined that the material of the touch object recognized based on the infrared signal is valid.

Based on the infrared signal, these two operations of detecting whether there is a touch object approaching or touching the screen surface of the interactive board, and detecting the material of the touch object based on the infrared signal are relatively simple, fast in calculation speed, and low in the possibility of timeout. When determining whether there is a touch object approaching or touching the screen surface of the interactive board, it is required to report the material of the touch object within a certain period of time (such as 32ms), which avoids issues such as excessive calculation delay or writing delay caused by missed detection of elastic wave sensors.

Therefore, the central processing unit usually first caches the infrared signal reported by the infrared processor and the touch time T1, in order to detect the material of the touch object based on the infrared signal and start timing, waiting for the elastic wave processor to report and recognize the material of the touch object based on the elastic wave signal.

If the specified time period for timing ends without receiving the material of the touch object recognized based on the elastic wave signal reported by the elastic wave processor, it may be considered valid to recognize the material of the touch object based on the infrared signal, and the material of the touch object recognized based on the infrared signal should be applied.

If the elastic wave processor reports and recognizes the material of the touch object based on the elastic wave signal within the specified time period of timing, considering that the elastic wave signal has more obvious material specificity compared with the infrared signal, the accuracy of recognizing the material of the touch object based on the elastic wave signal is higher than that of recognizing the material of the touch object based on the infrared signal. At this time, it may be considered that recognizing the material of the touch object based on the elastic wave signal is valid, ignoring the recognition of the material of the touch object based on the infrared signal, and applying the recognition of the material of the touch object based on the elastic wave signal.

Fig. 13 is a flowchart of a material recognition method according to some embodiments of the present disclosure. The method includes:

Step 1301, receiving the infrared signal generated by the infrared sensor.
Step 1302, receiving the elastic wave signal generated by at least one elastic wave sensor.
Step 1303, querying the touch coordinates and touch time.

In this embodiment, the infrared processor processes the infrared signal, calculates the coordinates of the touch object, and records them as the touch coordinates. That is, the touch coordinates are the coordinates of the touch object detected based on the infrared signal. In addition to reporting the touch coordinates to the central processor through the USB component, the central processor transmits the touch coordinates to the elastic wave processor through the USB component, and the elastic wave processor caches the touch coordinates locally.

Alternatively, the central processing unit receives the infrared signal transmitted by the infrared processor, calculates the coordinates of the touch object, and records them as touch coordinates. That is, the touch coordinates are the coordinates of the touch object detected based on the infrared signal. The touch coordinates are transmitted to the elastic wave processor through a USB component, which locally caches the touch coordinates.

The elastic wave processor may search for touch coordinates and touch time T1 in the local cache, where touch time T1 is the time when a touch object is detected based on the infrared signal and the infrared signal is collected.

Step 1304, when the fast writing condition is met, assigning the material of the touch object detected based on the elastic wave signal last time to the material of the touch object detected based on the elastic wave signal this time.

In this embodiment, fast writing conditions may be pre-set, which represent the condition for users to quickly write on the screen of the interactive board.

In the optional implementation, the fast writing condition is that the distance between the last touch coordinate and the current touch coordinate is less than the preset first interval threshold, and the difference between the last touch time and the current touch time is less than the preset second interval threshold.

When the time between two adjacent detections is fixed, the distance between the last touch coordinates and the current touch coordinates is less than the preset first interval threshold, indicating that the writing movement distance is small. The difference between the last touch time and the current touch time is less than the preset second interval threshold, indicating that the writing interval time is small. At this time, it may be considered that the user quickly writes on the screen of the interactive board, and the material of the touch object will not change in a short period of time. Therefore, the elastic wave processor may assign the material of the touch object detected based on the elastic wave signal last time to the material of the touch object detected based on the elastic wave signal this time, so as to avoid the need to detect the material of the touch object again based on the elastic wave signal. This may reduce the computational complexity of partial material recognition, improve the delay problem of material recognition, and improve the response speed of material recognition.

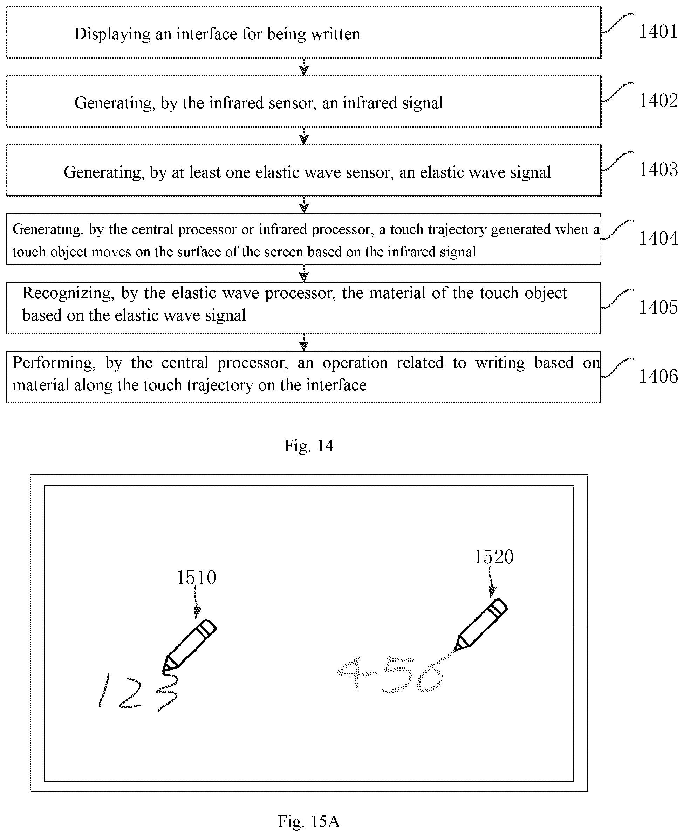

Fig. 14 is a flowchart of a writing method according to some embodiments of the present disclosure. This embodiment may be applicable to the use of the elastic wave sensor to recognize the material of the touch object and switch to the corresponding configuration. The method may be executed by a writing device, which may be implemented in hardware and/or software and may be configured in the interactive board described in any embodiment of the present disclosure, The optional steps include:

Step 1401, displaying, by the screen, an interface for being written.

In the interactive board, there is a screen configured. The GPU, driver, and other components on the screen receive information from the central processor, place it in the frame memory, and generate the serial display data and scan control timing required for the screen based on the partition drive method for video signals. The screen plays based on the serial display data and scan control timing, thereby displaying various images on the screen.

In an interactive board, the user triggers writing mode. In this mode, an interface may be displayed on the screen. Generally, the user may select the configuration parameters of the handwriting, such as color, width, dashed lines, etc., to write the handwriting on the interface based on the configuration parameters.

In practical applications, the interface used for writing may be an independent interface. For example, an interactive board provides an electronic whiteboard, where the user triggers a control operation to display the electronic whiteboard. The interactive board receives the control operation, displays the electronic whiteboard, and serves as the writing interface. At this time, the user may trigger a touch operation on the electronic whiteboard, which is represented in the form of a trajectory. Therefore, it may be called a touch trajectory, and the interactive board may display handwriting corresponding to the touch trajectory on the screen of the interactive board. The control operations of the displayed electronic whiteboard include but are not limited to touch operations, keyboard operations, mouse operations, and physical button operations.

In addition, the interface used for writing may also be an interface with a background. For example, the interactive board displays local courseware, screen images transmitted by the screen transmission device, and data belonging to the source device (such as a laptop). The user triggers annotation operations in the interactive board, and the interactive board receives the annotation operation, freezes the courseware, screen images, and other data, make it to be the background, which maintains the current frame image of data such as the display of the courseware and screen images, and generate a mask layer on the courseware, screen images, and other data to serve as the writing interface.

The so-called courseware may refer to the course documents made based on the requirements of teaching, through the determination of teaching objectives, analysis of teaching content and tasks, structure and interface design of teaching activities, etc. For example, the courseware may be a common format file such as Word document, PPT (PowerPoint, presentation), or a customized page composed of elements such as text, tables, pictures, etc., which is not limited in this embodiment.

Step 1402, generating, by the infrared sensor, an infrared signal.

Step 1403, generating, by at least one elastic wave sensor, an elastic wave signal.

The elastic wave signal is generated by the elastic wave generated by the touch object touching the screen.

Step 1404, generating, by the central processor or infrared processor, a touch trajectory generated when a touch object moves on the surface of the screen based on the infrared signal.

**In** the optional implementation, users may use their fingers, styluses, and other touch objects to approach or touch the screen surface of the interactive board. The infrared processor may calculate the touch coordinates of the touch objects based on the infrared signal, arrange the touch coordinates in chronological order, obtain the touch trajectory triggered by the user, and upload the touch trajectory to the central processor through a USB component, or the central processor receives the infrared signal, calculates the touch coordinates of the touch object based on the infrared signal, arranges the touch coordinates in chronological order, and obtains the touch trajectory triggered by the user.

**In** different scenarios, this touch track may be used to write handwriting.

For example, in teaching, conference, and other scenarios, there may be situations where multiple people are working on exercises and recording meeting minutes at the same time. In this case, multiple (at least two) touch objects simultaneously trigger touch operations for writing at different positions, which are often represented in the form of trajectories and may be called touch trajectories.

Step 1405, recognizing, by the elastic wave processor, the material of the touch object based on the elastic wave signal.

Step 1406, performing, by the central processor, an operation related to writing based on material along the touch trajectory on the interface.

In an interactive board, one or more touch objects may be configured, which may be configured by the manufacturer of the interactive board or by the user, which is not limited in this embodiment.

For touch objects of different materials, corresponding identifier (such as ID) may be configured, which is associated with writing or other operating styles. For the current touch object, its material may be detected.

Infrared processors may generate touch point data to be encapsulated in touch data packets during the detection of touch trajectory triggered by touch objects and reported to the central processing unit through USB components. Alternatively, the central processing unit may generate touch point data to be encapsulated in touch data packets during the detection of touch trajectory triggered by touch objects.

In general, touch data packets include at least one of the followings touchpoint data:

a status, a touch ID, an X coordinate, an Y coordinate, a width, and a height.

The width and height are rectangular boxes to indicate the shape of the touch object. In some touch algorithms, elliptical boxes are also used to indicate the shape of the touch object, namely the major axis, minor axis, and elliptical tilt angle.

At this point, the touch data package includes at least one of the followings touchpoint data:

a status, a touch ID, an X coordinate, an Y coordinate, a major axis, a minor axis, and an elliptical tilt angle.

In this example, the data format of the touch data packet is as follows:

| Stat e | Conta ct ID | X(LS B) | X(MS B) | Y(LS B) | Y(MS B) | W(LS B) | W(LS B) | H(MS B) | H(MS B) |
|--------|-------------|---------|---------|---------|---------|---------|---------|---------|---------|
| Stat us | Touch ID | X coordinate | | Y coordinate | | Width | | Height | |

On the one hand, after receiving the touch data packet in the upper layer application, the touch data packet may be parsed and the X coordinate, Y coordinate, and other data representing the touch trajectory may be read. On the other hand, after receiving the configuration information in the upper layer application, the writing style associated with the material may be parsed and writing related to the operations may be performed based on the writing style while moving along the touch trajectory.

In general, in the same classroom, meeting, and other scenarios, a user may use a fixed touch object. By distinguishing the configuration information of different touch objects, different forms of content may be written, which may distinguish the content written by different users.

In the optional implementation, corresponding identifier (such as ID) may be configured for the touch object based on the material.

For the material used as a sample (object) for the touch object, the writing style may be pre-set and represented by a specified identifier (such as ID). Therefore, if the touch object is a preset material, the corresponding identifier for the touch object may be configured.

For materials other than those used as touch object samples, in order to ensure normal user writing, they may be uniformly represented by default identifiers (such as IDs). If the touch object is not the preset material, a default identifier may be configured for the touch object.

It should be noted that the default identifier and the identifier corresponding to the preset material are not the same. The writing style associated with the default identifier and the identifier corresponding to the preset material are generally not the same. However, users may adjust the writing style associated with the default identifier and the identifier corresponding to the preset material, which is not limited in this embodiment.

In this embodiment, configuration information for writing may be pre-set for the touch object (represented by an identifier). The configuration information represents the writing style, which may be set by default at the factory of the interactive board or set by the user. In addition, this configuration information may be effective for all applications of the interactive board or for a specific application of the interactive board, and may also be effective for a specific user (represented by a user ID), which is not limited in this embodiment.

When a touch object writes, configuration information associated with the identifier for being written is extracted, and writing related to the operation is performed based on the configuration information along the touch trajectory on the writing interface.

In an embodiment of the present disclosure, the writing tool and operating parameters may be recorded in the configuration information, thus the associated writing tool and operating parameters related to the identifier may be read from the configuration information.

In this embodiment, the configuration information includes a writing tool and operating parameters, where the writing tool may refer to a tool used for being written, such as a pen, eraser, etc., and the operating parameters may refer to the parameters of the writing tool used.

In one example, if the writing tool is a stylus, the operating parameters include at least one of the followings: a color of the handwriting (such as red, blue, black, green, etc.), and a width of the handwriting (such as 1 pound, 2 pounds, etc.).

In another example, if the writing tool is an eraser, the operating parameters include at least one of the followings: the width and type of elimination.

The width of elimination may be represented by shapes such as rectangles, circles, etc. The types of elimination include eliminating handwriting located in the region where the eraser passes, and eliminating the entire handwriting.

The above-mentioned writing tools and their operating parameters are only examples. When the embodiments of the present disclosure are implemented, other writing tools and their operating parameters may be set according to the actual situation. For example, for a stylus, the operating parameters include whether it has a shadow, dashed line type, circular angle size, transparency, etc., which is not limited in the embodiments of the present disclosure. Moreover, in addition to the above-mentioned writing tools and their operating parameters, those skilled in the art may also use other writing tools and their operating parameters according to actual requirements, which is not limited in the embodiments of the present disclosure.

At this point, it may simulate the writing tool to perform operations related to writing based on the operating parameters along the touch trajectory on the writing interface.

During the process of moving along the touch trajectory, it is possible to simulate the operation that the writing tool may perform based on the corresponding operating parameters.

In one example, if the writing tool is a stylus, the handwriting will be displayed on the writing interface based on the operating parameters along the touch trajectory.

In another example, if the writing tool is an eraser, the handwriting will be eliminated on the writing interface based on the operating parameters along the touch trajectory.

In another example, if the writing tool is a selection tool, select elements (such as handwriting, images, icons, tables, etc.) along the touch trajectory on the writing interface.

The above examples may be applied separately to different touch objects or to the same touch object, which is not limited in this embodiment.

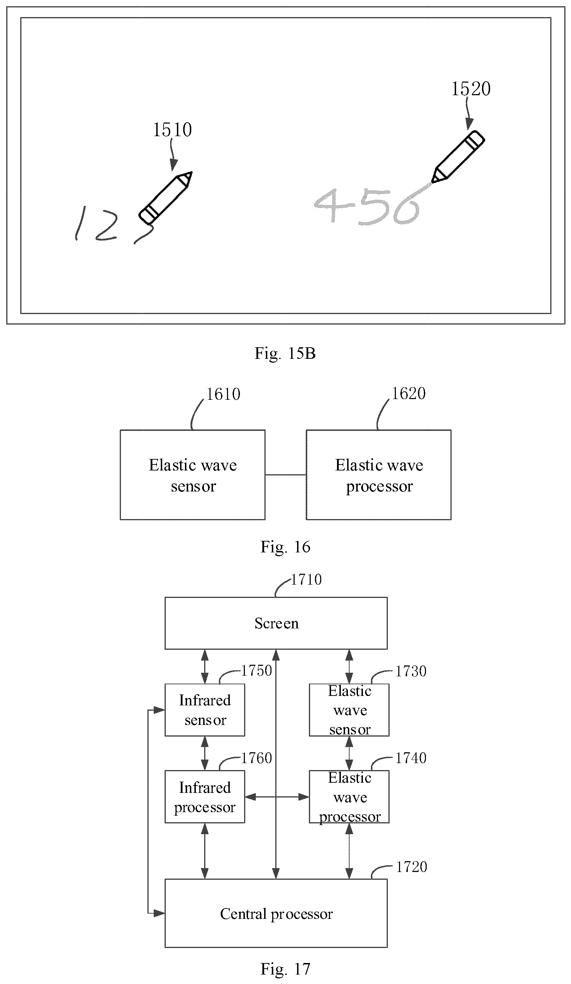

For example, as shown in Figs. 15A and 15B, one end of the touch object 1510 is made of wood to simulate a stylus, the other end of the touch object 1510 is made of rubber to simulate a rubber eraser, and one end of the touch object 1520 is made of plastic to simulate a stylus.

Assuming that User **A** writes "123" on one end of the simulating stylus in Touch Object 1510, and User **B** writes "456" on one end of the simulating stylus in Touch Object 1520, the color of "123" is darker than that of "456", and the width of "123" is smaller than that of "456", so that the contents written by User **A** and User **B** can be clearly distinguished.

If User **A** wants to modify "3", they may use one end of the simulating rubber eraser in touch object 1510 to modify "3".

In this example, users may write based on their habits of using a pencil without the need to call a shortcut of the eraser function, resulting in high writing efficiency.

By switching touch objects of different materials for being written, automatic switching of writing configuration may be achieved, without the need for users to call up a panel for controlling writing or adjust the configuration on this panel, greatly improving the simplicity of operation. This is particularly evident in scenarios such as classrooms where multiple people take turns answering and correcting exercises, meetings where multiple people repeatedly discuss and record in real time, thereby facilitating communication between users. In the case of a user using a fixed touch object, by distinguishing the configuration information of different touch objects and writing different forms of content, distinguishing the content written by different users can be achieved, and orderly recording of content is ensured, thereby facilitating later content organization.

In this embodiment, due to the fact that the material recognition is basically similar to the application of the previous embodiment, the description is relatively simple. Reference is made to the partial explanation of the previous embodiment for relevant details, and this embodiment will not be elaborated herein.

Fig. 16 is a structural schematic diagram of an interactive board according to some embodiments of the present disclosure, as shown in Fig. 16. The interactive board includes an elastic wave sensor 1610 and an elastic wave processor 1620 described in any embodiment of the present disclosure;

the elastic wave processor 1620 is used to receive at least one elastic wave signal generated by the elastic wave sensor 1610, which is generated by the elastic wave generated by a touch object touching the screen of the interactive board;

the elastic wave processor 1620 is used to recognize the material of a touch object based on the elastic wave signal.

The interactive board provided by the embodiments of the present disclosure may execute the material recognition method according to any embodiment of the present disclosure, and has corresponding functional modules and beneficial effects for executing the material recognition method.

In addition to elastic wave sensors, any structural feature in the interactive board may also refer to the above-mentioned embodiments, which will not be elaborated in this embodiment.

Fig. 17 is a structural schematic diagram of an interactive board according to some embodiments of the present disclosure, as shown in Fig. 16. The interactive board includes a screen 1710, a central processor 1720, an elastic wave sensor 1730, an elastic wave processor 1740, an infrared sensor 1750, and an infrared processor 1760 as described in any embodiment of the present disclosure;

the screen 1710 is configured to display an interface for being written;
the infrared sensor 1750 is configured to generate an infrared signal;
the elastic wave sensor 1730 is configured to generate an elastic wave signal, which is generated by the elastic wave generated by the touch object touching the screen 1710;
the central processor 1720 or the infrared processor 1750 is configured to generate a touch trajectory generated when a touch object moves on the surface of the screen based on the infrared signal;
the elastic wave processor 1730 is configured to recognize the material of the touch object based on the elastic wave signal;
the central processing unit 1720 is configured to perform writing related to the operation based on the material along the touch trajectory on the interface.

The interactive board according to the embodiments of the present disclosure may execute the writing method according to any embodiment of the present disclosure, and has corresponding functional modules and beneficial effects for executing the writing method.

In addition to elastic wave sensors, any structural feature in the interactive board may also refer to the above-mentioned embodiments, which will not be elaborated in this embodiment.

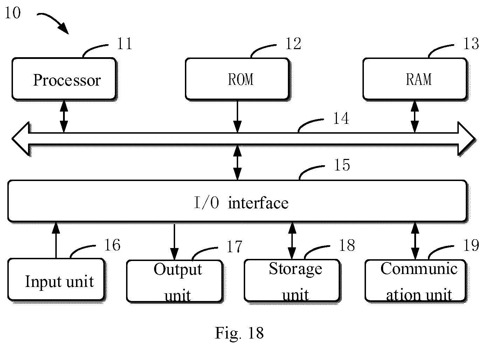

Fig. 18. The structural schematic diagram of an interactive board according to some embodiments of the present disclosure, the components shown in this description, their connections and relationships, and their functions are only examples and are not intended to limit the implementation of the present disclosure described and/or claimed in this article.

As shown in Fig. 18, the interactive board 10 includes at least one processor 11 and a memory communicated with at least one processor 11, such as read-only memory (ROM) 12, random access memory (RAM) 13, etc., where the memory stores computer programs that may be executed by at least one processor, the processor 11 may perform various appropriate actions and processes based on computer programs stored in read-only memory (ROM) 12 or loaded into random access memory (RAM) 13 from storage unit 18. In RAM 13, various programs and data required for an operation of the interactive board 10 may also be stored. The processor 11, ROM 12, and RAM 13 are connected to each other through the bus 14. The input/output (I/O) interface 15 is also connected to the bus 14.

Multiple components in the interactive board 10 are connected to an I/O interface 15, including: an input unit 16, such as a keyboard, mouse, etc; an output unit 17, such as various types of displays, speakers, etc; a storage unit 18, such as disks, optical discs, etc; and a communication unit 19, such as network card, modem, wireless communication transceiver, etc. The communication unit 19 allows the interactive board 10 to exchange information/data with other devices through computer networks such as Internet and/or various telecommunications networks.

The processor 11 may be various general and/or specialized processing components with processing and computing power. Some examples of the processor 11 include but are not limited to central processing units (CPUs), graphics processing units (GPUs), various specialized artificial intelligence (AI) computing chips, various processors running machine learning model algorithms, digital signal processors (DSPs), and any suitable processors, controllers, microcontrollers, etc. the processor 11 executes various methods and processes described above, such as material recognition methods or writing methods.

In some embodiments, the material recognition method or writing method may be implemented as a computer program, which is tangibly included in a computer-readable storage medium, such as storage unit 18. In some embodiments, some or all of the computer program may be loaded and/or installed on the interactive board 10 via ROM 12 and/or the communication unit 19. When a computer program is loaded into RAM 13 and executed by the processor 11, one or more steps of the material recognition method or writing method described above may be executed. Alternatively, in other embodiments, the processor 11 may be configured to perform material recognition methods or writing methods by any other appropriate means (such as by virtue of firmware).

The various implementations of the systems and technologies described above in this article may be implemented in digital electronic circuit systems, integrated circuit systems, field programmable gate arrays (FPGAs), specialized integrated circuits (ASICs), specialized standard products (ASSPs), systems on chip (SOC), load programmable logic devices (CPLDs), computer hardware, firmware, software, and/or combinations of them. These various implementation methods may include: implementation in one or more computer programs, which may be executed and/or interpreted on a programmable system including at least one programmable processor, which may be a dedicated or general-purpose programmable processor that may receive data and instructions from a storage system, at least one input device, and at least one output device, and transmit data and instructions to the storage system, at least one input device, and at least one output device.

The computer program used to implement the method of the present disclosure may be written in any combination of one or more programming languages. These computer programs may be provided to processors of general-purpose computers, specialized computers, or other programmable data processing devices, enabling the functions/operations specified in the flowchart and/or block diagram to be implemented when the computer program is executed by the processor. Computer programs may be completely executed on the machine, partially executed on the machine, partially executed as independent software packages on the machine, and partially executed on remote machines or completely executed on remote machines or servers.

In the context of the present disclosure, a computer-readable storage medium may be a tangible medium that contains or stores computer programs for use by or in combination with an instruction execution system, device, or device. Computer readable storage media may include, but are not limited to, electronic, magnetic, optical, electromagnetic, infrared, or semiconductor systems, devices, or devices, or any suitable combination of the above. Alternatively, the computer readable storage medium may be a machine readable signal medium. More specific examples of machine readable storage media may include electrical connections based on one or more wires, portable computer disks, hard drives, random access memory (RAM), read-only memory (ROM), erasable programmable read-only memory (EPROM or flash memory), optical fiber, compact disc read-only memory (CD-ROM), optical storage devices, magnetic storage devices, or any suitable combination of the above.

In order to provide interaction with users, the system and technology described herein may be implemented on an interactive board, which has a display device (such as a cathode ray tube (CRT) or liquid crystal display (LCD) monitor) for displaying information to users; and a keyboard and pointing device (for example, a mouse or a trackball) through which a user may provide input to an interactive board. Other types of devices may also be used to provide interaction with users; for example, the feedback provided to users may be any form of sensory feedback (such as visual feedback, auditory feedback, or tactile feedback); and may receive input from users in any form (including voice input, voice input, or tactile input).

The systems and technologies described herein may be implemented in computing systems that include backend components (such as serving as data servers), or computing systems that include middleware components (such as application servers) or in a computing system that includes front-end components (such as a user computer with a graphical user interface or web browser through which users may interact with the implementation of the system and technology described herein), or in a computing system that includes any combination of such back-end components, middleware components, or front-end components. The components of the system may be interconnected through any form or medium of digital data communication (such as communication networks). Examples of communication networks include local area networks (LANs), wide area networks (WANs), blockchain networks, and Internet.

Computing systems may include both clients and servers. The client and server are generally far away from each other and typically interact through communication networks. A client server relationship is generated by running computer programs on corresponding computers that have client server relationships with each other. A server may be a cloud server, also known as a cloud computing server or cloud host, which is a host product in the cloud computing service system to solve the shortcomings of high management difficulty and weak business scalability in traditional physical hosts and VPS services.

The embodiments of the present disclosure further provide a computer program product, which includes a computer program that implements a material recognition method or writing method according to any embodiment of the present disclosure when executed by a processor.

In the implementation process of computer program products, computer program code for executing the operations of the present disclosure may be written in one or more programming languages or combinations thereof. Programming languages include object-oriented programming languages such as Java, Smalltalk, C++, as well as conventional procedural programming languages such as "C" or similar programming languages. Program code may be completely executed on the computer of the user, partially executed on the computer of the user, executed as a standalone software package, partially executed on the computer of the user, partially executed on a remote computer, or completely executed on a remote computer or server. In cases involving remote computers, the remote computer may be connected to the computer of the user through any type of network, including a local area network (LAN) or wide area network (WAN), or may be connected to an external computer (such as using an Internet service provider to connect through the Internet).

It should be understood that various forms of processes shown above may be used to reorder, add, or delete steps. For example, the steps recorded in the present disclosure may be executed in parallel, in sequence, or in different orders. As long as the expected results of the technical solution of the present disclosure may be achieved, this article does not limit it herein.

The above optional implementation method does not constitute a limitation on the claimed scope of the present disclosure. Those skilled in the art should understand that various modifications, combinations, sub combinations, and substitutions can be made based on design requirements and other factors. Any modifications, equivalent substitutions, and improvements made within the spirit and principles of the present invention shall be included within the scope of protection of the present disclosure.

**Claims**

1. A piezoelectric sensor of an interactive board, comprising:

   a piezoelectric structure; and
   an electrode, wherein the electrode covers a part of a surface of the piezoelectric structure;
   a working frequency of the piezoelectric sensor is matched with a material frequency, wherein the material frequency is a frequency used to distinguish a material of a touch object in an elastic wave generated by the touch object touching a screen of the interactive board;
   wherein the touch object comprises at least one of a hand and a stylus.

2. The piezoelectric sensor of claim 1, wherein a shape of the piezoelectric sensor comprises at least one of the followings:

   a cuboid, a cube, and a cylinder;
   wherein a length of the cuboid is larger than or equal to a width of the cuboid.

3. The piezoelectric sensor of claim 2, wherein a length of an effective working region of the electrode in the piezoelectric sensor matches with half wavelength of the elastic wave.

4. The piezoelectric sensor claim 3, wherein a length of the piezoelectric sensor is 10 mm to 30 mm, a width of the piezoelectric sensor is less than 10 mm, and a thickness of the piezoelectric sensor is less than 10 mm.

5. The piezoelectric sensor of claim 4, wherein the length of the piezoelectric sensor is 19.7 mm to 20.3 mm, the width of the piezoelectric sensor is 4.9 mm to 5.1 mm, and the thickness of the piezoelectric sensor is 1.92 mm to 2.08 mm.

6. The piezoelectric sensor of claim 5, wherein the length of the piezoelectric sensor is 20 mm, the width of the piezoelectric sensor is 5 mm, and the thickness of the piezoelectric sensor is 2 mm.

7. The piezoelectric sensor of claim 1, wherein the electrode comprises a first electrode and a second electrode;

   the surface of the piezoelectric structure includes a first surface, a second surface opposite to the first surface, and a third surface adjacent to both the first and second surfaces;
   the first electrode covers a part of the first surface, and the second electrode covers a part of the first surface, the whole second surface, and the whole third surface or a part of the third surface, respectively.

8. The piezoelectric sensor of claim 1, wherein a material of the piezoelectric structure is lead zirconate titanate.

9. The piezoelectric sensor of claim 8, wherein the material of the piezoelectric structure is lead zirconate titanate 5 series.

10. The piezoelectric sensor of claim 1, wherein a polarization direction of the piezoelectric structure is in a thickness direction of the piezoelectric sensor.

11. The piezoelectric sensor of claim 1, wherein a resistance of the electrode is less than 1 ohm.

12. The piezoelectric sensor of claim 1, wherein the adhesion of the electrode is greater than 2.5 N/square millimeter.

13. The piezoelectric sensor of claim 1, wherein a material of the electrode is silver.

14. The piezoelectric sensor of claim 7, wherein

on the first surface, a first gap is presented between the first electrode and the second electrode;
on the first surface, an area of the first electrode is greater than that of the second electrode, and the area of the second electrode is greater than that of the first gap.

15. The piezoelectric sensor of claim 14, wherein

on the first surface, a shape of the first electrode is rectangular, a shape of the second electrode is rectangular, and a shape of the first gap is rectangular;
on the first surface, a length of the first electrode is greater than that of the first gap, a length of the first gap is greater than that of the second electrode, and a length of the first gap is greater than the thickness of the piezoelectric sensor;
on the first surface, the width of the first electrode is the same as that of the piezoelectric sensor, the width of the second electrode is the same as that of the piezoelectric sensor, and the width of the first gap is the same as that of the piezoelectric sensor.

16. The piezoelectric sensor of claim 15, wherein on the first surface, the length of the first electrode is 16.8 mm to 17.2 mm, the length of the second electrode is 0.8 mm to 1.1 mm, and the length of the first gap is 1.9 mm to 2.1 mm.

17. The piezoelectric sensor of claim 16, wherein on the first surface, the length of the first electrode is 17 mm, the length of the second electrode is 1 mm, and the length of the first gap is 2 mm.

18. An elastic wave sensor, comprising:

a piezoelectric sensor of interactive board of any one of claims 1-17;
a lead wire; and
a first holder,
wherein a first end of the lead wire is connected to the piezoelectric sensor, and a second end of the lead wire is connected to the first holder.

19. The elastic wave sensor of claim 18, wherein the lead wire has one or more lines for transmitting elastic wave signals generated by the piezoelectric sensor.

20. The elastic wave sensor of claim 19, wherein the lead wire has two lines for transmitting the elastic wave signal generated by the piezoelectric sensor in the form of a differential signal;

electrodes of the piezoelectric sensor comprises a first electrode and a second electrode;
one of the lines is connected to the first electrode of the piezoelectric sensor, and the other line is connected to the second electrode of the piezoelectric sensor.

21. The elastic wave sensor of claim 18, wherein the lead wire is a first flexible circuit board or a single-stranded connecting wire;
wherein the first flexible circuit board is provided with a solder pad, and the solder pad is connected to the electrode of the piezoelectric sensor.

22. The elastic wave sensor of claim 21, wherein the solder pad comprises a first solder pad and a second solder pad, and the electrode comprises a first electrode and a second electrode;

the first solder pad is matched with the first electrode, and the first solder pad is connected to the first electrode;
the second solder pad is matched with the second electrode, and the second solder pad is connected to the second electrode.

23. The elastic wave sensor of claim 22, wherein

a size of the first solder pad matches with the size of the first electrode located on the first surface, and a size of the second solder pad matches with the size of the second electrode located on the first surface;
the first solder pad is connected to the first electrode located on the first surface, and the second solder pad is connected to the second electrode located on the first surface.

24. The elastic wave sensor of claim 23, wherein

    a second gap is presented between the first solder pad and the second solder pad;
    a size of the first gap matches with the size of the second gap.

25. The elastic wave sensor of claim 24, wherein the first solder pad has a length of 2 mm and a width of 3.8 mm, the second solder pad has a length of 1 mm and a width of 3.8 mm, and the second gap has a length of 2 mm and a width of 3.8 mm.

26. The elastic wave sensor of claim 21, wherein a first adhesive is presented between the first flexible circuit board and the piezoelectric sensor.

27. The elastic wave sensor of claim 26, wherein
    a first adhesive is presented between the first flexible circuit board and the third surface.

28. The elastic wave sensor of claim 21, wherein the first flexible circuit board comprises a connected first plate and a second plate, and the first plate is perpendicular to the second plate;

    a first end of the first flexible circuit board is located on the first plate;
    a second end of the first flexible circuit board is located on the second plate.

29. The elastic wave sensor of claim 21, wherein a surface of the first flexible circuit board is covered with a shielding film.

30. The elastic wave sensor of any one of claims 18-29, wherein the first holder has one or more pins for transmitting elastic wave signals generated by the piezoelectric structure.

31. The elastic wave sensor of claim 30, wherein the first holder comprises at least two pins, the at least two pins are used to transmit elastic wave signals generated by the piezoelectric sensor in the form of differential signals.

32. The elastic wave sensor of claim 31, wherein the pins of the first holder comprises a first pin, a second pin, a third pin, a fourth pin, a fifth pin, and a sixth pin arranged in sequence;

    the first pin, the second pin, the fifth pin, and the sixth pin are all grounded;
    the third and fourth pins are used to transmit elastic wave signals generated by the piezoelectric structure in the form of differential signals.

33. An interactive board, comprising:

    a screen;
    a printed circuit board located within a frame of the screen; and
    an elastic wave sensor of any one of claims 18-32;
    wherein the printed circuit board is provided with an elastic wave processor;
    the piezoelectric sensor of the elastic wave sensor is installed on a back of the screen, and the first holder of the elastic wave sensor is connected to an interface of the printed circuit board;
    the elastic wave processor is connected to the elastic wave sensor.

34. The interactive board of claim 33, wherein the elastic wave sensor is installed on the back edge of the screen and located outside the visible region of the screen.

35. The interactive board of claim 34, wherein the elastic wave sensor is installed in a region covered by ink on the back of the screen.

36. The interactive board of claim 33, wherein a second adhesive is presented between the piezoelectric sensor and the back of the screen.

37. The interactive board of claim 36, wherein
    a second adhesive is presented between the second surface and the back of the screen.

38. The interactive board of claim 36, wherein the Young's modulus of the second adhesive is greater than 1 gigapascal.

39. The interactive board of claim 36, wherein at least one of thickness, bubbles, and curing degree of the second adhesive has consistency.

40. The interactive board of claim 39, wherein the thickness of the second adhesive is less than 150 microns.

41. The interactive board of claim 36, wherein a material of the second adhesive comprises at least one of the followings: epoxy resin adhesive, polyurethane, and cyanoacrylate.

42. The interactive board of claim 33, wherein the number of elastic wave sensors is positively correlated with the area of the screen surface.

43. The interactive board of claim 34, wherein the number of elastic wave sensors is five, and the elastic wave sensors are respectively located:

   on the top left side of the screen back, on the top right side of the screen back, on the bottom left side of the screen back, on the bottom middle of the screen back, and the bottom right side of the screen back;
   the projections of the five elastic wave sensors are staggered in the horizontal direction.

44. The interactive board of claim 33, wherein the printed circuit boards are connected by a second flexible circuit board, and the printed circuit board has an elastic wave circuit for transmitting the elastic wave signal output by the elastic wave sensor.

45. The interactive board of claim 33, wherein the frame has a central opening and a cover body, and the cover body is detachably closed on the opening;
   the elastic wave sensor has a one-to-one correspondence with the opening and the interface.

46. The interactive board of claim 45, wherein the frame has a third flexible circuit board, a first end of the third flexible circuit board is connected to the interface, and a second end of the third flexible circuit board is connected to the first holder.

47. The interactive board of claim 46, wherein

   the second end of the third flexible circuit board is provided with a second holder, and the second holder is connected to the first holder;
   the first end of the third flexible circuit board is provided with a third holder, the interface is provided with a fourth holder, and the third holder is connected to the fourth holder.

48. The interactive board of claim 33, wherein the printed circuit board is further provided with a primary preprocessing circuit, and the primary preprocessing circuit is located at an inlet end of the elastic wave circuit in the printed circuit board, the primary preprocessing circuit is used for first filtering processing of the elastic wave signal output by the elastic wave sensor, amplifying the elastic wave signal after the first filtering process.

49. The interactive board of claim 48, wherein the primary preprocessing circuit comprises:

   a first band-pass filter, configured to filter out the signals outside the first pass-band in the elastic wave signals output by the elastic wave sensor to cause the signals within the first pass-band in the elastic wave signals to pass through;
   a first signal amplifier, configured to amplify the elastic wave signal based on a predetermined first multiple.

50. The interactive board of claim 49, wherein the first band-pass filter comprises:

   a first low-pass filter, configured to filter out the elastic wave signals output by the elastic wave sensor higher than an upper limit value of the first pass-band to cause the elastic wave signals lower than the upper limit value of the first pass-band to pass through;
   a first high-pass filter, configured to filter out the elastic wave signals output by the elastic wave sensor lower than a lower limit value of the first pass-band to cause the elastic wave signals higher than the lower limit value of the first passband to pass through.

51. The interactive board of claim 50, wherein the first low-pass filter comprises a first resistor, a first capacitor, a second resistor, and a second capacitor, and the first high-pass filter comprises a third capacitor, a third resistor, a fourth capacitor, and a fourth resistor;

the first signal amplifier comprises a first operational amplifier, a second operational amplifier, a fifth capacitor, a sixth capacitor, a seventh capacitor, and an eighth capacitor;

the first end of the first resistor is configured to receive a positive signal in the elastic wave signal output by the elastic wave sensor; the second end of the first resistor is electrically connected to the first end of the first capacitor and the first end of the third capacitor, respectively;

the second end of the third capacitor is electrically connected to the first end of the third resistor and the negative input end of the first operational amplifier, respectively;

the positive input terminals of the first operational amplifier are electrically connected to a first power supply, a first end of the fifth capacitor, and a first end of the sixth capacitor, respectively; a second end of the fifth capacitor and a second end of the sixth capacitor are both grounded;

the first power terminal of the first operational amplifier is grounded;

the second power terminal of the first operational amplifier is electrically connected to the second power supply, and the first end of the seventh capacitor is electrically connected to the first end of the eighth capacitor; the second end of the seventh capacitor and the second end of the eighth capacitor are both grounded;

the second end of the first capacitor and the second end of the third resistor are electrically connected to the output terminal of the first operational amplifier, respectively;

the first end of the second resistor is used to receive a negative signal in the elastic wave signal output by the elastic wave sensor; the second end of the second resistor is electrically connected to the first end of the second capacitor and the first end of the fourth capacitor, respectively;

the second end of the fourth capacitor is electrically connected to the first end of the fourth resistor and the negative input terminal of the second operational amplifier, respectively;

the positive input terminal of the second operational amplifier is electrically connected to the first power supply, the first end of the fifth capacitor, and the first end of the sixth capacitor, respectively; the second end of the fifth capacitor and the second end of the sixth capacitor are both grounded;

the first power terminal of the second operational amplifier is grounded;

the second power terminal of the second operational amplifier is electrically connected to the second power supply, and the first end of the seventh capacitor is electrically connected to the first end of the eighth capacitor; the second end of the seventh capacitor and the second end of the eighth capacitor are both grounded;

the second end of the second capacitor and the second end of the fourth resistor are electrically connected to the output end of the second operational amplifier, respectively.

52. The interactive board of claim 48, wherein the printed circuit board is further provided with a secondary preprocessing circuit, the secondary preprocessing circuit is located at the outlet end of the elastic wave circuit in the printed circuit board, the secondary preprocessing circuit is used for second filtering processing of the elastic wave signal, and amplifying the elastic wave signal after the second filtering process and converting the elastic wave signal from a differential signal to a single ended signal.

53. The interactive board of claim 52, wherein the secondary preprocessing circuit comprises:

a second band-pass filter, configured to filter out the signals outside the second pass-band in the elastic wave signal to cause the signals within the second pass-band in the elastic wave signal to pass through;

a second signal amplifier, configured to perform amplifying processing on the elastic wave signal based on a predetermined second multiple.

54. The interactive board of claim 53, wherein the second multiple is smaller than the first multiple.

55. The interactive board of claim 53, wherein the second band-pass filter comprises:

a second low-pass filter, configured to filter out the signals in the elastic wave signal higher than the upper limit value of the second pass-band to cause the signals in the elastic wave signal lower than the upper limit value of the second passband to pass through;

a second high-pass filter, configured to filter out the signals in the elastic wave signal lower than the lower limit value of the second pass-band to cause the signals in the elastic wave signal higher than the lower limit value of the second passband to pass through.

56. The interactive board of claim 55, wherein the secondary preprocessing circuit further comprises:

a common mode voltage filter, configured to filtering out common mode voltage in the elastic wave signal output by the primary preprocessing circuit;

a first DC blocking circuit, wherein an input end of the first DC blocking circuit is electrically connected to the output end of the common mode voltage filter, and the first DC blocking is configured to filter out DC voltage in the elastic wave signal;

a first voltage bias circuit, wherein the output end of the first voltage bias circuit is electrically connected to the input end of the second signal amplifier, and the first voltage bias circuit is configured to add a specified value of voltage bias to the elastic wave signal;

a second DC blocking circuit, wherein the input end of the second DC blocking circuit is electrically connected to the output end of the second signal amplifier, and the second DC blocking circuit is configured to filter out DC voltage in the elastic wave signal; and

a second voltage bias circuit, wherein the input end of the second voltage bias circuit is electrically connected to the output end of the second isolation circuit, and the second voltage bias circuit is configured to add a specified value of voltage bias to the elastic wave signal.

57. The interactive board of claim 56, wherein the second low-pass filter comprises a fifth resistor, a ninth capacitor, a sixth resistor, and a tenth capacitor, and the second high-pass filter comprises an eleventh capacitor, a seventh resistor, a twelfth capacitor, and an eighth resistor; the second signal amplifier comprises a third operational amplifier; the common mode voltage filter comprises a ninth resistor, a first inductor, an eleventh resistor, a tenth resistor, a second inductor, and a thirteenth resistor; the first DC blocking circuit comprises a twelfth capacitor and a thirteenth capacitor; the first voltage bias circuit comprises a fourteenth capacitor and a fifteenth capacitor; the second isolation circuit comprises a sixteenth capacitor; the second bias circuit comprises a thirteenth resistor and a fourteenth resistor;

the first end of the first inductor is electrically connected to the first end of the ninth resistor for receiving a positive signal in the elastic wave signal; the second end of the first inductor and the second end of the ninth resistor are electrically connected to the first end of the eleventh resistor and the first end of the twelfth capacitor, and the second end of the eleventh resistor is grounded;

the second end of the twelfth capacitor is electrically connected to the first end of the fifth resistor;

the second end of the fifth resistor is electrically connected to the first end of the ninth capacitor and the first end of the eleventh capacitor, respectively;

the second end of the eleventh capacitor is electrically connected to the first end of the seventh resistor and the negative input end of the third operational amplifier, respectively;

the first end of the second inductor is electrically connected to the first end of the tenth resistor for receiving a negative signal in the elastic wave signal; the second end of the second inductor and the second end of the tenth resistor are electrically connected to the first end of the twelfth resistor and the first end of the thirteenth capacitor, and the second end of the twelfth resistor is grounded;

the second end of the thirteenth capacitor is electrically connected to the first end of the sixth resistor;

the second end of the sixth resistor is electrically connected to the first end of the tenth capacitor and the first end of the twelfth capacitor, respectively;

the second end of the twelfth capacitor is electrically connected to the first end of the eighth resistor and the positive input end of the third operational amplifier, respectively;

the second end of the eighth resistor and the second end of the tenth capacitor are electrically connected to the third power supply, the first end of the fourteenth capacitor, and the first end of the fifteenth capacitor, respectively; the second end of the fourteenth capacitor and the second end of the fifteenth capacitor are both grounded;

the second end of the ninth capacitor and the second end of the seventh resistor are electrically connected to the output end of the first operational amplifier and the first end of the sixteenth capacitor, respectively, for outputting elastic wave signals belonging to a single ended signal;

the second end of the sixteenth capacitor is electrically connected to the first end of the thirteenth resistor and the first end of the fourteenth resistor, respectively;

the second end of the thirteenth resistor is connected to a fourth power supply;

the second end of the fourteenth resistor is grounded.

58. The interactive board of any one of claim 33-57, wherein the printed circuit board is provided with an infrared processor and thee infrared sensor is configured to scan infrared signals on the screen surface;
the infrared processor is connected to the infrared sensor.

59. The interactive board of claim 58, wherein the printed circuit board further comprises an infrared circuit for transmitting infrared signals generated by the infrared sensor;

> the infrared line and the elastic wave line do not overlap in parallel;
> a ground wire is presented between the infrared line and the elastic wave line.

60. A method for producing a piezoelectric sensor of an interactive board, comprising:

> providing a piezoelectric structure;
> forming an electrode on a surface of a part of the piezoelectric structure; and
> polarizing the piezoelectric structure;
> wherein a working frequency of the piezoelectric sensor matches with a material frequency, and the material frequency is a frequency used to distinguish a material of the touch object in the elastic wave generated by a touch object touching the screen of the interactive board;
> the touch object includes at least one of: a hand, and a stylus.

61. A method for producing an elastic wave sensor, comprising:

> providing a piezoelectric sensor of an interactive board of any one claims of 1-17, a lead wire, and a first holder;
> connecting the piezoelectric sensor to a first end of the lead wire; and
> connecting a first holder to a second end of the lead wire.

62. A method for producing an interactive board, comprising:

> providing a screen, a printed circuit board, and an elastic wave sensor of any one of claims 18-32; wherein the printed circuit board is arranged within the frame of the screen, and an elastic wave processor is arranged on the printed circuit board;
> installing the piezoelectric sensor of the elastic wave sensor on a screen back;
> connecting the first holder of the elastic wave sensor to an interface of the printed circuit board so as to connect the elastic wave processor with the elastic wave sensor.

63. The method of claim 62, wherein a second adhesive is presented between the piezoelectric sensor of the elastic wave sensor and the screen back, and the installing the piezoelectric sensor of the elastic wave sensor on the screen back comprises:

> acquiring a capacitance value of the piezoelectric sensor in a non-installation state, wherein the non-installation state refers to a state of pasting the piezoelectric sensor to the screen back without using the second adhesive;
> acquiring the capacitance value of the piezoelectric sensor in an installation and curing state, wherein the installation and curing state refers to a state that the piezoelectric sensor has been pasted onto the screen back by using the second adhesive and a preset curing time has been reached;
> calculating a ratio between the capacitance difference and the capacitance value of the piezoelectric sensor in the non-installation state to acquire a capacitance change, wherein the capacitance difference is a difference obtained by subtracting the capacitance value of the piezoelectric sensor in the installation and curing state from the capacitance value of the piezoelectric sensor in a non-installation state;
> when the capacitance change exceeds a preset capacitance threshold value, determining that the thickness, the content of bubbles and the curing degree of the second glue all pass the conformance testing;
> when the capacitance change does not exceed the preset capacitance threshold, determining that the thickness, the content of bubbles or the curing degree of the second glue does not pass the conformance testing.

64. The method of claims 62 or 63, wherein the frame has a hollow opening, a cover body, and a third flexible circuit board, and a first end of the third flexible circuit board is connected to the interface;
the connecting the first holder of the elastic wave sensor to the interface of the printed circuit board comprises:

> disassembling the cover body and removing the third flexible circuit board from the opening;
> connecting a second end of the third flexible circuit board with the first holder of the elastic wave sensor to connect the elastic wave processor with the elastic wave sensor;

placing the third flexible circuit board back from the opening and closing the opening with the cover.

65. A material recognition method of the interactive tablet of any one of claims 34-60, comprising:

receiving, by an elastic wave processor, an elastic wave signal generated by at least one elastic wave sensor, wherein the elastic wave signal is generated by an elastic wave generated by a touch object touching a screen of the interactive board; and

recognizing, by the elastic wave processor, a material of the touch object based on the elastic wave signal.

66. The method of claim 65, wherein the recognizing, by the elastic wave processor, the material of the touch object based on the elastic wave signal comprises:

when at least two channels of elastic wave signals generated by at least two elastic wave sensors are received, generating an equivalent elastic wave signal based on the elastic wave signals of at least two channels;

determining a material recognition network;

inputting the equivalent elastic wave signal into the material recognition network to output a confidence level that the touch object belongs to various preset materials;

determining that the touch object belongs to the material with the highest confidence level.

67. The method of claim 66, wherein the generating an equivalent elastic wave signal based on the elastic wave signals of at least two channels comprises:

recognizing whether the touch object has touched the surface of the screen based on the elastic wave signal; if so, then determining a touch time, wherein the touch time is a time when the target elastic wave signal is collected, and the target elastic wave signal is the elastic wave signal that detects the touch object;

extracting a part of the elastic wave signal located after the touch time in each channel as a first candidate signal in each channel;

extracting a signal in a preset frequency band from the first candidate signals of each channel to obtain a second candidate signal in each channel;

fusing the second candidate signal from each channel into a third candidate signal; and

filtering the third candidate signal to obtain an equivalent elastic wave signal.

68. The method of claim 67, wherein the recognizing whether the touch object has touched the surface of the screen based on the elastic wave signal comprises:

determining a noise threshold;

adding a time window to the elastic wave signal;

calculating a ratio between an energy of the elastic wave signal within the current time window and an energy of the elastic wave signal within the previous time window;

when the ratio is greater than the noise threshold, determining that the touch object touches the screen surface.

69. The method of claim 68, wherein the determining the noise threshold comprises:

querying whether a touch time exists, wherein the touch time is a time when the target infrared signal is collected, and the target infrared signal is the infrared signal that detects the touch object;

when the touch time does not exist, querying a peak value of the elastic wave signal;

when the peak value is less than or equal to the preset energy threshold, setting the noise threshold to a first value;

when the peak value is greater than the preset energy threshold, setting the noise threshold to a second value, wherein the second value is greater than the first value; and

when the touch time exists, maintaining the current noise threshold.

70. The method of claim 67, wherein the determining the touch time comprises:

selecting the elastic wave signal with the highest signal-to-noise ratio among the elastic wave signals in each channel as a reference signal;

when the difference between the time of collecting the elastic wave signal of a certain channel and the time of collecting the reference signal is greater than a preset interval threshold, adjusting the time of collecting the elastic wave signal of the channel to the time of collecting the reference signal; and

when the difference between the time of collecting the elastic wave signal of a certain channel and the time of collecting the reference signal is less than or equal to the preset interval threshold, maintaining the time of collecting the elastic wave signal of the channel.

71. The method of claim 70, wherein the interval threshold is a ratio between the reference distance and a propagation speed of the reference signal, wherein the reference distance is the maximum distance between multiple elastic wave sensors.

72. The method of claim 67, wherein the extracting a signal in a preset frequency band from the first candidate signals of each channel to obtain a second candidate signal in each channel comprises:

comparing an energy amplitude of the first candidate signal in a time domain of each channel with the upper and lower limit values of the preset frequency band;

when the energy amplitude of the first candidate signal in the time domain is greater than an upper limit value, filtering out the first candidate signal;

when the energy amplitude of the first candidate signal in the time domain is less than a lower limit value, filtering out the first candidate signal;

when the energy amplitude of the first candidate signal in the time domain is less than or equal to the upper limit value and greater than or equal to the lower limit value, determining that the first candidate signal is valid;

converting the valid first candidate signal from the time domain to the frequency domain to obtain the second candidate signal in each channel.

73. The method of claim 67, wherein the fusing the second candidate signal from each channel into a third candidate signal comprises:

configuring a weight for the elastic wave sensor;

calculating a product between the second candidate signal of each channel and the corresponding weight of each channel as a weight modulation candidate signal;

adding the modulation candidate signals of each channel to obtain a third candidate signal.

74. The method of claim 67, wherein the fusing the second candidate signal from each channel into a third candidate signal comprises:

loading one or more layers of neural networks;

linearly fusing and activating the second candidate signal of each channel to obtain a third candidate signal in the neural network.

75. The method of claim 67, wherein the fusing the second candidate signal from each channel into a third candidate signal comprises:

calculating a system function of elastic waves propagating from the touched coordinates to each elastic wave sensor;

dividing the second candidate signal of each channel by the system function to take the mean to obtain the third candidate signal.

76. The method of claim 66, where the material recognition network comprises a first fully connected layer, a second fully connected layer, and a third fully connected layer;

the determining the material recognition network comprises:

in the first fully connected layer, mapping, as a first feature signal, the elastic wave signal serving as a sample;

in the second fully connected layer, mapping the first feature signal as a second feature signal;

in the third fully connected layer, mapping the second feature signal as a third feature signal;

mapping the third feature signal to the confidence level that the touch object belongs to various materials;

calculating a loss value based on the confidence level of each material and the material used as a label;

updating the first fully connected layer, the second fully connected layer, and the third fully connected layer based on the loss value;

judging whether a preset training condition is met; if so, then determining that the training of the material recognition network has been completed, if not, then returning to execute the mapping of the elastic wave signal as a sample in the first fully connected layer as the first feature signal.

77. The method of claim 76, wherein the calculating the loss value based on the confidence level of each material and the material used as a label comprises:

traversing each material, when the touch object belongs to the material, setting the label for labeling the touch object belonging to the material to 1; when the touch object is not labeled as belonging to the material, setting the label for labeling the touch object belonging to the material to 0;
for each material, taking a logarithm of the confidence level of the touch object belonging to the material;
for each material, calculating a product between the label and the logarithm for each material; and
for all materials, taking an opposite number of a sum of all the products as the loss value.

78. The method of claim 66, wherein the material recognition network comprises a first fully connected layer, a second fully connected layer, and a third fully connected layer;
the inputting the equivalent elastic wave signal into the material recognition network to output a confidence level that the touch object belongs to various preset materials comprises:

in the first fully connected layer, mapping the equivalent elastic wave signal into a first feature signal;
in the second fully connected layer, mapping the first feature signal into a second feature signal;
in the third fully connected layer, mapping the second feature signal into the third feature signal; and
mapping the third feature signal to the confidence level that the touch object belongs to various materials.

79. The method of claim 66, wherein the recognizing, by the elastic wave processor, the material of the touch object based on the elastic wave signal further comprises:
when an area calculated based on the infrared signal for the touch object is acquired, correcting the confidence level of various materials by referring to the area.

80. The method of claim 79, wherein the correcting the confidence level of various materials by referring to the area comprises:

when the area is within the valid range of a certain material, increasing the confidence level of the material.
when the area is outside the valid range of a certain material, reducing the confidence level of the material.

81. The method of claim 65, further comprising:

receiving, by the central processor or the infrared processor, the infrared signal generated by the infrared sensor;
recognizing, by the central processor or infrared processor, the material of the touch object based on the infrared signal.

82. The method of claim 65, further comprising:

querying, by the elastic wave processor, the touch coordinates and touch time;
when the fast writing condition is met, assigning, by the elastic wave processor, the material of the touch object detected based on the elastic wave signal last time to the material of the touch object detected based on the elastic wave signal this time;
wherein the fast writing condition is that the distance between the last touch coordinate and the current touch coordinate is less than the preset first interval threshold, and the difference between the last touch time and the current touch time is less than the preset second interval threshold.

83. The method of any one of claims 65-82, further comprising:

when both the material of the touch object recognized based on the infrared signal and the material of the touch object recognized based on the elastic wave signal are received within the same time period, determining, by the central processor, that the material of the touch object recognized based on the elastic wave signal is valid;
when the material of the touch object recognized based on the infrared signal is received simultaneously within the same time period, but the material of the touch object recognized based on the elastic wave signal is not received, determining, by the central processor, that the material of the touch object recognized based on the infrared signal is valid.

84. A writing method performed by an interactive board of any one of claims 58-59, comprising:

displaying, by a screen, an interface for being written;
generating, by an infrared sensor, an infrared signal;
generating, by at least one elastic wave sensor, an elastic wave signal, wherein the infrared signal is generated by the elastic wave generated by the touch object touching the screen;
generating, by the central processor or infrared processor, a touch trajectory generated when a touch object moves on the surface of the screen based on the infrared signal;
recognizing, by the elastic wave processor, the material of the touch object based on the elastic wave signal; and
performing, by the central processing unit, an operation related to writing based on the material along the touch trajectory on the interface.

85. The method of claim 84, wherein the performing, by the central processing unit, the operation related to writing based on the material along the touch trajectory on the interface comprises:

configuring an identifier for the touch object based on the material;
extracting configuration information associated with the identifier for being written; and
performing operations related to writing based on the configuration information on the interface along the touch trajectory.

86. An interactive board, comprising:

an elastic wave sensor of any one of claims 18-32; and
an elastic wave processor,
wherein the elastic wave processor is configured to receive an elastic wave signal generated by at least one elastic wave sensor, the elastic wave signal is generated by the elastic wave generated by a touch object touching the screen of the interactive board;
the elastic wave processor is configured to recognize the material of a touch object based on the elastic wave signal.

87. An interactive board, comprising:

a screen;
a central processing unit;
an elastic wave sensor of any one of claims 18-32;
an elastic wave processor;
an infrared sensor; and
an infrared processor,
wherein the screen is configured to display an interface for being written;
the infrared sensor is configured to generate an infrared signal;
the elastic wave sensor is configured to generate an elastic wave signal, the elastic wave signal is generated by the elastic wave generated by the touch object touching the screen;
the central processor or infrared processor is configured to generate a touch trajectory generated when a touch object moves on the surface of the screen based on the infrared signal;
the elastic wave processor is configured to recognize the material of the touch object based on the elastic wave signal;
the central processing unit is configured to perform the operation related to writing based on the material along the touch trajectory on the interface.

88. An interactive board, comprising:

at least one processor; and
a memory communicated with at least one processor;
wherein the memory stores a computer program that is capable of being executed by at least one processor, the computer program, when executed by the at least one processor, performs the material recognition method of any one of claims 65-83 or the writing method of any one of claims 84-85.

89. A computer readable storage medium, wherein the computer readable storage medium stores a computer program, the computer program, when executed by a processor, performs the material recognition method of any one of claims 65-83 or the writing method described in any one of claims 84-85.

90. A computer program product comprising a computer program, wherein the computer program, when executed by a processor, performs the material recognition method of any one of claims 65-83 or the writing method of any one of claims 84-85.

Fig. 1A

Fig. 1B

Fig. 1C

Fig. 1D

Fig. 1E

200

230

220

210

Fig. 2A

230

200

220

226

210

Fig. 2B

230

220

225

210    224

221    223
222

Fig. 2C

201

212    211    L3

W

L1    L2    203

T    213

L

202

Fig. 2D

Fig. 2E

Fig. 2F

Fig. 2G

Fig. 2H

Fig. 2I

230

240

201

212

210

213

Fig. 2J

GND

6

5

4    D+

3    D−

2

1

GND

Fig. 2K

Fig. 3A

Fig. 3B

Fig. 3C

Fig. 3D

Fig. 3E

Fig. 4A

Fig. 4B

Fig. 4C

Fig. 4D

Fig. 4E

510    400

200

Fig. 5A

511

First band-pass filter

5111    5112    512

First low-pass filter    First high-pass filter    First signal amplifier

400    108    520

Fig. 5B

C1

R3

GND

R1    C3

U1

C7    GND

D+    D+

C5    V2    C8

V1    GND

D−    D−

C6    GND

R2    C4

U2

C7    GND

V2    C8

R4

C2

Fig. 5C

521

Second band-pass filter

5211    5212    522

Second low-pass filter    Second high-pass filter    Second signal amplifier

Fig. 5D

*521*

Second band-pass filter

*524*      *5211*      *5212*      *522*      *526*

| First DC blocking circuit | Second low-pass filter | Second high-pass filter | Second signal amplifier | Second DC blocking circuit |

| Common mode voltage filter | | | First voltage bias circuit | Second voltage bias circuit |

*523*      *525*      *527*

Fig. 5E

Fig. 5F

| Providing a piezoelectric structure | 601 |

| Forming electrodes on the surface of some piezoelectric structures | 602 |

| Polarizing the piezoelectric structure | 603 |

Fig. 6

Providing a piezoelectric sensor, lead wire, and first holder for interactive boards  701

Connecting the piezoelectric sensor to the first end of the lead wire  702

Connecting the first holder to the second end of the lead wire  703

Fig. 7

Providing the screen, printed circuit board, and elastic wave sensor  801

Installing the piezoelectric sensor of the elastic wave sensor on the back of the screen  802

Connecting the first holder of the elastic wave sensor to the interface of the printed circuit board to connect the elastic wave processor to the elastic wave sensor  803

Fig. 8

Receiving, by the elastic wave processor, an elastic wave signal generated by at least one elastic wave sensor  901

Recognizing, by the elastic wave processor, the material of the touch object based on the elastic wave signal  902

Fig. 9

Receiving the infrared signal generated by the infrared sensor _____ 1001

Recognizing the material of the touch object based on the infrared signal _____ 1002

When elastic wave signals from at least two channels generated by at least two elastic wave sensors are received, an equivalent elastic wave signal is generated based on the elastic wave _____ 1003

Determining the material recognition network _____ 1004

Inputting the elastic wave signal into the material recognition network to output the confidence level that the touch object belongs to each preset material _____ 1005

If the area calculated based on the infrared signal for the touch object is obtained, correcting the confidence level of various materials by referring to the area _____ 1006

Determining that the touch object belongs to the material with the highest confidence _____ 1007

When both the material of the touch object recognized based on the infrared signal and the material of the touch object recognized based on the elastic wave signal are received within the same time period, it is determined that the material of the touch object recognized based on the elastic wave signal is valid _____ 1008

When both the material of the touch object recognized based on the infrared signal and the material of the touch object recognized based on the elastic wave signal are received within the same time period, it is determined that the material of the touch object recognized based on the infrared signal is valid _____ 1009

Fig. 10

Fig. 11A

Fig. 11B

1   2   3   4

5   6   7   8

9   10   11   12

1st Mode   2nd Mode   3rd Mode   4th Mode

5th Mode   6th Mode   7th Mode   8th Mode

9th Mode   10th Mode   11th Mode   12th Mode

Fig. 11C

D4

FC   1201

BN

FC   1202

BN

Dropout

FC   1203

Softmax

Confidence

Fig. 12A

D4

FC ⌒1201

BN

FC ⌒1202

BN

FC ⌒1203

Softmax

Confidence

Fig. 12B

Receiving the infrared signal generated by the infrared sensor ⌒1301

Receiving the elastic wave signal generated by at least one elastic wave sensor ⌒1302

Querying the touch coordinates and touch time ⌒1303

When the fast writing condition is met, assigning the material of the touch object detected based on the elastic wave signal last time to the material of the touch object detected based on the elastic wave signal this time ⌒1304

Fig. 13

| | |
|---|---|
| Displaying an interface for being written | 1401 |
| Generating, by the infrared sensor, an infrared signal | 1402 |
| Generating, by at least one elastic wave sensor, an elastic wave signal | 1403 |
| Generating, by the central processor or infrared processor, a touch trajectory generated when a touch object moves on the surface of the screen based on the infrared signal | 1404 |
| Recognizing, by the elastic wave processor, the material of the touch object based on the elastic wave signal | 1405 |
| Performing, by the central processor, an operation related to writing based on material along the touch trajectory on the interface | 1406 |

Fig. 14

Fig. 15A

Fig. 15B

Fig. 16

Fig. 17

Fig. 18

## INTERNATIONAL SEARCH REPORT

| International application No. |
| --- |
| **PCT/CN2022/141495** |

| A. | CLASSIFICATION OF SUBJECT MATTER |
| --- | --- |

G06F3/041(2006.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNTXT, ENTXTC, WPABSC, VEN, CNKI: 平板, 交互, 触摸, 触碰, 触屏, 弹性波, 电极, 频率, 压电, 传感, interactive, panel, touch+, display, elastic wave, electrode?, frequency, piezo, sens+

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 114690853 A (GUANGZHOU CHUANGZHI TECHNOLOGY CO., LTD.) 01 July 2022 (2022-07-01) <br> description, paragraphs [0070]-[0313], and figures 1-14 | 1-90 |
| X | CN 113791700 A (GUANGZHOU CHUANGZHI TECHNOLOGY CO., LTD.) 14 December 2021 (2021-12-14) <br> description, paragraphs [0034]-[0099], and figures 1-13 | 1-90 |
| E | CN 115963935 A (GUANGZHOU ZHONGYUAN WISDOM TECHNOLOGY CO., LTD.) 14 April 2023 (2023-04-14) <br> description, paragraphs [0049]-[0293], and figures 1-13 | 1, 2, 8, 60 |
| A | CN 1737827 A (FUJITSU LTD.) 22 February 2006 (2006-02-22) <br> entire document | 1-90 |
| A | CN 112978671 A (ULTRASENSE SYSTEMS INC.) 18 June 2021 (2021-06-18) <br> entire document | 1-90 |
| A | CN 208622075 U (BEIJING TAIFANG TECHNOLOGY CO., LTD.) 19 March 2019 (2019-03-19) <br> entire document | 1-90 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **09 June 2023** | **15 June 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

International application No.

**PCT/CN2022/141495**

### C.    DOCUMENTS CONSIDERED TO BE RELEVANT

| Category* | Citation of document, with indication, where appropriate, of the relevant passages | Relevant to claim No. |
|---|---|---|
| A | US 2016299615 A1 (QEEXO, CO.) 13 October 2016 (2016-10-13)<br>entire document | 1-90 |

## INTERNATIONAL SEARCH REPORT
### Information on patent family members

International application No.

**PCT/CN2022/141495**

| Patent document cited in search report | | | Publication date (day/month/year) | Patent family member(s) | | | Publication date (day/month/year) |
|---|---|---|---|---|---|---|---|
| CN | 114690853 | A | 01 July 2022 | WO | 2022222384 | A1 | 27 October 2022 |
| | | | | WO | 2022222385 | A1 | 27 October 2022 |
| CN | 113791700 | A | 14 December 2021 | | None | | |
| CN | 115963935 | A | 14 April 2023 | | None | | |
| CN | 1737827 | A | 22 February 2006 | TW | 200608272 | A | 01 March 2006 |
| | | | | TWI | 272520 | B | 01 February 2007 |
| | | | | JP | 2006059169 | A | 02 March 2006 |
| | | | | JP | 4357389 | B2 | 04 November 2009 |
| | | | | KR | 20060017450 | A | 23 February 2006 |
| | | | | KR | 100677794 | B1 | 02 February 2007 |
| | | | | US | 2006038792 | A1 | 23 February 2006 |
| | | | | US | 7423636 | B2 | 09 September 2008 |
| | | | | US | 2008316187 | A1 | 25 December 2008 |
| | | | | US | 8040327 | B2 | 18 October 2011 |
| | | | | CN | 100347647 | C | 07 November 2007 |
| CN | 112978671 | A | 18 June 2021 | US | 2021181041 | A1 | 17 June 2021 |
| CN | 208622075 | U | 19 March 2019 | | None | | |
| US | 2016299615 | A1 | 13 October 2016 | WO | 2016048961 | A1 | 31 March 2016 |
| | | | | EP | 4083762 | A1 | 02 November 2022 |
| | | | | US | 10712858 | B2 | 14 July 2020 |
| | | | | EP | 3198497 | A1 | 02 August 2017 |
| | | | | EP | 3198497 | A4 | 16 May 2018 |
| | | | | EP | 3198497 | B1 | 20 April 2022 |
| | | | | CN | 106687967 | A | 17 May 2017 |
| | | | | US | 2018157371 | A1 | 07 June 2018 |
| | | | | US | 10282024 | B2 | 07 May 2019 |
| | | | | EP | 3521983 | A1 | 07 May 2019 |
| | | | | CN | 110109563 | A | 09 August 2019 |
| | | | | CN | 106687967 | B | 04 June 2021 |

Form PCT/ISA/210 (patent family annex) (July 2022)

REFERENCES CITED IN THE DESCRIPTION

**Patent documents cited in the description**

- CN 202211250955